# EUROPEAN PATENT SPECIFICATION

(11) **EP 1 878 169 B1**
(45) Date of publication and mention of the grant of the patent: **11.07.2018**
(21) Application number: 06733382.3
(22) Date of filing: 02.05.2006
(51) Int. Cl.: H04L 12/28, H04L 12/24, H04L 29/06, H04L 12/46

(54) **OPERATOR SHOP SELECTION IN BROADBAND ACCESS RELATED APPLICATION**
BETREIBER-SHOP-AUSWAHL IN EINER DEN BREITBANDZUGANG BETREFFENDEN ANWENDUNG
SÉLECTION DE BOUTIQUE D'OPÉRATEUR DANS UNE APPLICATION RELATIVE À L'ACCÈS LARGE BANDE

(30) Priority: 29.04.2005 WO PCT/SE2005/000645
(43) Date of publication of application: 16.01.2008
(73) Proprietor: Telefonaktiebolaget LM Ericsson (publ), 164 83 Stockholm (SE)
(72) Inventor: RUNE, Johan, S-181 31 Lidingö (SE); JÖNSSON, Ulf, S-169 68 Solna (SE); LARSSON, Tony, S-194 76 Upplands Väsby (SE); CAGENIUS, Torbjörn, S-191 34 Sollentuna (SE)
(74) Representative: Ericsson
(86) International application number: PCT/SE2006/000527
(87) International publication number: WO 2006/118530

(56) References cited:
- WO-A1-01/16766
- WO-A2-01/41392
- US-A1- 2003 037 163
- US-A1- 2003 117 954
- US-A1- 2003 210 671
- US-A1- 2004 066 756
- US-A1- 2004 165 595

## Description

### TECHNICAL FIELD

The present invention is generally related to digital communication systems, in particular to digital communication systems in which an end user accesses the rest of the system through an Ethernet network and which include broadband access to various services, and more particularly to operator shop selection by an end user in broadband access in a digital communication system.

### BACKGROUND AND PRIOR ART

Ethernet is the world's most pervasive networking technology.

Ethernet signals are transmitted from a station serially, one bit at a time, to every other station on the network. Ethernet uses a broadcast access method called Carrier Sense Multiple Access/Collision Detection (CSMA/CD) in which every computer on the network "hears" every transmission, but each computer "listens" only to transmissions intended for it. Each computer can send a message anytime it likes without having to wait for network permission. The signal it sends travels to every computer on the network. Every computer hears the message, but only the computer for which the message is intended recognizes it. This computer recognizes the message because the message contains its address. The message also contains the address of the sending computer so the message can be acknowledged. If two computers send messages at the same moment, a "collision" occurs, interfering with the signals. A computer can tell if a collision has occurred when it does not hear its own message within a given amount of time. When a collision occurs, each of the colliding computers waits a random amount of time before resending the message. The process of collision detection and retransmission is handled by the Ethernet adapter itself and does not involve the computer. The process of collision resolution takes only a fraction of a second under most circumstances. Collisions are normal and expected events on an Ethernet network. As more computers are added to the network and the traffic level increases, more collisions occur as part of normal operation. However, if the network gets too crowded, collisions increase to the point where they slow down the network considerably.

Any system based on collision detect must control the time required for the worst round trip through the LAN. As the term "Ethernet" is commonly defined, this round trip is limited to 50 microseconds (millionths of a second). At a signaling speed of 10 million bits per second, this is enough time to transmit 500 bits. At 8 bits per byte, this is slightly less than 64 bytes.

To make sure that the collision is recognized, Ethernet requires that a station must continue transmitting until the 50 microsecond period has ended. If the station has less than 64 bytes of data to send, then it must pad the data by adding zeros at the end.

To extend the LAN farther than the 50 microsecond limit will permit, one needs a bridge or router. These terms are often confused:
- A repeater receives and then immediately retransmits each bit. It has no memory and does not depend on any particular protocol. It duplicates everything, including the collisions.
- A bridge receives the entire message into memory. If the message was damaged by a collision or noise, then it is discarded. If the bridge knows that the message was being sent between two stations on the same cable, then it discards it. Otherwise, the message is queued up and will be retransmitted on another Ethernet cable. The bridge has no address. Its actions are transparent to the client and server workstations.
- A router acts as an agent to receive and forward messages. The router has an address and is known to the client or server machines. Typically, machines directly send messages to each other when they are on the same cable, and they send the router messages addressed to another zone, department, or subnetwork. Routing is a function specific to each protocol. For IPX, the Novell server can act as a router. For SNA, an APPN Network Node does the routing. TCP/IP can be routed by dedicated devices, UNIX workstations, or OS/2 servers.

A block of data transmitted on the Ethernet is called a "frame." The first 12 bytes of every frame contain the 6 byte destination address (the recipient) and a 6 byte source address (the sender). Each Ethernet adapter card comes with a unique factory installed address (the "universally administered address"). Use of this hardware address, also called the MAC (Medium Access Control) address or the Ethernet address, guarantees a unique identity to each card. PC software can be configured to substitute a different address number. When this option is used, it is called a "locally administered address." The source address field of each frame must contain the unique address (universal or local) assigned to the sending card. The destination field can contain a "multicast" address representing a group of workstations with some common characteristic.

Each Ethernet board worldwide has a unique Ethernet-address, it is a 48 bit number (the first 24 bits indicate the manufacturer, the last 24 bits are a unique number for each Ethernet board/controller-chip assigned by the manufacturer). This is also called the MAC-address.

In normal operation, an Ethernet adapter will receive only frames with a destination address that matches its unique address, or destination addresses that represent a multicast message.

There are three common conventions for the format of the remainder of the frame:
- Ethernet II or DIX
- IEEE 802.3 and 802.2
- SNAP

Ethernet II or DIX :
| Destination address | Source address | Type (Decnet, IPX or IP) |

Gigabit Ethernet Carrier Extension is a way of maintaining 802.3 minimum and maximum frame sizes with meaningful cabling distances. For carrier extended frames, the non-data extension symbols are included in the "collision window", that is, the entire extended frame is considered for collision and dropped. However, the Frame Check Sequence (FCS) is calculated only on the original (without extension symbols) frame. The extension symbols are removed before the FCS is checked by the receiver. So the LLC (Logical Link Control) layer is not even aware of the carrier extension.

```
 | Preamble | SFD | DA | SA | Type/Length | Data | FCS | Extension |
           | 64 bytes min |
           | 512 bytes min |
           | Duration of Carrier Event |
```

SFD is a start of frame delimiter
| Preamble (7-bytes) | Start Frame Delimiter (1-byte) | Dest. MAC Address (6-bytes) | Source MAC Address (6-bytes) | Length / Type (2-bytes) | MAC Client Data (0-n bytes) | Pad (0-p bytes) | Frame Check Sequence (4-bytes) |

In 1998, the IEEE approved the 802.3ac standard that defines frame format extensions to support Virtual Local Area Network (VLAN) Tagging on Ethernet networks. The VLAN protocol permits insertion of an identifier, or "tag", into the Ethernet frame format to identify the VLAN to which the frame belongs. It allows frames from stations to be assigned to logical groups. This provides various benefits such as easing network administration, allowing formation of work groups, enhancing network security, and providing a means of limiting broadcast domains. IEEE standard 802.1Q gives the definition of the VLAN protocol. The 802.3ac standard defines only the implementation details of the VLAN protocol that are specific to Ethernet.

If present, the 4-byte VLAN tag, also called Tag Control Information field, is inserted into the Ethernet frame between the Source MAC Address field and the Length/Type field. The first 2-bytes of the VLAN tag consist of the "802.1Q Tag Type" and are always set to a value of 0x8100. The 0x8100 value is actually a reserved Length/Type field assignment that indicates the presence of the VLAN tag, and signals that the traditional Length/Type field can be found at an offset of 4-bytes further into the frame. The last 2-bytes of the VLAN tag contain the following information

The first 3-bits are a User Priority Field that may be used to assign a priority level to the Ethernet frame.

The next 1-bit is a Canonical Format Indicator (CFI) used in Ethernet frames to indicate the presence of a Routing Information Field (RIF).

The last 12-bits are the VLAN Identifier (VID) which uniquely identifies the VLAN to which the Ethernet frame belongs.

With the addition of VLAN tagging, the 802.3ac standard permitted the maximum length of an Ethernet frame to be extended from 1518-bytes to 1522-bytes. The following illustrates the format of an Ethernet frame that has been "tagged" with a VLAN identifier per the IEEE 802.3ac standard:
| Preamble (7-bytes) | Start Frame Delimiter (1-byte) | Dest. MAC Address (6-bytes) | Source MAC Address (6-bytes) | Length/Type = 802.1Q Tag Type (2-bytes) | Tag Control Information (2-bytes) | Length/Type (2-bytes) | MAC Client Data (0-n bytes) | Pad (0-p bytes) | Frame Check Sequence (4-bytes) |

With introduction of the 802.3z standard for Gigabit Ethernet in 1998, an extension field was added to the end of the Ethernet frame to ensure it would be long enough for collisions to propagate to all stations in the network. The extension field is appended as needed to bring the minimum length of the transmission up to 512 bytes (as measured from the Destination Address field through the extension field). It is required only in half-duplex mode, as the collision protocol is not used in full-duplex mode. Non data bits, referred to as "extension bits", carrying no useful information, are transmitted in the extension field extending the carrier to continue the minimum required time. The following illustrates a frame with an extension field appended:
| Preamble (7-bytes) | Start Frame Delimiter (1-byte) | Dest. MAC Address (6-bytes) | Source MAC Address (6-bytes) | Length/Type (2-bytes) | MAC Client Data (0-n bytes) | Pad (0-p bytes) | Frame Check Sequence (4-bytes) | Extension |

### TCP/IP

TCP/IP uses IP addresses, which are 32-bit numbers. To make it easier to memorize such IP addresses, they are usually expressed as four 8-bit numbers (example: 192.168.10.1), where each of the four numbers is within the range of '0' to '255'. There are restrictions on using '0' and '255' for all four numbers and these values should be avoided. When setting up a small private network, you are free to use ANY IP address, however, when you are connected to a company network, you need to ask the Network-administrator to assign you an IP address. And if you are connected to the Internet, your ISP (Internet Service Provider) will assign an IP address to you.

### DHCP (Dynamic Host Configuration Protocol)

On boot-up, the system sends out a call on the network to find a DHCP-server, which assigns an IP address to such a system. The IP addresses are usually assigned NOT permanently, but for a specific time (could be days, weeks, months or on Internet-connections just for the ONE connection). If the system contacts the DHCP-server again during this time, the 'lease' on the IP address is extended. But if you come back from a long vacation, your 'lease' of the IP address may have expired, that IP address may have been assigned now to somebody else, and you/your computer get now assigned a new IP address.

The systems have IP addresses, but Ethernet-boards ONLY know their Ethernet-address, so as soon as a TCP/IP configured system is switched on, it is advertising its presence onto the network: "Hey, I am alive, my Ethernet address is '08000b 0a0238' and my IP address is '192.168.10.2' " and each TCP/IP system on the network builds up a table with all this information, which is usually checked/verified in time-intervals of 15 min.

If your system needs now to communicate with a station, for which it does NOT have an entry in its table of IP/Ethernet-Addresses, it sends out a search-message to everybody ("Broadcast-Message") like: " Hey, I like to communicate with the IP address '192.168.10.4', but I do NOT know your Ethernet-Address. Please, identify yourself". This causes the system with the requested IP address to send out its advertising again.

These processes are called ARP (Address Resolution Protocol) and RARP (Reversed Address Resolution Protocol).

The Address Resolution Protocol is used to dynamically discover the mapping between a layer 3 (protocol) and a layer 2 (hardware) address. A typical use is the mapping of an IP address (e.g. 192.168.0.10) to the underlying Ethernet address (e.g. 01:02:03:04:05:06). You will often see ARP packets at the beginning of a conversation, as ARP is the way these addresses are discovered. ARP is used to dynamically build and maintain a mapping database between link local layer 2 addresses and layer 3 addresses. In the common case this table is for mapping Ethernet to IP addresses. This database is called the ARP Table. Dynamic entries in this table are often cached with a timeout of up to 15 minutes, which means that once a host has ARPed for an IP address it will remember this for the next 15 minutes before it gets time to ARP for that address again.

### Gateway/Router

To connect a TCP/IP local-area-network to another TCP/IP LAN (which could be the complete Internet) or via a Wide-Area-Network (WAN), you need now a device called Gateway or Router.

### EAP

IEEE 802.1x adopts the Extensible Authentication Protocol (EAP) as the mechanism for exchange of authentication messages. EAP messages are encapsulated in Ethernet LAN packets (EAP over LANs, EAPOL) to allow communication between the supplicant and the authenticator.

EAP-TLS (Transport Layer Security). EAP-TLS is defined in RFC 2716 as the security method used in the 802.1x client in Windows XP. It provides for certificate-based, mutual authentication of the client and the network. It relies on client-side and server-side certificates to perform authentication; and distributes dynamically generated user- and session-based encryption keys to secure the connection. Mutual authentication and distribution of dynamic encryption keys are of particular interest in shared media Ethernet environments, such as 802.11 wireless LANs.

EAP-TTLS (Tunneled Transport Layer Security). EAP-TTLS (described in an IETF draft) is an extension of EAP-TLS, which requires only server-side certificates, eliminating the need to configure certificates for each client. TTLS provides additional security for transmission of user credentials and ciphers. It also supports legacy password protocols, so that it may be deployed as a front end to existing authentication systems (such as tokens or Microsoft Active Directory Services).

The evolution towards multiple services delivered over a broadband access network to an end user using an Ethernet type connection increases the end user need and business opportunity for a player to do service bundling, acting as a one point contact for the end user to access services from a plurality of service providers.

An access service provider (AccSP) provides the following basic services to its customers, including end users, enterprises or companies and application and content providers:
- Access, i.e. the possibility to hook in to various networks
- Connectivity, i.e. the possibility to connect to another user or service with required capabilities, speed, throughput, latency, etc.
- Reachability, i.e. to provide the possibility for others to connect to you, i.e. providing an identifier for publication together with an appropriate service logic and interconnect services
- Security from fraudulent or unwanted use of the access, including intrusion or eavesdropping.

An AccSP will also be dependent on identity and trust provisioning in order to identify and handle its customer relationships in an appropriate manner, including account handling.

From an IP and packet based perspective, AccSP basic offerings are:
- Access rights
- Connectivity
- Reachability
all with the appropriate security level. If access over multiple points is offered, mobility becomes an intrinsic part of connectivity and reachability.

In one extreme case, the AccSP, called the operator shop, provides all services. The main asset of the operator shop is its direct relation to the end users. By having direct access to all necessary knowledge about the end user, the operator shop can create good service offerings and also provide the best quality in all aspects to the customer.

This does not mean that the operator shop will be capable of producing all services needed by the market, i.e. different kinds of end users, by itself alone. It will rather offer the complete service package together with partners such as application and content providers. The operator shop then provides a single interface and acts as an integrator, or shop, towards the users, also called subscribers.

Using the terminology of today the closest you get to an operator shop is an Internet service provider (ISP). Although there may actually be significant differences between an operator shop and an ISP, the two terms may be regarded as more or less equivalent as used herein. Hence, the operator shop selection mechanisms could also be labeled ISP selection mechanisms and would work equally well with ISPs as with operator shops.

The current invention relates to a method called Flexible service selection (FSS), see the published International patent application No. WO 2005/060208, "Ethernet DSL access multiplexer and method providing dynamic service selection and end-user configuration", that is incorporated by reference herein.

FSS makes it possible to run a plurality of services from different application service providers (ASPs) simultaneously on a single personal computer (PC) or similar device in the customer premises network (CPN). Different services may be accessed through different gateways, having different media access control (MAC) addresses. It is assumed that the PC or similar device only gets one global IP (Internet Protocol) address, i.e. it may subscribe to only one ISP but to several ASPs.

The key to FSS is the use of DHCP (Dynamic Host Configuration Protocol) option 121 that allows traffic to be routed to different gateways depending on the IP address of the destination. When the PC requests an IP address through the DHCP it gets an answer according to DHCP option 121 including routing and gateway information relating to the services to which the user has subscribed. In the case where the PC does not support option 121 of the DHCP, the DSLAM (Digital Subscriber Line Access Multiplexer, Ethernet) has to snoop the information according to option 121 to be capable of mapping upstream traffic to the right virtual local area network (VLAN) and directing it to the right gateway as specified by the DHCP server. A VLAN is a logical grouping of ports and endstations such that all ports and endstations in the VLAN appear to be on the same physical (or extended) LAN segment even though they may be geographically separated. A VLAN identifier consists of the last 12 bits of the Tag Control Information field, as described above

Another related solution is the IP service engine (IPSE). Among other things it manages user traffic flows through a broadband remote access server (BRAS). IPSE can handle three levels of user authentication:
- Authenticated users. When first connected, authenticated users need to provide a login name and password that are validated by the router network element, i.e. the BRAS, typically through the RADIUS protocol with an external authentication server:
- Unauthenticated users. Unauthenticated users are granted a temporary connection and session with a minimum set of IP services. They can be authenticated at a later moment and be more officially logged-in by external business processes. During the later confirmed login of the users, the IPSE provides more explicit services and routing policies to the managed router.
- Persistent users. Persistent users have been pre-registered in the routers (BRASs) and IPSE with the identification of the MAC addresses of their terminals. Sessions are created to manage connections that have been established without requiring any explicit authentication.

When coupled with the Ericsson Ethernet DSLAM access (EDA) network, the IPSE can register persistent users dynamically by memorizing the VMAC (Virtual MAC) identifiers or the identifiers according to option 82 of the DHCP. The VMAC address is a locally administered MAC address that is assigned to a terminal and is locally unique in the broadband access network. In frames originating from the terminal the network replaces the original source MAC address by the VMAC address assigned to the terminal, to be used within the broadband access network. In frames destined for a terminal the network uses the VMAC address assigned to the terminal as the destination address within the broadband access network, but replaces it by the MAC address of the terminal before forwarding the frame to the terminal. Hence the assigned VMAC address "belongs to" and identifies the terminal, although the terminal itself never sees the VMAC address or is not aware of its existence.

Yet another solution related to operator shop selection is the IEEE 802.1X "Port-Based Network Access Control" standard. Appendix C of this standard document describes how the standard could be used together with a VLAN aware bridge in a local area network (LAN) context. One scenario described is when users can be connected to a non-authenticated VLAN by default and then after authentication can be reassigned to another VLAN associated with authorized services. The VLAN configuration for the user's bridge port is thus changed. No VLAN mapping or VLAN de-tagging occurs.

Current solutions do not provide appropriate operator shop selection mechanisms that work in all access scenarios and for users roaming in foreign broadband access networks. A user roaming in a foreign broadband access network in this case refers to a user visiting an access network that has no direct relation to the user's home operator shop.

The FSS enables a device to access multiple services. However, it does assume that only one ISP, or single authority, e.g. the operator shop, has all knowledge about the services which the end user can access. Hence, the case where the end user may choose between several "operator shops" or ISPs is not handles by FSS. Further, the FSS method can probably not be used for users roaming in foreign broadband access networks.

The IPSE solution may be used as a platform to create operator shop selection. However, it does not describe how the authentication, authorization and accounting (AAA) architecture should be designed to support roaming users and it does not solve the problem associated with users roaming into a CPN behind a network address translator (NAT). In addition, the IPSE solution does not allow multiple users connected to the same port of a residential gateway (RG) to choose different ISPs, even when they are not connected through an NAT. Furthermore, the IPSE solution does not describe how the user login procedure is handled in conjunction with ISP selection.

The example described in the standard document IEEE 802.1X, appendix C using a non-authenticated VLAN could be used as a component in an operator shop selection solution. However, it does not describe the total solution with support for roaming users and users accessing the network from behind an NAT.

US 2004/066756 concerns a method for user equipment (UE) resident in a wireless access network (WLAN) to obtain access to at least one other network is disclosed. The method includes storing the identification (SSID) of the at least one other network (visited PLMNs and home PLMNs) in the user equipment; transmitting from the user equipment a request for connection to one of the at least one other network, which includes an identification of at least one of the at least one other network, to the wireless access network; and in response to the wireless access network receiving the identification, the user equipment is connected to the identified at least one other network through the wireless access network.

US 2003/117954 concerns a telecommunication system to interconnect end-users and comprising one or more interconnected Virtual Service Networks (VSN) each associated to a data transport network. Each Virtual Service Network provides Quality-of-Service (QoS) guarantee for aggregated dataflows and comprises a Virtual Service Network Controller (VSNC) to control the resources of the Virtual Service Network and to perform a per-user admission control on each dataflow wanting to be transferred through said associated data transport network. Furthermore, each Virtual Service Network has a reachability agreement providing Quality-of-Service guarantees between endusers of the telecommunication system. This reachability agreement comprises the location of a point of attachment (TAP) of the VSNs and corresponding to a peering point (PP) of the data transport network through which data is exchanged between virtual service networks, an agreement to exchange routing information between virtual service networks, and the location of at least one virtual service network controller (VSNC) for each VSN, this virtual service network controller being adapted to exchange resource-signaling messages between the VSNs and to perform end-to-end admission control for the end-users dataflows.

US 2003/037163 concerns, in a communication method: processing for designation of a service provider, user authentication, and IP address assignment is performed by exchanging management frames between a user terminal and a service provider through an access network; and main-signal frames each having an IPoE form and containing a source Layer 2 address of the user terminal are exchanged between the user terminal and the service provider through the access network. The management frames have a form which can be discriminated from the main-signal frames in Layer 2, and the access network holds information on correspondences between source Layer 2 addresses and virtual private networks.; The access network recognizes one of the virtual private networks connected to the service provider, based on the source Layer 2 address contained in each main-signal frame, and transfers the main-signal frames in Layer 2 by MAC bridging.

### SUMMARY

The invention is defined by claims 1, 4 and 8, with various embodiments as defined in the dependent claims. The present invention provides a solution for operator shop, or access service provider, which, in the context as used herein, can be regarded as more or less equivalent to an ISP, selection by the end user in a broadband access network with multiple operator shops connected. When multiple operator shops are connected to the same broadband network a user accessing the network may have to indicate which of the operator shops that should provide the services. This applies to dynamically established session associations, i.e. when the association with an operator shop is not permanently tied to a physical attribute, such as an access port, but is instead created as a result of a user login or service access procedure. This solution can be valid for both users in their home network and roaming users. For a user accessing his home broadband network this means that he must indicate his home operator shop. For a user accessing a foreign broadband network it means that he must indicate an operator shop with which his home operator shop has a roaming agreement.

The current invention proposes a solution for operator shop, or AccSP, selection both for a user accessing his home broadband network and for the case when a roaming user is accessing a foreign broadband network. This is an important mechanism when mobility is introduced in the broadband access networks.

The solution for operator shop selection complements FSS in that it allows an end user to select the operator shop from which to access services. FSS, i.e. DHCP option 121, may then be used by the selected operator shop to provide the end user device with routing and gateway (GW) information to the different application services.

The operator shop selection solution further adds support for a roaming end user visiting a foreign broadband access network to select the desired visited operator shop.

The invention may provide both layer 2 and layer 3 solution mechanisms. The layer 2 mechanisms are based on associations of the appropriate VLANs as triggered by a user authentication procedure, possibly complemented by manual indications on a service portal. The layer 3 mechanisms are based on IPsec (IP Security protocol suite, a set of standards used to provide security services at the IP layer) tunnels between the terminals and suitable endpoint or endpoints in the network using IKEv2 (Internet Key Exchange version 2) with the NAT traversal detection option and the extensible authentication protocol (EAP) as the integrated authentication mechanism.

The solution is comprehensive enough to cover a wide variety of access scenarios, including accessing the broadband access network through a dedicated RG port, a non-dedicated RG port, a home WLAN access point (AP), a home NAT, and a public WLAN AP, provided by the broadband access network.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
- Fig. 1a is a general view illustrating a user device or user terminal accessing one of a plurality of service providing networks through a broadband access network,
- Fig. 1b is a schematic view similar to Fig. 1a illustrating also authentication entities or units,
- Fig. 1c is a schematic view of a broadband access network architecture illustrating also various units or devices used for the user device or terminal when connecting to the broadband access network,
- Fig. 2a is a more detailed view of parts of the broadband access network of Fig. 1c that are relevant for operator shop selection,
- Fig. 2b is a view similar to Fig. 2a where a WLAN AP does not support virtual APs,
- Fig. 2c is a view similar to Fig. 2a where a terminal is connected to an RG via a router having an NAT,
- Fig. 2d is a view similar to Fig. 2a where an IPsec tunnel passes in a BRAS and ends in a local VRF of the BRAS,
- Fig. 2e is a view similar to Fig. 2a where an IPsec tunnel passes through a dedicated VRF in a BRAS, an operator shop, the Internet and ends in a BAS of another operator shop,
- Fig. 2f is a view similar to Fig. 2a where an IPsec tunnel passes through a first dedicated VRF and a second dedicated VRF up to a BAS of the operator shop associated with the second dedicated VRF,
- Fig. 2g is a view similar to Fig. 2a where an IPsec tunnel passes through a first dedicated VRF up to an IPsec tunnel endpoint server,
- Fig. 2h is a view similar to Fig. 2g where an IPsec tunnel passes from a terminal through a router connected in a customer premises network, a first dedicated VRF up to an IPsec tunnel endpoint server,
- Fig. 2i is a view similar to Fig. 2a relevant for a user roaming in a foreign broadband access network,
- Fig. 2j is a view similar to Fig. 2i relevant for a user roaming in a foreign broadband access network for the case where a WLAN AP does not support virtual APs,
- Fig. 2k is a view similar to Fig. 2a where an IPsec tunnel passes through a first dedicated VRF up to another dedicated VRF acting as an IPsec tunnel endpoint server,
- Fig. 3a is a signal diagram of procedural steps executed when a terminal accesses an operator shop through a CPN,
- Fig. 3b is a schematic block diagram of an access node used in the case of Fig. 3a,
- Fig. 4a is a signal diagram similar to Fig. 3a for a terminal accessing an operator shop through a wireless LAN access point supporting virtual APs,
- Fig. 4b is a signal diagram similar to Fig. 4a for a terminal accessing a service portal through a wireless LAN access point supporting virtual APs for obtaining information about available operator shops,
- Fig. 4c is a schematic block diagram of a wireless access node used in the case of Figs. 4a and 4b,
- Fig. 4d is a schematic block diagram of an authentication client used in the broadband access server for the case of Fig. 4a,
- Fig. 4e is a schematic block diagram of an authentication proxy server used in the broadband access server for the case of Fig. 4a,
- Fig. 4f is a flow-chart of steps performed in a modifier unit 99 in a wireless access node for the case of Fig. 4a,

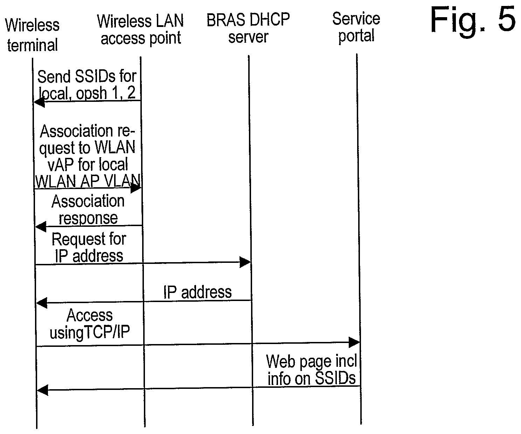

- Fig. 5 is a signal diagram similar to Fig. 3a for a terminal accessing a wireless LAN access point requesting/for obtaining information on available services,
- Fig. 6a is a signal diagram similar to Fig. 4a for a terminal accessing an operator shop through a wireless LAN access point not supporting virtual APs,
- Fig. 6b is a schematic block diagram of an access node used in the case of Fig. 6a,
- Fig. 7a is a signal diagram similar to Fig. 3a for terminals accessing operator shops using IPsec tunnels having a common endpoint in the BRAS 17,
- Fig. 7b is a signal diagram similar to Fig. 7a for IPsec tunnels having dedicated endpoints in the BRAS,
- Fig. 7c is a schematic block diagram of a terminal used in the case of Fig. 7a,
- Fig. 7d is a schematic block diagram of a local virtual router function used in the case of Fig. 7a,
- Fig. 7e is a schematic block diagram of a dedicated virtual router function used in the case of Fig. 7a or 7b,
- Fig. 7f is a signal diagram similar to Fig. 7a for IPsec tunnels having tunnel endpoints in the BAS of the operator shop,
- Fig. 7g is a signal diagram similar to Fig. 7a when using a DHCP option for informing a terminal about tunnel endpoint addresses,
- Fig. 7h is a signal diagram similar to Fig. 7g in the case where the DHCP option includes FQDNs of tunnel endpoints,
- Fig. 7i is a signal diagram similar to Fig. 7g for the case where a terminal connects to a router having an NAT,
- Fig. 7j is a signal diagram similar to Fig. 7h for the case where a terminal connects to a router having an NAT,
- Fig. 8a is a signal diagram similar to Fig. 3a for a roaming user accessing a foreign operator shop with special software provided in the user's terminal,
- Fig. 8b is a schematic block diagram of an authentication proxy server used in the broadband access server for the case of Fig. 8a,
- Fig. 8c is a schematic block diagram of a terminal used in the case of Fig. 8a,
- Fig. 8d is a schematic block diagram of an authentication server used in an operator shop for the case of Fig. 8a,
- Fig. 9a is a signal diagram similar to Fig. 8a for a roaming user accessing a foreign operator shop without any special software provided in the user's terminal,
- Fig. 9b is a signal diagram similar to Fig. 9a for a procedure in which an EAP Authenticator is also used,
- Fig. 9c is a schematic block diagram of an authentication proxy server used in the broadband access server for the cases of Figs. 9a and 9b,
- Fig. 9d is a schematic block diagram of a logical unit used in the broadband access server for the cases of Figs. 9a and 9b,
- Fig. 9e is a schematic block diagram of an authentication server used in an operator shop for the cases of Figs. 9a and 9b,
- Fig. 9f is a schematic block diagram of a service portal used in an operator shop for the cases of Figs. 9a and 9b, and
- Fig. 9g is a schematic block diagram of an authentication server that may be used in an operator shop for the cases of Figs. 9a and 9b.

### DETAILED DESCRIPTION

System and methods including procedures for operator shop selection that includes both layer 2 mechanisms, i.e. basically methods, steps and devices for directly driving hardware, and layer 3 mechanisms, i.e. basically methods, steps and devices for connecting on a network level, will now be described.

### Overview of the target broadband access network architecture

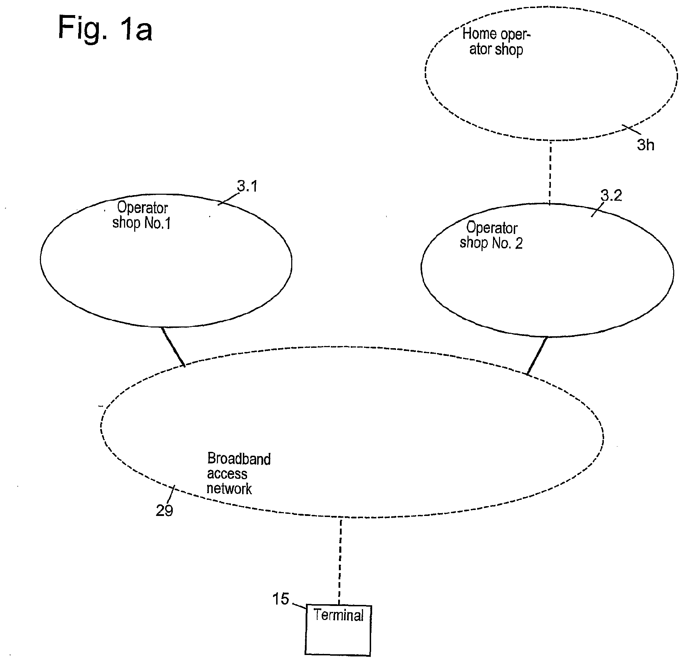

The network environment for the methods and devices as described herein generally includes a broadband access network 29 to which operator shops 3.1, 3.2 are connected and which is designed to serve users using their terminals 15 to connected to or through the broadband access network, see Fig. 1a. The broadband access network 29 is an access network allowing user devices to connect to it and allowing a sufficient rate of data communication between the user terminals and the operator shops, the term "broadband" referring only to the fact that communication of data or "content" should be possible between the user terminals and the operator shops. The operator shops may in the description below be considered equivalent to distinct service providing networks. Users are considered who connect only through the broadband access network of their own. Users are also considered who roam in or through other access networks. In the latter case the users are still assumed to have an operator shop 3h of their own that has some relation to one of the operator shops connected to the broadband access network 29.

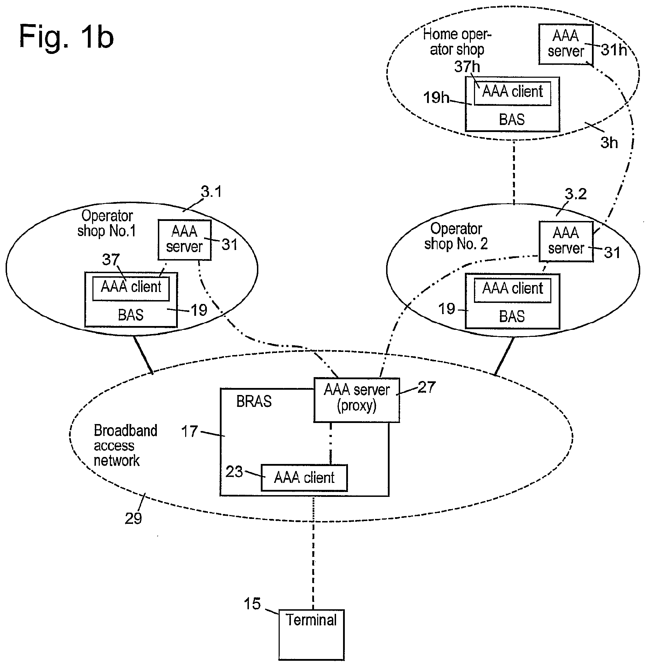

Connection to or through a broadband access server requires an identification procedure and an authentication procedure that may be more or less combined with each other. Such an identification procedure may be provided by the AAA standard and is based on individual user identities in the form of network access identifiers (NAIs) having the format "name@realm", see B. Aboba, M. Beadles, "The Network Access Identifier, RFC 2486, January 1999, and B. Aboba et al., "The Network Access Identifier", RFC 4282, December 2005. An authentication procedure, that is also required for some parts of the system, may be the extensible authentication protocol (EAP), see L. Blunk, J. Vollbrecht: "PPP Extensible Authentication Protocol (EAP)", RFC 2284, March 1998, and L. Blunk et al.: "Extensible Authentication Protocol (EAP)", RFC 3748, June 2004, of the EAP Working Group, IETF, and then the carrier for EAP may be assumed to be designed according to the standard IEEE 802.1X - 2001, "Port-Based Network Access Control". Some components that may be used in an identification/authentication procedure are illustrated in Fig. 1b. Thus, the broadband access network may include an access server called herein a BRAS (Broadband Remote Access Server) 17 that includes an authentication client unit such as an AAA client 23. An authentication proxy server such as an AAA proxy server 27 may be connected to or in the BRAS and can communicate with the authentication client unit. The operator shops 3.1, 3.2, 3h may each have an access server, called herein a Broadband Access Server (BAS) 19, 19h which includes an authentication client unit such as an AAA client 37, 37h. Each of these authentication client units can communicate with an authentication unit, also called authentication server, such as an AAA server 31, 31h, of the respective operator shop, and in the case where the proxy server is included, the communication is through the proxy server 27.

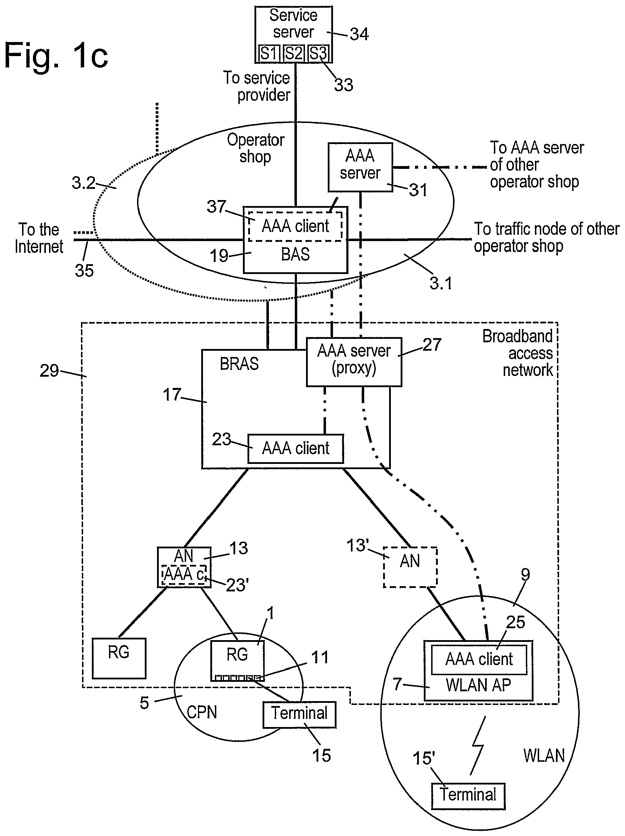

The legacy notion of a subscription in a broadband network is reused in the sense that a subscription can still be tied to a physical attribute of a home, e.g. a communication port to which the residential gateway 1 (RG) of the home or premises of a user is connected, see Fig. 1c. Subscribed services are delivered to the RG 1 using existing layer 2 mechanisms, i.e. per operator shop 3.1, 3.2, and possibly per service, VLAN separation, MAC forced forwarding (MAC-FF), see T. Melsen, S. Blake, "MAC-Forced Forwarding: A Method for Traffic Separation on an Ethernet Access Network", <draft-melsen-mac-forcedfwd-03.txt>, Personal Internet-Draft, IETF August 2004, Virtual MAC, see Michael Begley, "The Public Ethernet - The next-generation broadband access network", Ericsson Review No. 1 2004, or anti-spoofing address filtering, etc. A VLAN dedicated to a certain operator shop 3.1, 3.2 is hereinafter referred to as a service VLAN or an operator shop VLAN.

Overlaid on these mechanisms it is also possible for individual users to receive services based on their user identities, i.e. their NAIs. In this case the appropriate VLAN associations are dynamically established as a result of a user login procedure, whereas for services delivered to a certain RG 1, based on a physical attribute such as a communication port, these associations are permanent or semi-permanent. NAI based service delivery is required to allow roaming.

To allow volume based charging of traffic in another location than the user's home, where "home" is defined by the user's subscription, as well as to allow, for legal purposes, tracing of traffic originating from the subscribers, it is required that the source of traffic originating from a user in the broadband access network can be unambiguously identified. Thus, the traffic of each user has to be separated from other users' traffic. The basic method for accomplishing this in a broadband access network is a combination of the layer 2 mechanisms in VLANs, MAC-FF and virtual MAC or anti-spoofing address filtering. This applies both to connected customer premises networks 5 (CPNs) and to connected WLAN (Wireless LAN) APs 7. However, there are also a number of differences between the case where a user is connected through a conventional local area network such as a CPN 5 and the case where the user is connected through a wireless local area network 9, i.e. between the CPN case and the WLAN AP case:
- All applicable service VLANs, for different operator shops, are constantly available through the WLAN AP 7, whereas in the CPN case, appropriate service VLANs are made available when needed, dynamically for NAI based sessions and at subscription time for (semi-)permanent associations.
- For WLAN APs 7 the service VLAN separation is, normally, extended across the radio interface through associations with separate service set identifiers (SSIDs) whereas in the CPN case each RG port 11 may be associated with a service VLAN, through VLANs or ATM PVCs (Permanent Virtual Circuits) to the access node 13 (AN). However, WLAN APs 7 that do not support multiple SSIDs can also be used in the method and system as described herein.
- For WLAN APs 7 traffic separation over the radio interface is achieved using cryptographic mechanisms according to the standard document IEEE 802.11i, "Medium Access Control (MAC) Security Enhancements", 2004, whereas traffic separation in a CPN 5, when applicable, is achieved by using separate RG ports 11, i.e. one individual port for each user terminal 15 or, possibly, for each group of user terminals.

However, in a layer 2 based method for traffic separation the considered user terminal 15 must connect to a separate port 11 of the RG 1 when roaming into a CPN 5. This may be inconvenient in those cases where the terminals 15, 15' normally connect to the RG through a WLAN AP and/or an NAT, not shown in this figure. Moreover, in some cases a separate port may not even be available on the RG. Therefore, layer 3 based methods based on IPsec tunnels having source integrity and replay protection may also be used. Such methods cryptographically tie the traffic to an individual user or individual terminal 15, 15'. In the system and method as described herein two basic alternatives are considered for the remote endpoint of the IPsec tunnel, these alternatives including the broadband remote access server 17 and the broadband access server (BAS) 19.

The various methods as described herein may more specifically be performed e.g. in an architecture for a broadband access network as schematically illustrated in Fig. 1c, although the methods can also be applied to a plurality of variations of the illustrated architecture. Primarily, the location of the relevant nodes and the AAA entities in the broadband access network 29 are shown. The access node 13' between the WLAN AP 7 and the BRAS 17 may not be needed. This depends on whether the required AN functionality, e.g. mechanisms for traffic separation, can be handled by the WLAN AP 7. An alternative to having an AAA client 23 in the BRAS 17 is to have an AAA client 23' in each AN. In the general case as described herein and as seen in Figs. 1b and 1c, an AAA client 23 is located in the BRAS 17. This AAA client 23 is used for all accesses through CPNs 5 in the broadband access network. Its location in the BRAS 17 supports traffic separation on both layer 2, VLANs, MAC-FF, virtual MAC or anti-spoofing address filtering, and layer 3, IPsec tunnels. An AAA client 25 is also located in each WLAN AP 7. This location supports traffic separation on layer 2, using the proposed standard IEEE 802.11i over the radio interface and VLAN, MAC-FF and anti-spoofing address filtering between the WLAN AP 7 and the BRAS 17, employing the fact that many WLAN APs 7 intended for public access have AAA clients 25 implemented.

The BRAS 17 also has an internal AAA server 27 or is connected to an external AAA server, not shown. This AAA server 27 acts as an AAA proxy server. It facilitates the serving of multiple operator shops 3.1, 3.2 by the broadband access network 29 and allows the operator of the broadband access network to apply its own AAA policies in addition to those applied by that of the operator shop selected by a user. The AAA server 27 in the BRAS 17 or possibly only connected to the BRAS 17 has a relation to an AAA server 31 in each of the operator shops 3.1, 3.2 that the broadband access network 29 serves.

Hence, the AAA server 31 that actually authenticates and authorizes users is located in the operator shop 3.1, 3.2, since the operator shop "owns" the subscribers and manages the subscriptions.

The operator shop 3.1, 3.2 also has a broadband access server 19 (BAS) for delivery of services 33, e.g. available at servers 34 run by the operator of the operator shop or by individual service providers, and Internet traffic, see item 35. There may be an AAA client 37 in the BAS 19 for communicating with the AAA server 31 of the operator shop 3.1, 3.2 for authentication and authorization in conjunction with delivery of services to users roaming in other networks and possibly in conjunction with individualized delivery of services to users in the broadband access network 29, if a layer 3 traffic separation method is used.

The AAA protocol used between different AAA nodes, i.e. AAA servers 31 and clients 23, 23', 25, 37, is generally assumed to be RADIUS, see C. Rigney et al.: "Remote Authentication Dial In User Service (RADIUS)", RFC 2865, June 2000, and B. Aboba, P. Calhoun: "RADIUS (Remote Authentication Dial In User Service) Support For Extensible Authentication Protocol (EAP)", RFC 3579, September 2003. The AAA protocol can alternatively be Diameter, see P. Calhoun, J. Loughney, E. Guttman, G. Zorn, J. Arkko: "Diameter Base Protocol", RFC 3588, September 2003, and P. Eronen, Ed., T. Hiller, G. Zorn: "Diameter Extensible Authentication Protocol (EAP) Application", Internet draft <draft-ietf-aaa-eap-03.txt>, IETF, October 2003. These two protocols can both convey EAP packets. Also, any other AAA protocol that can convey EAP packets can be used. However, EAP is not required for all parts of the method and system as described herein, in which cases the AAA protocol may also be some suitable protocol that cannot convey EAP packets.

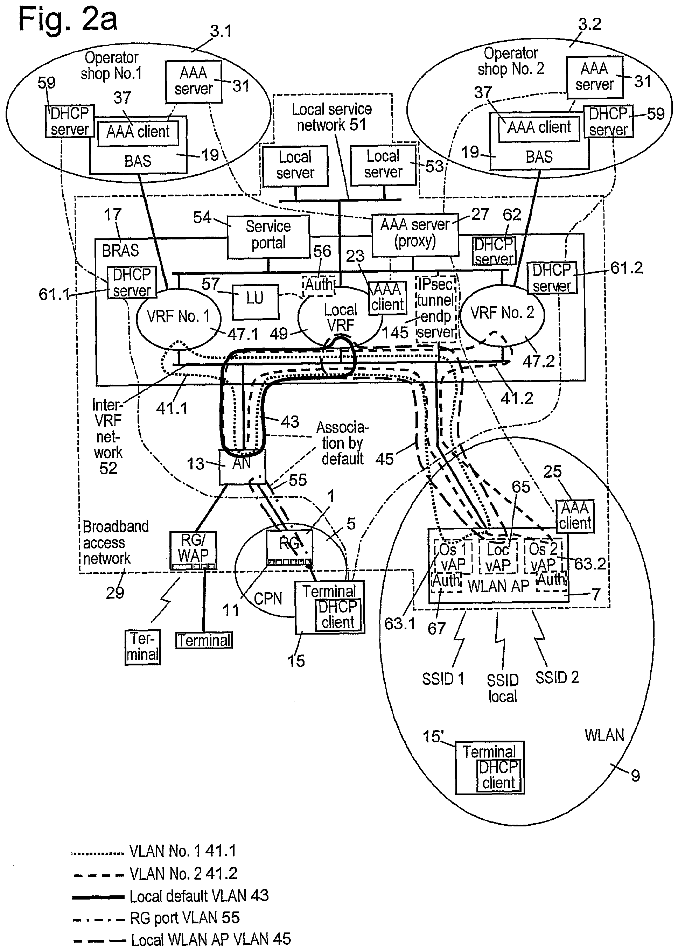

In addition to services 33 supplied through the operator shops 3.1, 3.2 the broadband access network 29 may provide local services, e.g. based on servers connected to a local service network connected to the BRAS 17, see e.g. the description of Fig. 2a below. Such local services are generally delivered for free to all users of the broadband access network, including roaming users.

### Operator shop selection overview

A user is supposed to have a "home operator shop" and a "home access network", the latter also called "home broadband network" or possibly "home broadband access network", a home access network meaning a broadband access network through which the user's home operator shop can be reached directly, i.e. without using e.g. another operator shop having a roaming agreement with the user's home operator shop. The home broadband access network thus serves the user's home operator shop, by providing a connection to the home operator shop, and is assumed to have a service agreement with the user's home operator shop.

When multiple operator shops 3.1, 3.2 are connected to the same broadband access network 29 a user accessing the broadband access network must indicate that one of the available operator shops which is to provide the services.

For a user accessing his home broadband access network this means that the user must indicate his home operator shop. For a user accessing a foreign broadband access network, i.e. a broadband access network with which his home operator shop has no relation, it means that he must indicate an operator shop with which his home operator shop has a roaming agreement.

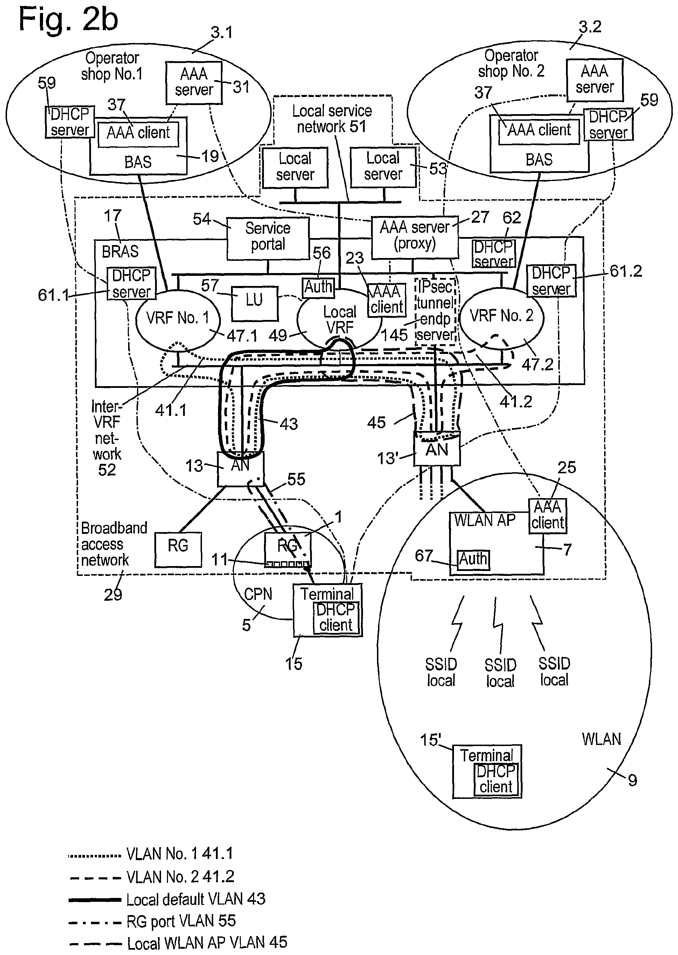

Fig. 2a is a more detailed view of those parts of the broadband access network that in a first case are relevant in conjunction with operator shop selection. It should be emphasized that the details of the architecture depicted in Fig. 2a, and also in Figs. 2b - 2k, should be seen as exemplary embodiments. Various variations are possible, while still adhering to the basic principles of the method and system as described herein. However, also Fig. 2a is a simplified illustration. E.g. the AAA server 27 of the BRAS 17 is advantageously protected by security means, such as a firewall etc., not shown.

Two service VLANs, VLAN No. 1, 41.1, and VLAN No. 2, 41. 2, each associated with an own operator shop No. 1, 3.1, and No. 2, 3.2, respectively, are depicted. The other two VLANs are local VLANs, the local default VLAN 43 and the local WLAN AP VLAN 45 that are used for user authentication, this only performed by the local default VLAN 43, for operator shop selection and for access to local services, i.e. services that are directly provided by the BRAS 17.

The VRF (Virtual Router Function) No. 1, 47.1, and the VRF No. 2, 47.2, of the BRAS 17 are each dedicated to a single operator shop 3.1, 3.2, respectively. The local VRF 49 of BRAS 17 has a central role in the operator shop selection mechanisms, e.g. in handling authentication and in some cases for handling IPsec tunnels. The VRFs are interconnected, such as being connected in an inter-VRF network 52.

The local service network 51 that is connected to or in the BRAS 17 and also may be connected to or include the inter-VRF network 52, may advantageously have a number of VLANs, not shown, configured so as to isolate VRF No. 1, 47.1, and VRF No. 2, 47.2, from each other, isolate servers, e.g. local servers 53, from each other when applicable, etc. In the simplified schematic illustration the AAA server 27 of the BRAS 17 is shown to be connected to the same local service network 51 as the local servers 53. However, it could be advantageous if this AAA server 27 is connected to a separate network surrounded by more rigorous security measures, not shown. At least, the AAA server 27 of the BRAS 17 should be isolated and protected from unauthorized access by having a separation performed by a VLAN, not shown. The local VRF 49 should preferably employ VLAN aggregation, according to D. McPherson, B. Dykes, "VLAN Aggregation for Efficient IP Address Allocation", RFC 3069, February 2001, for the local service network 51, and the VLANs in which it may be divided, so that the local VRF can be reached using the same IP address from all other VRFs across the local service network 51 and/or the inter-VRF network 52. However, these VLANs used in BRAS internal networks such as in the local service network 51 and in the inter-VRF network 52 are not illustrated in the figures.

There are two main cases which the methods for operator shop selection may handle:
- A user accessing his home broadband access network, i.e. a broadband access network that is connected to the user's home operator shop.
- A user accessing a foreign broadband access network, i.e. a broadband access network that has no relation to the user's home operator shop.

### Operator shop selection in a home broadband access network

Selection of an operator shop is not applicable for common services for all users or devices within a CPN 5 such as in the case where an RG port 11 of the CPN is permanently or semipermanently associated with the home operator shop of a user. In that case the home operator shop has already been "selected" through the permanent or semipermanent association. Only associations dynamically established per session are discussed herein.

The cases that should be considered in a home broadband access network include:
- The user accesses his home operator shop through a CPN 5 connected to/in her/his home broadband access network.
- The user accesses his home operator shop through a WLAN AP 7 connected in her/his home broadband access network.
- The user accesses his home operator shop through an IPsec tunnel established through her/his home broadband access network.

### Access through a CPN

The RG port VLAN 55 of an RG port 11 of an RG 1 in a CPN 5 is, in the case discussed herein and when there is no active session activated from a user terminal 15, by default associated with the local default VLAN 43. This association is present as a logical connection internally in the AN 13 to which the RG 1 is connected. That a VLAN is associated with another VLAN generally means that the VLANs are logically connected through a node, such as by a table entry in a table in the node, so that frames in one of the VLANs are automatically transmitted into the other VLAN. Generally, there may thus be provided some indication of such associations by e.g. the contents of a memory cell, not shown, in the AN. Thus, when a user connects to an RG port 11, the local default VLAN 43 is all that the user can reach, i.e. in this case frames received in the AN 13 from the RG port 11 are automatically transmitted also into the local default VLAN. Before the user is authenticated, the procedures according to the standard document IEEE 802.1X will not allow any other communication with the user's terminal 15 than sending and receiving messages carried in EAP packets, or in other packets related to the procedure of logging in to the broadband access network 29 such as for accessing operator shop No. 1 or 2, 3.1 or 3.2, such packets being e.g. PPPoE packets, see L. Mamakos et al., "A Method for Transmitting PPP over Ethernet (PPPoE)", RFC 2516, February 1999, in the case where an authentication method different from EAP over IEEE 802.1X is used. Any Ethernet frame sent from the user's terminal 15 will trigger the local VRF 43 to initiate an EAP authentication procedure towards the terminal, in accordance with the standard document IEEE 802.1X, using some authenticator function or unit symbolically indicated at 56 in the BRAS 17 in Fig. 2a.

During the EAP procedure the local VRF 43 relays the EAP packets to the AAA client 23 of the BRAS 17, which forwards them to the AAA proxy server 27 of the BRAS. The AAA proxy server 27 examines the realm part of the NAI that the user supplies in an EAP-Identity-Response message in order to determine what to do with the EAP procedure, i.e. to determine the AAA server to which it is to be directed or if it is to be handled internally, in the case where the user wants access only to the local service network 51. A home realm is the administrative domain with which a user maintains an account relationship and a local realm is the administrative domain providing services to a user. An administrative domain may act as a local realm for some users, while being a home realm for others. The network access identifier (NAI) is used in the Diameter protocol to extract a user's identity and realm. The identity is used to identify the user during authentication and/or authorization, whereas a user's realm is used for message routing purposes. The string in the NAI that precedes the "@" character is the name part and gives the identity of the user, the "username". The string in the NAI that immediately follows the '@' character is the realm part holding an NAI realm name. NAI realm names are required to be unique. An AAA entity employing the Diameter or RADIUS protocol makes use of the realm defined by the realm part, also loosely referred to as domain, to determine whether messages from or to the user can be satisfied locally in the AAA entity, or whether they must be routed or redirected to another AAA entity. In the case considered here the user accesses his home broadband access network 29 and the realm part of the NAI indicates the user's home operator shop, i.e. either operator shop No. 1, 3.1, or operator shop No. 2, 3.2. An example of an NAI is "happy-user@op-shopl"
For this NAI the AAA proxy server 27 will relay the AAA packets between the AAA client 23 and the AAA server 31 of the operator shop indicated by the NAI, operator shop No. 1, 3.1, in the example. Hence, operator shop No. 1, 3.1, has been selected.

After a successful authentication the BRAS 17 instructs the concerned AN 13 in a suitable way, e.g. via the simple network management protocol (SNMP), see D. Harrington et al., "An Architecture for Describing Simple Network Management Protocol (SNMP) Management Frameworks", RFC 3411, December 2002, or some other protocol that the BRAS can use to control ANs, to associate the concerned RG port VLAN 55 with VLAN No. 1, 41.1, instead of the local default VLAN 43. Then the user can through his terminal 15 proceed to acquire an IP address using DHCP to enable subsequent IP communication. In order for the BRAS 17 to know which AN 13 to instruct, virtual MAC must be used. The EAP procedure in itself does not give the BRAS 17 any information about which AN 13 that is being involved in the procedure. Furthermore, the Ethernet network infrastructure between the AN 13 and the BRAS 17 does not allow the BRAS to trace the node from which a considered frame has arrived. Also, the (original) source MAC address of the user terminal 15 carries no location or topology information. Thus, in order for the BRAS 17 to know which AN 13 to instruct, the AN must replace the original source MAC address of the user terminal 15 with a virtual MAC address that indicates the responsible AN. To ensure that the BRAS 17 can tell to which AN 13 a virtual MAC address belongs, the different ANs are allocated different parts of the virtual MAC address range.

The AAA client can instead be located in the AN, see item 23' of Fig. 1, and then neither the local default VLAN 43 nor the virtual MAC address is needed for this purpose.

If access only to the local service network 51 is desired, the user can supply a special NAI, with a realm part belonging to the broadband access network 29, dedicated for this purpose. The user can have obtained it through off-line means or other mechanisms that are used to inform a user about available operator shops as described hereinbelow. The AN 13 can then keep its association between the concerned RG port VLAN 55 and the local default VLAN 43.

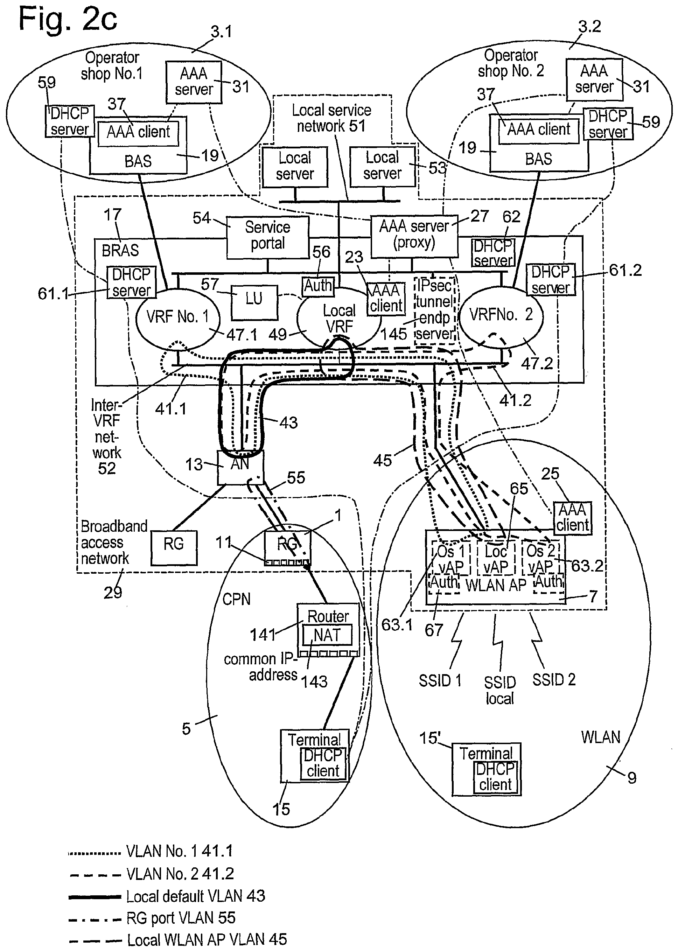

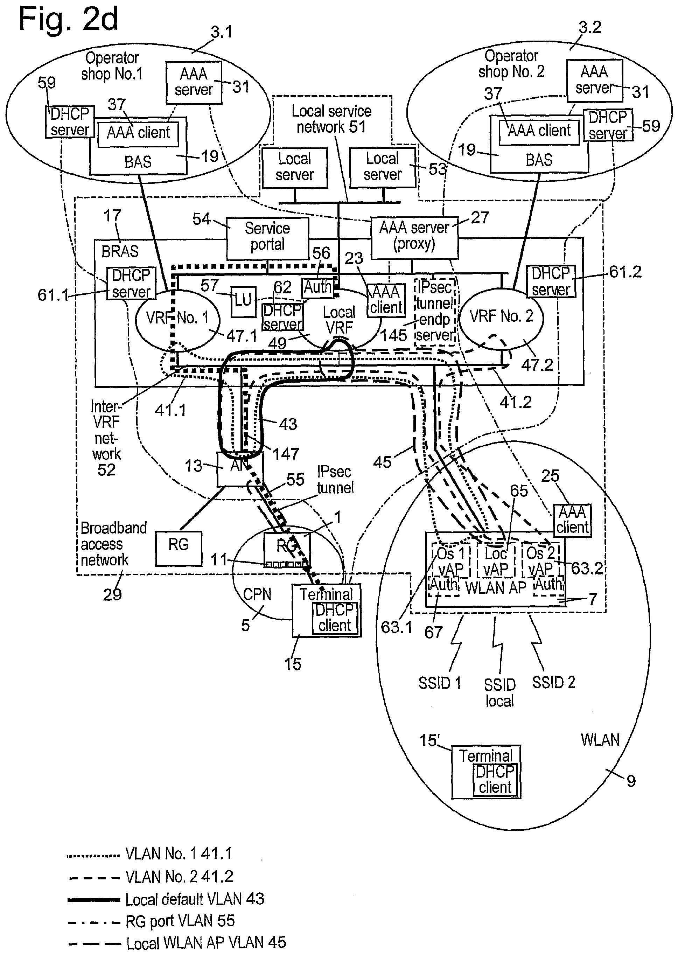

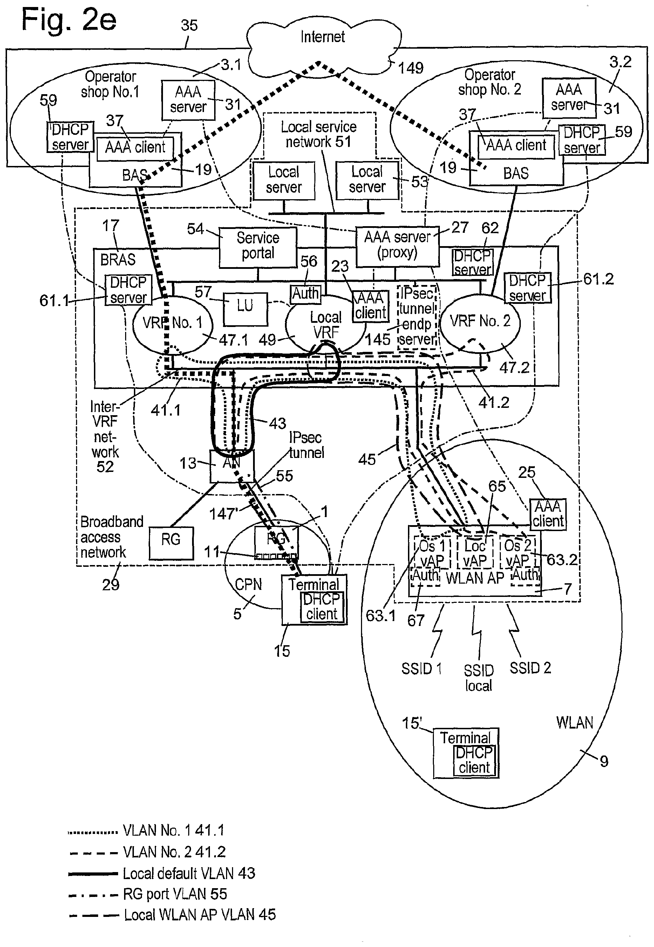

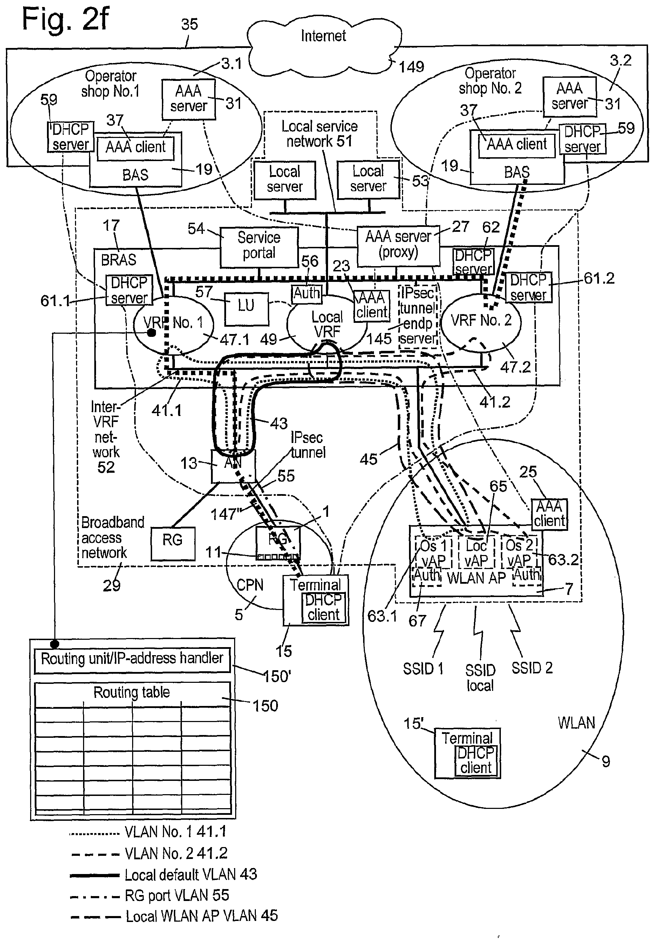

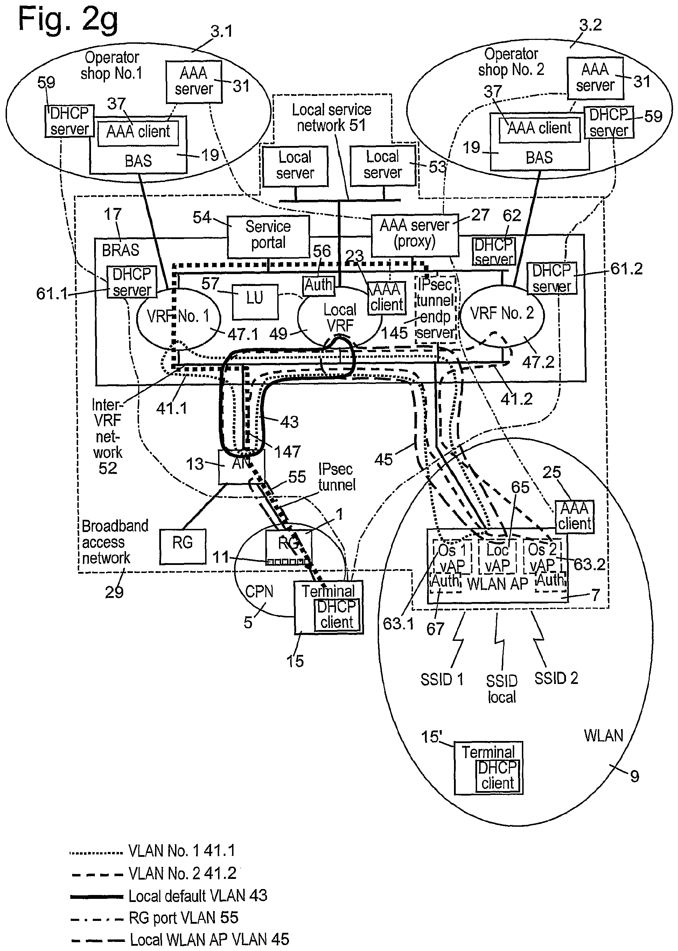

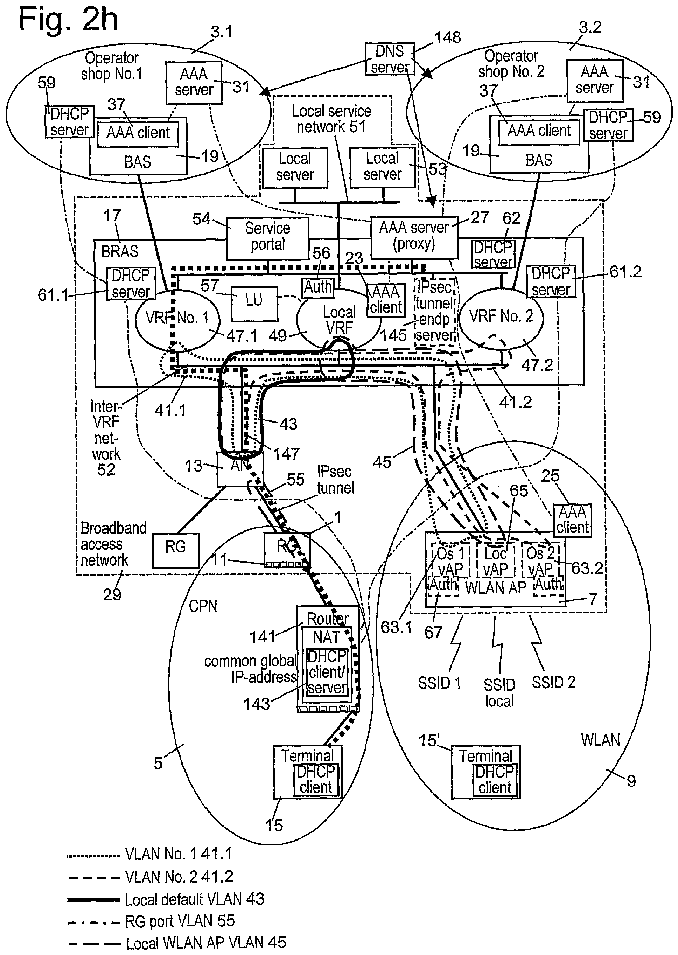

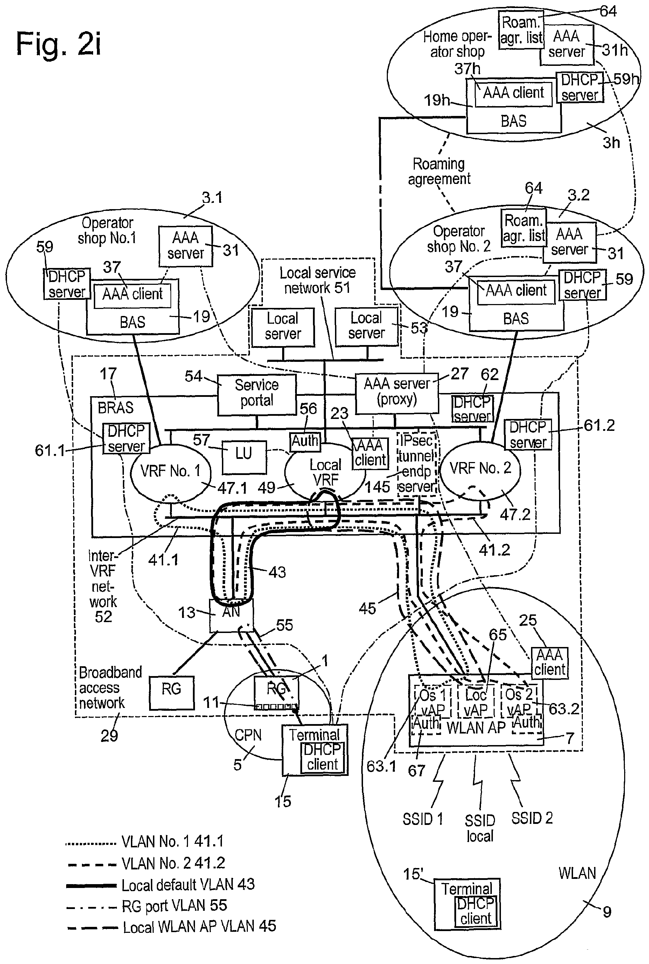

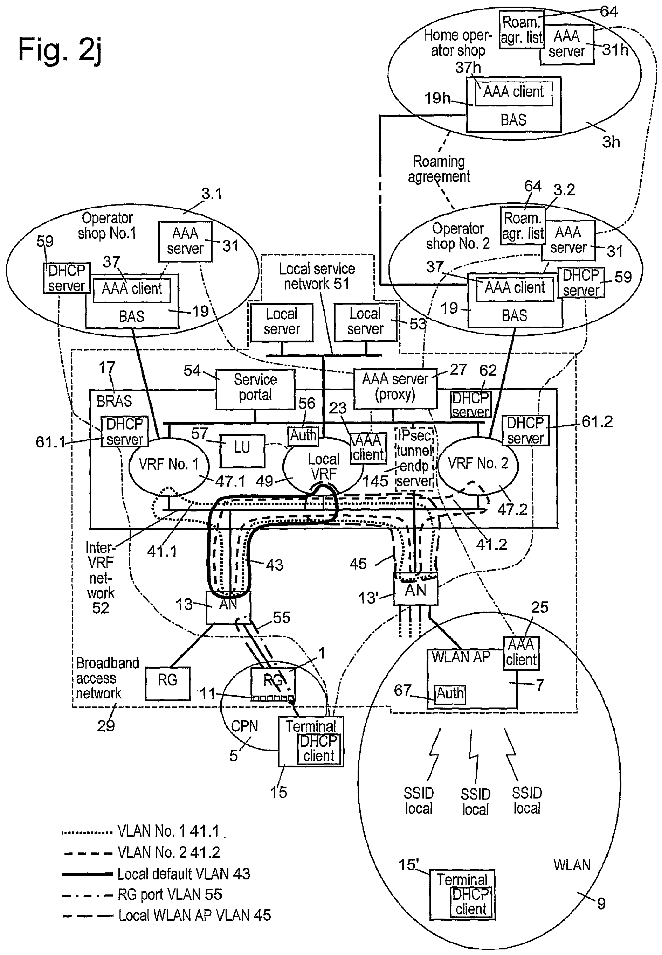

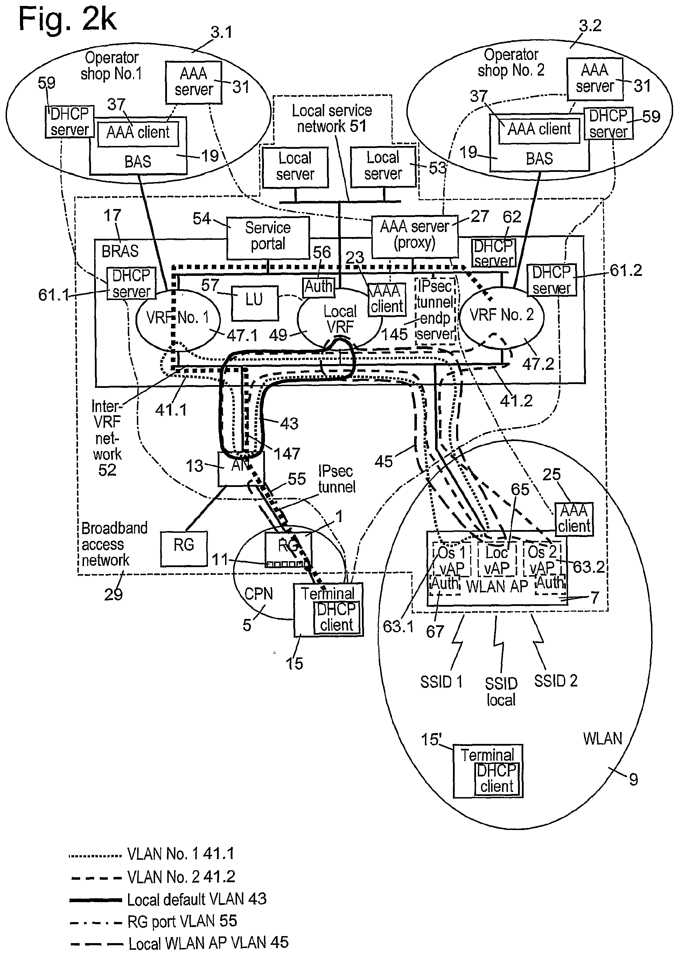

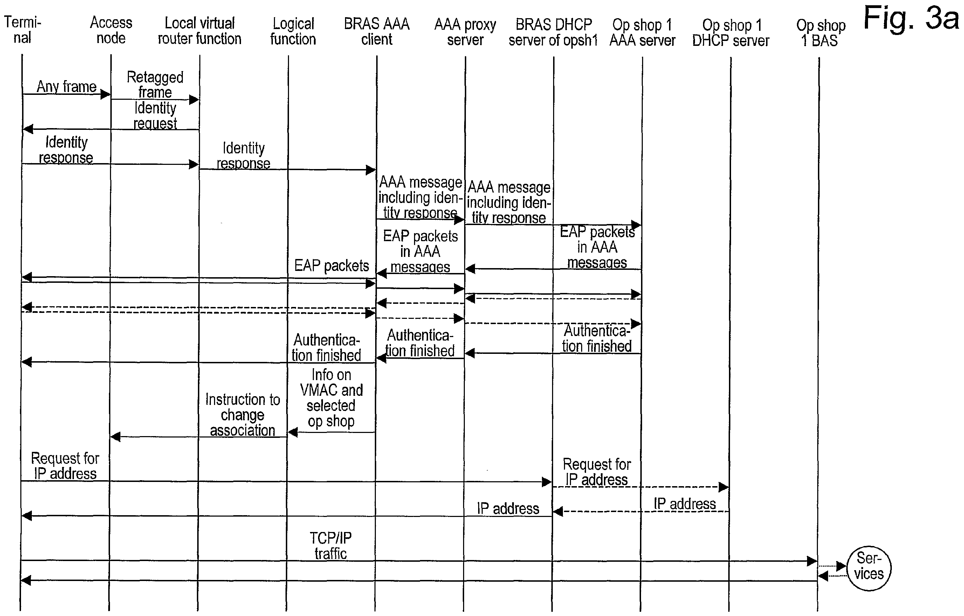

The different steps in accessing an operator shop 3.1, 3.2 for the case where the AAA client 23 is located in the BRAS 17 are summarized below with reference to the signal diagram of Fig. 3a. The user is assumed to be logged in to a CPN 5 on a terminal 15 having an MAC address and in particular connected to a specific port 11 of the RG 1, the user identified by also this specific port.
1. A user connects her/his terminal 15 to a broadband access network, e.g. by the user simply turning on his terminal device that is assumed to be connected to an RG port 11. Then, the terminal 15 sends an EAPOL-Start-packet to the multicast address of "Port Access Entity" (PAE), called the "PAE group address" in the IEEE 802.1X specification, this specification defining PAE as the unit handling the authentication procedure towards the terminal and containing the "EAP Authenticator". The EAP Authenticator is defined as the unit communicating with the terminal 15 in an EAP-procedure, and may symbolically be indicated as the unit 56 in Fig. 2. The PAE maintains a list defining in some way the frames allowed to pass. If any, these frames may be defined by certain allowed values of the Type field in the frame header or of certain allowed attributes of a higher layer packet included in the frame, such as a destination IP address or a destination UDP port number, other frames being blocked because the respective user is not authenticated. If the terminal 15 sends a frame containing something else than an EAPOL-Start packet, the EAP Authenticator 56/PAE/local VRF 49 will intercept the frame and initiate an EAP procedure towards the terminal by sending an EAP-Identity-Request packet to the terminal.
2. A frames or frames from the terminal 15 is/are received through the residential gateway 1 or switch in the AN 13 and retagged to be transmitted into local default VLAN 43, also a VMAC address being introduced in the frames, the VMAC address identifying the terminal 15 and the AN. The assigned VMAC address primarily identifies the terminal 15, but by allocating different portions of the virtual MAC address range to different ANs, as mentioned above, it can also identify the AN 13.
3. A retagged frame or retagged frames from the terminal 15 is/are received in the local VRF 49 of the BRAS 17. An EAPOL-Start packet may specifically be received by the EAP Authenticator, i.e. the PAE, in or connected to the local VRF 49. If a frame including an unauthorized MAC address or VMAC address is received, a new user is detected, the frame is intercepted and given to be processed by the EAP Authenticator such as the unit 56.
4. The EAP Authenticator in the local VRF 49 sends an EAP-Identity-Request to the terminal 15.
5. The terminal 15 responds with an EAP-Identity-Response, including the user's identity in the form of an NAI, as described above.
6. The EAP Authenticator 56 passes the EAP-Identity-Response to the AAA client function 23 located internally in the BRAS 17.
7. The AAA client 23 includes the EAP-Identity-Response in an AAA message and sends the AAA message to the AAA proxy server 27, which may be part of the BRAS 17 as illustrated, or may be co-located with the BRAS.
8. The AAA proxy server 27 recognizes, using the example above, that operator shop No. 1, 3.1, is wanted by retrieving and examining the realm part of the NAI, indicating the user's home operator shop, as supplied by the user in the EAP-Identity-Response packet and in the User-Name attribute in the AAA message. Thus, the AAA proxy server 27 can find the NAI in the User-Name attribute, but theoretically it could also extract it from the EAP-Identity-Request that is encapsulated in the AAA message. In addition, Diameter clients, i.e. AAA clients using the Diameter protocol, also insert the realm part of the NAI in the Destination-Realm attribute, which the AAA proxy server 27 can then use to identify the desired operator shop. The AAA proxy server 27 transmits the AAA request to the AAA server 31 in operator shop No. 1, 3.1.
9. An EAP authentication procedure between the AAA server 31 in operator shop No. 1, 3.1, and the user terminal 15 through the AAA proxy server 27 and the AAA client 23 of the BRAS 17 is performed. The EAP authentication procedure is handled end-to-end between the terminal 15 and the authentication server which is the AAA server 31 of operator shop No. 1, 3.1. Between the AAA client 23 of the BRAS 17 and the AAA server 31 the EAP packets are encapsulated in AAA messages.
10. The BRAS 17 includes a logical function unit 57 (LU) obtaining information that the AAA procedure has been completed and about the operator shop that has been selected. This is done by the AAA server 31 of the selected operator shop informing the AAA client 23, through an AAA message, after the authentication procedure has been successfully finalized, the AAA client 23 in turn informing said logical function 57, and since the AAA proxy server 27 is also informed through the same AAA message, the AAA proxy server can also be the one informing said logical function. The logical function unit 57 instructs the AN 13 to change the existing association between VLANs, using the VMAC address of the terminal 15 to find the correct AN 13. The VMAC address is a locally administered MAC address that is assigned to the terminal 15 and is locally unique in the broadband access network. Hence the assigned VMAC address "belongs to" and identifies the terminal 15, although the terminal itself never sees the VMAC address or is not aware of its existence. As mentioned above, by allocating different parts of the VMAC address range to different ANs, the VMAC address assigned to the terminal 15 can also be used to identify the AN 13 that assigned it to the terminal. The information on the selected operator shop is obviously available inside the BRAS 17 and the above procedure can be performed in various ways, such as:
   a) When the AAA proxy server 27 identifies the selected operator shop, it notifies some other part of the BRAS 17, e.g. the LU 57, of the selection made and which VMAC address it concerns, the latter case requiring that the AAA client 23 includes the VMAC address of the terminal 15 in the AAA message. The LU 57 may receive the operator shop selection information in the form of the realm part of the NAI or some other BRAS internal identifier to which the AAA proxy server 27 has translated the realm part. Then the LU 57 only has to wait for a notification of a successful user authentication before instructing the AN 13 to associate certain VLANs.
   b) The AAA client 23 or the EAP Authenticator, such as the unit 56, passes the realm part of the NAI and the VMAC address to some other part of the BRAS 17, e.g. the LU 57, even before transmitting the first AAA message to the AAA proxy server 27. The LU 57 then only has to wait for an indication of a successful user authentication.
   c) After the AAA client 23 has received, from the AAA server 31 in the selected operator shop, via the AAA proxy server 27, the AAA message including the indication of a successful user authentication, it informs some other part of the BRAS 17, e.g. the LU 57, about the VMAC address of the terminal 15 and the selected operator shop, e.g. in the form of the realm part of the NAI, or some other BRAS internal identifier indicating the selected operator shop. The LU 57 may then, if needed or desired, translate the realm part of the NAI, or other BRAS internal identifier respectively, to some BRAS internal identifier, e.g. a VLAN ID.
   d) When the AAA proxy server 27 receives, from the AAA server 31 of the selected operator shop, the AAA message including the indication of a successful user authentication, it informs e.g. the LU 57 about the VMAC address of the terminal 15, this requiring that the AAA client 23 has previously included the VMAC address in an AAA message, and about the selected operator shop associated with this VMAC address. The selected operator shop can then be indicated as an FQDN (Fully Qualified Domain Name), i.e. the realm part of the NAI, or as a BRAS internal identifier identifying the operator shop. The AAA proxy server 27 should of course also forward the AAA message to the AAA client 23.
11. The AN 13 receives an instruction message such as "Associate the RG port VLAN of VMAC X with VLAN No. 1", where the VMAC address allocated to the terminal 15 is denoted by "X", the RG port VLAN is the VLAN 55 of the RG port 11 to which the terminal identified by VMAC X is connected and it is assumed that the user wants access to operator shop No. 1, 3.1. The AN 13 accordingly changes tagging for VLANs so that frames from the concerned RG port VLAN 55 are tagged for VLAN No. 1 instead of being tagged for the local default VLAN. It can be done by e.g. the AN changing a record in a VLAN association table or generally in some data structure that the AN uses to keep track of associations between VLANs. Such a data structure can be implemented in a variety of ways obvious to one skilled in the art.
12. After the user has become authenticated, the terminal 15 can proceed to acquire an IP address. It will be an IP address from the address range of operator shop No. 1, 3.1. The IP address is supplied by a suitable address server such as an DHCP server 59 in operator shop No. 1, 3.1, e.g. located in the BAS 19. The respective address server, the DHCP server 61.1, in the BRAS 17 will act as a relay agent for performing the assigning of an address, i.e. DHCP, in this procedure. In this case the address server acting as a DHCP relay agent is associated with the VRF No. 1, 47.1, for operator shop No. 1, 3.1. Alternatively the DHCP server 61.1 in the BRAS 17 can allocate IP addresses directly to the terminal 15 from the address range of operator shop No. 1, 3.1. This requires that the DHCP server 61.1 in the BRAS 17 has been given a pool of addresses out of the address range of operator shop No. 1, 3.1.
13. After the terminal 15 has been given an IP address, the user can start traffic using TCP/IP, through VLAN No. 1, 41.1, VRF No. 1, 47.1, and the BAS 19 of operator shop No. 1. For example, the user can receive a web page of the BAS 19 of operator shop No. 1. Such a web page can present services that can be accessed through operator shop No. 1. This can be achieved by e.g. the user's browser having the web page of the selected operator shop set as its start page, such as configured manually by the user according to instructions from the operator shop when the subscription to this operator shop was agreed on. The services can, as illustrated in Fig. 1, include access to the Internet, and services 33 provided by specific service providers from one or more service servers 34.

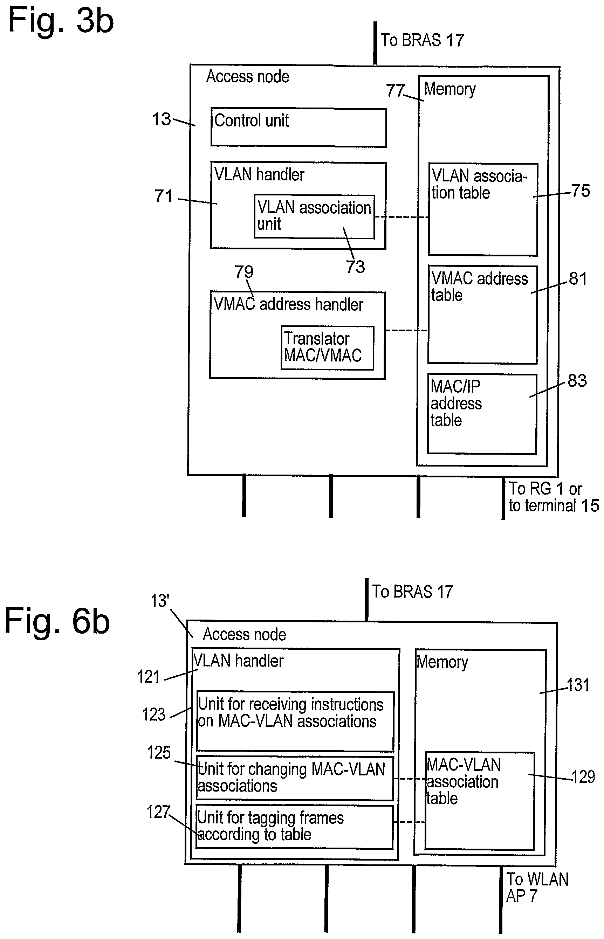

The AN 13 may have at least the following modules/components/functions which may be necessary to perform the operator shop selection and access in this case, see Fig. 3b:
- A VLAN handler 71, including a submodule 73 for receiving instructions of changed association and for changing associations accordingly.
- A VLAN association table, see the example in Table 1 below, stored in a memory place 75 in a memory 77.
- A VMAC address handler 79 including a unit for translating between MAC and VMAC.
- A VMAC address table stored in a memory place 81 in the memory 77.
- An MAC address to IP address table stored in a memory place 83 in the memory 77.

An example of the structure of a VLAN association table is given in Table 1.

**Table 1. VLAN association table for N different RG ports**

| VLAN at the customer premises side | VLAN at the network side |
|---|---|
| RG port VLAN No. 1 | VLAN No. 1 |
| RG port VLAN No. 2 | VLAN No. 1 |
| RG port VLAN No. 3 | Local default VLAN |
| RG port VLAN No. 4 | VLAN No. 2 |
| : | : |
| : | : |
| RG port VLAN No. N | VLAN No. 1 |

The BRAS 17 may have at least the following modules/components/functions that may be necessary to perform the operator shop access in this case, see Fig. 2a:
- A BRAS internal network, such as the inter-VRF network 52, including a connection to or including the local service network 51.
- A local VRF 49 connected in the BRAS internal network.
- An EAP authenticator/PAE such as the unit 56.
- An AAA client 23 directly connected to the local VRF 49 and to the AAA proxy server 27.
- An AAA proxy server 27 connected in the BRAS internal network and to AAA servers 31 in operator shops Nos. 1 and 2, 3.1 and 3.2.
- A dedicated VRF No. 1, 47.1, connected in the BRAS internal network for routing traffic only to and from operator shop No. 1, 3.1, except for certain special cases when traffic can be routed differently. The VRF No. 1 functions as the access router of operator shop No. 1 in the broadband access network 29. From the point of view of operator shop No. 1, 3.1, VRF No. 1 appears as part of or connected in the own network of operator shop No. 1.
- A dedicated VRF No. 2, 47.2, connected in the BRAS internal network for routing traffic only to and from operator shop No. 2, 3.2, except for certain special cases when traffic can be routed differently.
- An association instruction unit or logical function unit LU 57 for monitoring AAA procedures and for instructing ANs 13 to change associations between VLANs.
- A DHCP server 61.1 for operator shop No. 1.
- A DHCP server 61.2 for operator shop No. 2.

### Access through a WLAN AP supporting the virtual AP concept

It can first be assumed that the WLAN AP 7 supports the virtual AP (vAP) concept, i.e. that it has the capability or includes the function of emulating multiple logical APs in a single physical AP, see Fig. 2a. In such a case each operator shop 3.1, 3.2 connected to the broadband access network 29 is also assumed to have "its own" logical AP 63.1, 63.2 with a dedicated SSID being broadcast in beacon messages from the AP. Such a logical AP may be a unit incorporated in the WLAN AP 7, the unit including e.g. a unit for handling the virtual APs and a memory having a memory place for storing required data, such as a suitable list, not shown, see below. Furthermore, the WLAN AP 7 associates each operator shop SSID with the VLAN 41.1, 41.2 dedicated for the respective operator shop, such that all traffic, from authenticated users, pertaining to a certain SSID is passed to the associated VLAN and vice versa. The WLAN AP 7 also has an own or local logical AP 65 and a corresponding SSID associated with the local WLAN AP VLAN 45, which allows a user access to the local service network 51. In Fig. 2a the SSIDs for the operator shops Nos. 1 and 2 are denoted by "SSID 1" and "SSID 2", respectively, and the SSID for the local WLAN AP VLAN 45 is denoted by "SSID local".

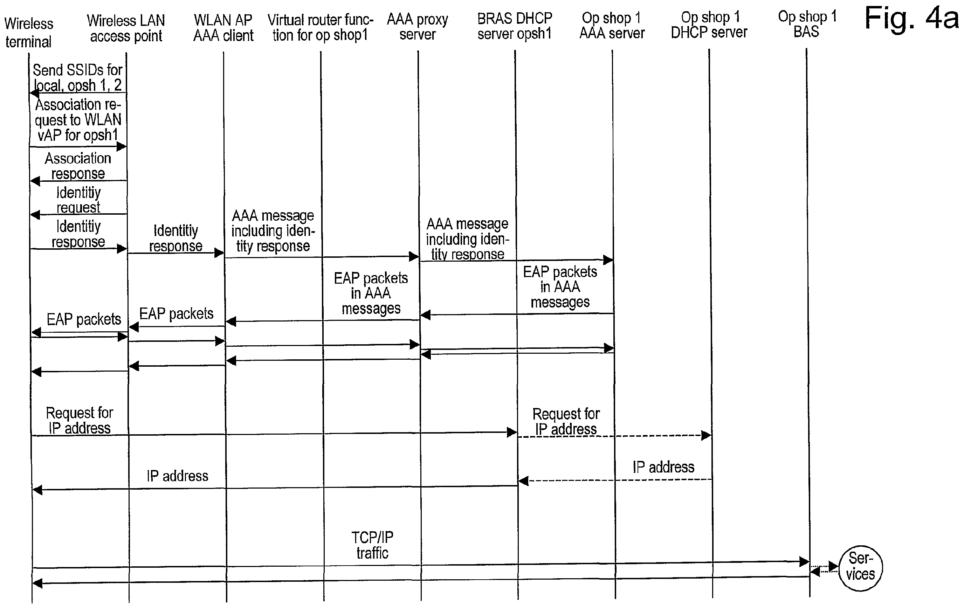

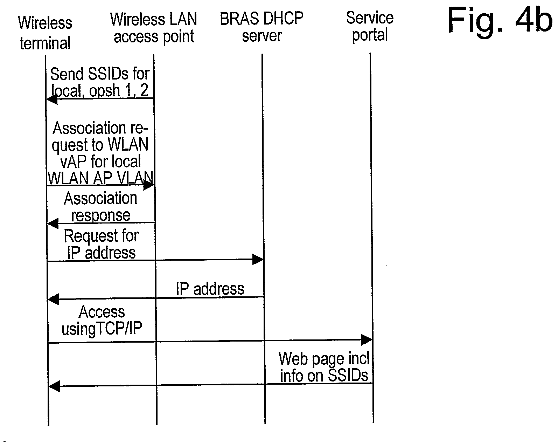

When accessing the broadband access network 29 through a WLAN AP 7 supporting the virtual AP concept, the user must select the SSID associated with his home operator shop, this being one of the operator shops 3.1, 3.2 available through the WLAN AP, see the signal diagram of Fig. 4a, or the SSID associated with the local WLAN AP VLAN 45 for delivery of publicly available services, see the signal diagram of Fig. 4b. The SSID could preferably be a character string that is easily interpreted by human beings, e.g. the name of the desired operator shop or its realm-FQDN (Fully Qualified Domain Name). Then the terminal 15' can scan for broadcast SSIDs and present the result to the user of the terminal, who can then manually select the one belonging to his home operator shop. It is also possible to configure the terminal to search for and attach to (i.e. associate with) a certain SSID.

If the SSID information is not enough for the user to select an operator shop, i.e. to select one of the SSIDs, he may attach to (i.e. associate with) the SSID associated with the local WLAN AP VLAN and obtain more information, about available operator shops and their associated SSIDs, from the service portal 54 before manually selecting one of the SSIDs associated with operator shops 3.1, 3.2, see Fig. 4b. In the local WLAN AP VLAN 45 the user is allowed access and can acquire an IP address without a prior user authentication.

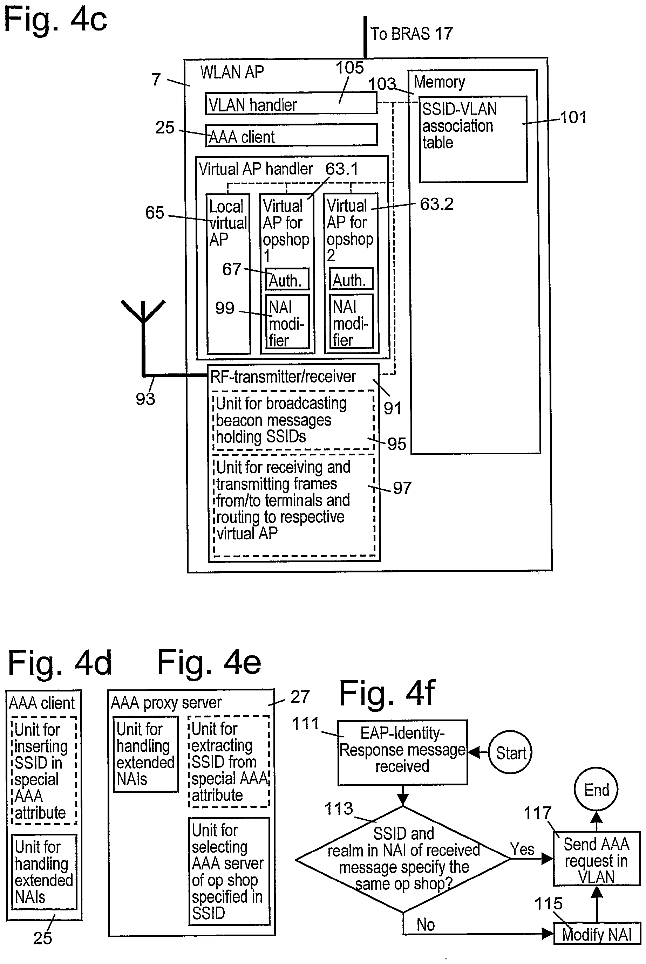

When the user attaches to the WLAN AP 7 using an SSID selected among those associated with available operator shops 3.1, 3.2, the AAA request resulting from the EAP authentication procedure is routed, via the BRAS AAA proxy server 27, to the operator shop 3.1 or 3.2 that is associated with the SSID, irrespective of what NAI the terminal 15' supplies. If the NAI does not indicate the operator shop associated with the selected SSID in the realm part, the WLAN AP 7 can either reject the access request or force the AAA request to be routed to the operator shop associated with the selected SSID. To force the AAA request to be routed to the operator shop 3.1 or 3.2 associated with the selected SSID, despite another realm indicated in the NAI, the WLAN AP 7 can either modify the received NAI into an extended format that includes an intermediate network realm or communicate the selected SSID in some suitable way, e.g. included in a vendor specific AAA attribute, such as using some suitable protocol extension. In the latter case, if the SSID is passed to the AAA proxy server 27 in some way such as in an AAA attribute, the AAA proxy server would use the SSID, instead of the realm part of the NAI, to direct the AAA message to the AAA server 31 of the selected operator shop, this requiring that the AAA client 25 and the AAA proxy server are provided with the corresponding additional function, see Figs. 4d and 4e. In the former case, called the extended NAI method, the extended NAI has the general format
"home-realm/name@intermediate-realm" or
"home-realm!name@intermediate-realm"
where "home-realm" is the realm of the home network/home operator shop, "intermediate-realm" is the realm of a selected intermediate network/intermediate operator shop and "name" is the user's username. A field or name separator "/" or "!" or possibly some other suitable symbol or character is used to differentiate between the "extra" realm which in this case is the original realm, and the user name. Such extended NAls are already used by the WLAN roaming broker iPass and it is planned that they will be used in the 3GPP-WLAN interworking. In this specific case the format of the extended NAI, into which the WLAN AP may modify the received NAI, would be
"realm-supplied-in-NAI/name@op-shop-realm-associated-with-selected-SSID" or
"realm-supplied-in-NAI!name@op-shop-realm-associated-with-selected-SSID"

The modification of the NAI to an extended format can be executed by a special unit, a NAI modifier unit 99 in or connected to the respective virtual AP 63.1 or 63.2, see Fig. 4c. The procedure for modifying the NAI to an extended format is illustrated in the flow chart of Fig. 4f, where, after an EAP-Identity response message has been received in a virtual AP, see step 111, the SSID specified in a previous request for "associating" from the terminal 15' and also unique for the respective virtual AP is in a step 113 compared to the realm of the NAI included in said response message. If the result of the comparison is that two different operator shops are specified, the NAI is modified in a step 115. Finally, whatever the result of the comparison is, in a step 117 an AAA request is transmitted to the AAA proxy server 27 of the BRAS 17.

Thus, it has been described how the AAA routing can be modified to ensure that it routes according to the selected SSID, even if the user has supplied a NAI that does not indicate the operator shop associated with the selected SSID, where the SSID selection has precedence over the NAI in this case. Two ways are described: one way is to base the AAA routing explicitly on the selected SSID, which requires that the SSID is being included in an AAA attribute, and the other way is to modify the NAI in a way that makes the AAA routing direct the AAA messages to the correct operator shop 3.1 or 3.2, i.e. the one associated with the selected SSID. The user may e.g. erroneously supply a NAI that does not belong to the operator shop of the selected SSID, such as by a mistake made during SSID selection or during manual NAI entering. In any case it is ensured that access using the virtual AP 61.1 or 61.2, with its associated SSID, of one operator shop 3.1, 3.2 is not handled by the AAA server 31 of another operator shop.

Following a successful user authentication the user can proceed to acquire an IP address via DHCP to enable subsequent IP communication.

The different steps in accessing an operator shop in the case where the user through his terminal 15' chooses access to a WLAN virtual AP 63.1, 63,2 associated with an operator shop 3.1, 3.2 are summarized below with reference to the signal diagram of Fig. 4a.
1. The WLAN AP 7 is transmitting SSIDs for a plurality of WLAN virtual APs associated with VLANs 41.1, 41.2, 45 connected in the BRAS 17.
2. The terminal 15' transmits a request for "associating" with the WLAN virtual AP 63.1, 63.2 for a selected SSID among those associated with operator shops Nos. 1 and 2, 3.1 and 3.2.
3. The selected WLAN virtual AP 63.1 or 63.2 transmits an association response to the terminal 15'.
4. The WLAN virtual AP 63.1, 63.2 transmits, thereby starting an EAP procedure, from its EAP Authenticator, symbolically drawn as item 67 in Fig. 2a, an EAP-Identity-Request to the terminal 15'.
5. The terminal 15' responds with an EAP-Identity-Response, including the user's identity in the form of an NAI.
6. The EAP Authenticator 56 passes the EAP-Identity-Response to the AAA client function 25 of the WLAN AP 7. Before or in this step, the procedure described above for including the SSID in an AAA attribute or for a possible modification of the NAI supplied by the user can be executed.
7. The AAA client function 25 in the WLAN AP 7 transmits the AAA request, including the NAI supplied by the user in the response and possibly the SSID of the selected WLAN virtual AP 63.1, 63.2, to the AAA proxy server 27 in BRAS.
8. The AAA proxy server 27 recognizes, from the SSID that may be included in the AAA request or from the realm part of the NAI, that operator shop No. 1, 3.1, is wanted and transmits the AAA request to the AAA server 31 in operator shop No. 1.
9. An EAP authentication procedure between the AAA server 31 in operator shop No. 1 and the user terminal 15' through the AAA proxy server 27 of the BRAS 19 and the AAA client 25 of the WLAN AP 7 is executed. The EAP procedure is handled end-to-end between the terminal and the authentication server which is the AAA server. Between the AAA client 25 and the AAA server 31 the EAP packets are encapsulated in AAA messages.
10. The WLAN AP 7 is informed that the authentication has been successfully completed, through an AAA message which goes all the way to the AAA client 25 in the WLAN AP. The WLAN AP then allows frames from and to the concerned terminal 15' to be forwarded. The selected SSID already indicates to which VLAN, in this example VLAN No. 1, 41.1, the uplink frames should be forwarded. No VMAC address is needed. Source integrity protection using the mechanisms of IEEE 802.11i ensures that no other terminal can use the same MAC address for communication through the WLAN AP 7.
11. The WLAN AP 7 starts forwarding frames from and to the terminal 15' using VLAN No. 1 by tagging frames accordingly.
12. After the user has been authenticated, the terminal 15' can proceed to acquire an IP address.

This will be an IP address from the address range of operator shop No. 1. It is supplied by the DHCP server 59 in operator shop No. 1, e.g. located in the BAS 19. The respective DHCP server 61.1 in the BRAS 17 will act as a DHCP relay agent in this procedure. In this case the DHCP server acting as a DHCP relay agent is associated with the VRF No. 1, 47.1, for operator shop No. 1. Alternatively, the respective DHCP server 61.1 in the BRAS can allocate the IP address out of the address range of operator shop No. 1 without involving any DHCP server in operator shop No. 1. In that case the respective DHCP server 61.1 of the BRAS has to have been given a dedicated pool of IP addresses out of the address range of operator shop No. 1. 13. After the terminal 15' has been given an IP address, the user can start traffic using TCP/IP, through VLAN No. 1, 41.1, VRF No. 1, 47.1, and the BAS 19 of operator shop No. 1, 3.1. For example, the user can receive a web page of the BAS of operator shop No. 1. Such a web page can present services that can be accessed through operator shop No. 1.

The WLAN AP 7 may have at least the following modules/components/functions that may be necessary to perform the operator shop access in this case, see Fig. 4c:
- An RF transmitter/receiver 91 connected to an antenna 93 and including a unit 95 for transmitting broadcast messages including SSIDs and a unit 97 for receiving and transmitting frames to terminals 15' that have already established a connection with the WLAN AP and that want to establish a connection.
- A local virtual AP function 65.
- A virtual AP function 63.1 for operator shop No. 1, 3.1 holding a NAI modifier unit 99.
- A virtual AP function 63.2 for operator shop No. 2, 3.2 holding a NAI modifier unit 99.
- An SSID-VLAN association list stored in a memory place 101 in a memory 103.
- A VLAN handler 105.
- An AAA client 25.
- An authenticator function/entity 67.

The BRAS 17 may have at least the following modules/components that may be necessary to perform the operator shop access in this case:
- A BRAS network including connection to/including the local service network 51.
- A local VRF 49 connected in the BRAS internal network.
- An AAA client 23 directly connected to the local VRF 49 and capable of communicating with the AAA proxy server 27.
- An AAA proxy server 27 connected in/to the BRAS network and capable of communicating with the AAA servers 31 in operator shops Nos. 1 and 2 when required, having security relations with them.
- A VRF No. 1, 47.1, connected in the BRAS network for routing traffic only to/from operator shop No. 1, except for certain special cases when traffic can be routed differently. The VRF No. 1 functions as the access router of operator shop No. 1 in the broadband access network 29. From the point of view of operator shop No. 1, VRF No. 1 appears as part of the own network of operator shop No. 1.
- A VRF No. 2, 47.2, connected in the BRAS network for routing traffic only to/from operator shop No. 2, except for certain special cases when traffic can be routed differently.
- A DHCP server 61.1 for operator shop No. 1.
- A DHCP server 61.2 for operator shop No. 2.

The different steps in accessing an operator shop in the case where the user chooses access to a WLAN virtual AP 65 associated with the local WLAN AP VLAN 45 are summarized below with reference to the signal diagram of Fig. 4b.
1. The WLAN AP 7 is transmitting SSIDs for a plurality of WLAN virtual APs associated with VLANs 41.1, 41.2, 45 connected in the BRAS 17.
2. The terminal 15' transmits a request for "associating" with the WLAN virtual AP 65 for the SSID associated with the local WLAN AP VLAN 45.
3. The selected WLAN virtual AP 65 transmits an association response to the terminal 15'.
4. The terminal 15' proceeds to acquire an IP address, the WLAN AP 7 forwarding frames between the terminal and the local WLAN AP VLAN 45. The IP address is acquired from a DHCP server 62 in the BRAS 17.
5. After the terminal 15' has acquired an IP address, the terminal accesses the service portal 54, via the local VRF 49. If the terminal tries to access some other web server, the terminal may be redirected to the service portal anyway by the HyperText Transfer Protocol (HTTP) redirect function.
6. The service portal 54 transmits information about available operator shops 3.1, 3.2 and their associated SSIDs to the terminal 15' to be read by the user.
7. The terminal 15' disassociates from the WLAN virtual AP 65 for local services, unless the user wanted to only access local services. The user then manually selects a new SSID, this time one that is associated with an available operator shop 3.1, 3.2, and then the same steps are used as described above when the user chooses access to a WLAN virtual AP 63.1, 63.2 associated with an operator shop 3.1, 3.2. Thus, in this case the information obtained at the service portal 54 is used in a very rudimentary way: the user reads the information and uses it for manual SSID selection. There is no automation in this reselection.

The required modules/components/functions of the WLAN AP 7 are the same as in the first case but the modules/components of the BRAS 17 have to also include a service portal 54 connected in the BRAS network and a DHCP server 62, e.g. associated with the local VRF 49.

### Access through a WLAN AP not supporting the virtual AP concept

If the WLAN AP does not support the virtual AP concept and can only present a single SSID to possible users, the connection process is somewhat similar to the procedure used for access through a CPN 5, as described above. In this case an AN 13' is used that is connected between the WLAN AP 7 and the BRAS 17, see Fig. 2b. Furthermore, the VLANs 41.1, 41.2 and 43 illustrated in Fig. 2a that extend all the way to the WLAN AP, i.e. VLAN No. 1, VLAN No. 2 and the local WLAN AP VLAN, do not have to encompass the link between the AN and the WLAN AP, but instead end in the AN 13' as illustrated in Fig. 2b. No VLAN separation is needed between the WLAN AP 7 and the AN 13'. VLAN separation means that different parts of the traffic are separated from each other using VLAN tagging, but physically the traffic is mixed. Only logically the traffic is treated as belonging to different virtual LANs.

The WLAN AP 7 is assumed to continuously broadcast an SSID belonging to or representing itself and hence also, basically, for accessing the local service network 51. The terminal 15' receives the SSID and the user selects to attach to the WLAN AP. When the user attaches to the WLAN AP 7, the AAA request resulting from the EAP authentication procedure is routed to the BRAS AAA proxy server 27, that determines from the realm part of the NAI, which should indicate either the realm of operator shop No. 1 or the realm of operator shop No. 2, whether to route the request to the AAA server 31 of operator shop No. 1 or to the AAA server 31 of operator shop No. 2. The AAA client 25 of the WLAN AP includes the MAC address of the terminal 15' in an AAA attribute, e.g. the RADIUS Calling-Station-Id attribute, which is also reused in the Diameter protocol, or a vendor specific attribute, in the AAA request sent to the AAA proxy server 27.

During, or immediately following, the authentication procedure the AAA server 31 of the respective operator shop 3.1, 3.2 provides one or more session keys, possibly produced as a byproduct of the authentication procedure, to the WLAN AP 7 to be used for the cryptographic protection mechanisms of the proposed standard IEEE 802.11i. The mechanisms of the proposed standard IEEE 802.11i cryptographically ties the MAC address of the terminal 15' that the user is currently using to the authenticated user for this particular session.

Following a successful user authentication the BRAS 17 instructs the AN 13', e.g. via SNMP or some other protocol that the BRAS 17 can use to control ANs, to associate the user's current MAC address with the service VLAN 41.1, 41.2 of the selected operator shop, e.g. VLAN No. 1 if operator shop No. 1 was selected. Then the terminal 15' can proceed to acquire an IP address using DHCP to enable subsequent IP communication.

Before associating the user's current MAC address with a VLAN, the AN 13' preferably sends packets received from the WLAN AP 7 with the user's MAC address as the source address to the local WLAN AP VLAN 45 that provides access to the local service network 51, or alternatively, it can discard such packets. The user may have indicated, at the start of the EAP procedure that access only to the local service network is desired by supplying a special NAI, including a realm part belonging to the broadband access network 29, dedicated for this purpose, and the AN 13' could keep sending, or alternatively be instructed to do so, packets received from the WLAN AP 7 with the user's MAC address as the source address to the local WLAN AP VLAN 45. Observe that for access solely to the local service network 51 via the local WLAN AP VLAN no authentication is needed and no IEEE 802.11i protection procedure would be used over the radio interface.

This procedure only requires a standard behavior of the WLAN AP 7 and can thus be used with available off-the-shelf APs.

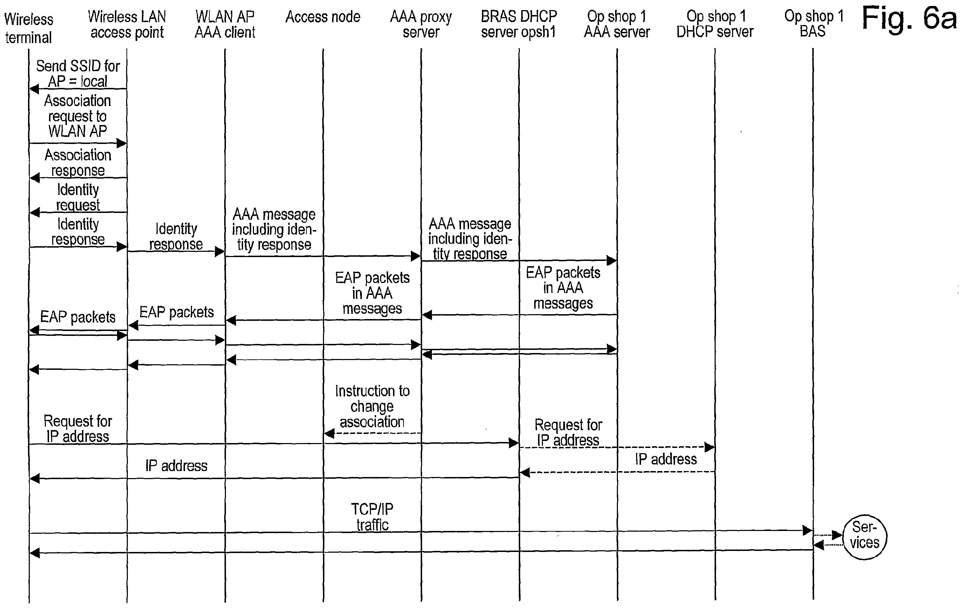

The different steps in accessing an operator shop 3.1, 3.2 in the case where the WLAN AP 7 does not support WLAN virtual APs are summarized below with reference to the signal diagram of Fig. 6a.
1. The WLAN AP 7 is transmitting only its own SSID, denoted "SSID local" in Figs. 2b and 6a.
2. The terminal 15' transmits a request for "associating" with the WLAN AP 7.
3. The WLAN AP 7 transmits an association response to the terminal 15'.
4. The WLAN AP 7 transmits, thereby initiating EAP procedure, from its EAP Authenticator, symbolically indicated as item 67, an EAP-Identity-Request to the terminal 15'.
5. The terminal 15' responds with an EAP-Identity-Response, including the user's identity in the form of an NAI.
6. The EAP Authenticator 67 passes the EAP-Identity-Response to the AAA client function 25 of the WLAN AP 7.
7. The AAA client 25 in the WLAN AP 7 encapsulates the EAP packet with the NAI in an AAA message, including also the MAC address of the terminal 15' in the same AAA message, and sends the AAA message to the AAA proxy server 27 in the BRAS 17.
8. The AAA proxy server 27 looks at the realm part of the NAI and determines to which AAA server the AAA message is to be forwarded, in the example operator shop No. 1, 3.1. The AAA proxy server transmits the AAA request to the AAA server 31 in operator shop No. 1. The AAA proxy server 27 also retrieves the MAC address of the terminal 15' from the AAA message and stores it in the BRAS 17 for future use, such as in a memory associated with the logical function unit 57. This future use is the instructions that will be sent to the AN 7 following a successful authentication.
9. The EAP authentication procedure is executed between the user terminal 15' and the AAA server 31 in the selected operator shop, i.e. the operator shop indicated by the realm part of the NAI, in this example operator shop No. 1, through the AAA proxy server 27 and the AAA client 25 of the WLAN AP 7.
10. After the user has been successfully authenticated the respective AAA server 31 sends an AAA message indicating the successful authentication.
11. This message is received by the AAA proxy server 27 and is relayed to the AAA client 25 in the WLAN AP 7, this being a standard AAA procedure. Thus, both the BRAS 17 and the WLAN AP 7 are aware of the successful authentication. The AAA server 31 also sends, e.g. in the same message as the success indication, one or more keys to the WLAN AP 7 to be used for cryptographic protection of the traffic between the WLAN AP and the terminal 15'.
12. Then the BRAS 17 instructs the AN 7 to associate the MAC address of the terminal 15' with the VLAN 41.1, 41.2 of the selected operator shop, in the example VLAN No. 1, which is associated with operator shop No. 1. Since the MAC address is cryptographically tied to the authenticated user through the IEEE 802.11i mechanisms, this association is all that is needed and safe against MAC address spoofing. No VMAC address is needed in this case. Since the AAA client 25 in the WLAN AP 7 is used, the BRAS 17 already knows which WLAN AP the terminal 15' is accessing and thus which AN to instruct. The instructing of the AN 13' may be performed by a BRAS internal logical function unit 57 (LU). The information about the MAC address and the selected operator shop, and thus the VLAN to which it is to be associated is obviously available in the BRAS, since this information has been received and forwarded by the AAA proxy server 27. Typically the LU 57 obtains this information from the AAA proxy server 27. The above procedure can be performed in various ways, such as:
   a) When the AAA proxy server 27 identifies the selected operator shop, it notifies some other part of the BRAS 17, e.g. the LU 57, of the selection made and which MAC address and which AN it concerns. The LU 57 may receive the operator shop selection information in the form of the realm part of the NAI or some other BRAS internal identifier to which the AAA proxy server 27 has translated the realm part, e.g. a VLAN ID. Then the LU 57 only has to wait for a notification of a successful user authentication before instructing the AN 13' to associate the MAC address that the authenticated user is currently using with the service VLAN, 41.1, 41.2, of the concerned operator shop, 3.1, 3.2, i.e., in this example, associate the MAC address with VLAN No 1, 41.1, associated with operator shop No. 1, 3.1.
   b) When the AAA proxy server 27 has received, from the AAA server 31 in the selected operator shop, the AAA message including the indication of a successful user authentication, it informs some other part of the BRAS 17, e.g. the LU 57, about the MAC address of the terminal 15' and the selected operator shop, e.g. in the form of the realm part of the NAI, or some other BRAS internal identifier indicating the selected operator shop. Then, before sending the instructions to the AN 13' the LU 57 may, if needed or desired, translate the realm part of the NAI, or the other BRAS internal identifier respectively, to some BRAS internal identifier, e.g. a VLAN ID.
13. The WLAN AP 7 starts forwarding frames from and to terminal 15'.
14. The AN 13' starts forwarding frames pertaining to the concerned terminal 15'. This means forwarding uplink frames with the MAC address of the terminal as the source address to VLAN No. 1, 41.1, in the example and forwarding downlink frames with the MAC address of the terminal as the destination address from VLAN No. 1 to the WLAN AP 7.
15. After the user has been authenticated, the terminal 15' can proceed to acquire an IP address, in this case an IP address from the address range of operator shop No. 1. This is in the example supplied by a DHCP server 59 for operator shop No. 1, e.g. located in the respective BAS 19. A DHCP server 61.1, 61.2 in the BRAS 17 will act as DHCP relay agent in this procedure. In this case the DHCP server 61.1 acting as DHCP relay agent is associated with the VRF No. 1 for operator shop No. 1. Alternatively, a DHCP server 61.1 in the BRAS can allocate the IP address out of the address range of operator shop No. 1 without involving a DHCP server in operator shop No. 1. In that case the BRAS DHCP server has to have been given a dedicated pool of IP addresses out of the address range of operator shop No. 1.
16. After the terminal 15' has been given an IP address, the user can start traffic using TCP/IP, through VLAN No. 1, 41.1, VRF No. 1, 47.1, and the BAS 19 of operator shop No. 1, 3.1. For example, the user can receive a web page of the BAS of operator shop No. 1. Such a web page can present services that can be accessed through operator shop No. 1.

The AN 13' may have at least the following modules/components/functions that may be necessary to perform the operator shop access in this case, see Fig. 6b:
- A VLAN handler 121, including a submodule or unit 123 for receiving instructions of which VLAN to be used for traffic with each connected terminal 15', a unit 125 for changing the MAC-VLAN association list and a unit 127 for tagging frames according to the respective record of said list.
- A MAC address-VLAN association list that may be designed basically as illustrated by Table 1 above but including MAC addresses instead of RG port VLANs and stored in a memory place 129 in a memory 131.

The BRAS 17 may have at least the following modules/components/functions that may be necessary to perform the operator shop access in this case:
- A BRAS network including connection to/including the local service network 51.
- A local VRF 49 connected in the BRAS network.
- An AAA proxy server 27 connected in the BRAS network and capable of communicating with the AAA servers 31 in operator shops Nos. 1 and 2.
- A VRF No. 1, 47.1, connected in the BRAS network for routing traffic only to/from operator shop No. 1, except for certain special cases when traffic can be routed differently.
- A VRF No. 2, 47.2, connected in the BRAS network for routing traffic only to/from operator shop No. 2, except for certain special cases when traffic can be routed differently.
- An association instruction unit or logical function unit LU 57 for monitoring the AAA procedure and for instructing ANs 13' to direct frames to a specified VLAN 41.1, 41.2.
- A DHCP server 61.1 for operator shop No. 1.
- A DHCP server 61.2 for operator shop No. 2.

A procedure in which no AN, such as 13', is used between the BRAS 17 and a WLAN AP 7 that does not support virtual APs is also conceivable, although it may be less preferable. In such a procedure, the BRAS must send its MAC address-VLAN association instructions to the WLAN AP, instead of to the non-existing AN, and the WLAN AP must be capable of associating the user's MAC address with one out of several VLANs, i.e. VLAN No. 1, VLAN No. 2 and the local WLAN AP VLAN. In this procedure the VLANs, VLAN No. 1, VLAN No. 2 and the local WLAN AP VLAN, extend all the way to the WLAN AP 7.

### Access through an IPsec tunnel

A layer 3 procedure, based on IPsec tunnels, can also be used by a user/terminal accessing the broadband access network through e.g. a WLAN AP 7. Such a layer 3 procedure based on an IPsec tunnel between the terminal 15, 15' and a node in the broadband access network 29, as will now be described, can be seen as either a supplement to or a replacement of the layer 2 procedures described above.

The layer 2 procedures described above cannot be used in those cases where a plurality of users connect through the same general RG port 11, e.g. through a WLAN AP connected to or integrated with the RG 1 or in the case where there is no separate RG port available. In addition, the user may have a router 141 with an NAT 143 connected to the RG 1, so that several devices 15/users can connect to the NAT using the same IP address allocated from the local network 5, see Fig. 2c. Such a home based NAT, which is quite common, makes a layer 2 solution even less feasible. A home based WLAN AP and a router including an NAT may also be integrated in a single device. Thus, in these cases a layer 3 procedure is required. However, the layer 3 access procedure as described herein is a general solution that can be used in all cases, whether the user connects through a CPN 5 or a public WLAN AP 7.

In a basic case it can be assumed that a roaming user connects through an RG port such as 11. This is a case where a layer 3 solution is needed: the user visits a friend, hence she/he is roaming, the friend's CPN 5 being connected to a broadband access network 29 that is connected to the user's home operator shop 3.1 or 3.2. Hence this is a case where the user is accessing his "home broadband access network". It is assumed that there is no separate RG port available for the roaming user through which the user can connect using a layer 2 procedure. Instead the roaming user uses an RG port 11 which is already being used by her/his friend and which thus already is associated with a service VLAN 41.1, 41.2, i.e. VLAN No. 1 or VLAN No. 2. Since all traffic via this RG port will pass through the associated service VLAN, due to the VLAN association in the AN 13, the user/terminal 15 will have to establish the IPsec tunnel through this service VLAN, even though the IPsec tunnel may be used to associate the user/terminal with another operator shop, i.e. the roaming user's home operator shop, instead of that associated with the traversed service VLAN.

However, the user does not have to be roaming to use the IPsec tunnel procedure for establishing an IPsec tunnel through one of the service VLANs. Another case is for instance a user having subscriptions with two different operator shops, e.g. operator shops Nos. 1 and 2, 3.1 and 3.2, connected to the same broadband access network 29. In that case the user may have used a layer 2 procedure as described above to associate an RG port 11 with the service VLAN 41.1 of one of the operator shops, e.g. operator shop No. 1, and then the user decides that he also wants to access some service in another operator shop, e.g. operator shop No. 2. The user may then use the layer 3 procedure and establish an IPsec tunnel via the service VLAN 41.1 in order to access operator shop No. 2. However, this case is quite demanding for the operating system of the terminal 15, and possibly also for the applications running on the terminal, since the operating system has to be capable of handling multiple IP addresses and the applications may have to deal with source address selection.

It is also possible to establish the IPsec tunnel via an RG port 11 that is associated with the local default VLAN 43, or via a public WLAN AP 7 and one of the service VLANs 41.1, 41.2, or via a public WLAN AP 7 and the local WLAN AP VLAN 45, but the case where the IPsec tunnel is established via one of the service VLANs 41.1, 41.2 may be of greater interest, even though the mechanisms are the same or at least quite similar to each other.

In the basic case mentioned above the user is accessing the broadband access network 29 through another user's CPN 5, and hence the user is roaming. This should be distinguished from the case involving roaming to a foreign broadband access network, i.e. to a broadband access network that has no connection to the user's home operator shop, the latter case described in particular sections below.

Thus, all the cases that will now be discussed deal with a user accessing his "home broadband access network", this defined here as a broadband access network 29 that has a connection to the user's home operator shop (3.1, 3.2). Hence, a roaming user is assumed to connect through an RG port 11 which is already associated with an authenticated connection towards one of the operator shops 3.1, 3.2, i.e. from the user terminal 15 an IPsec tunnel is in the connection operation being established through the RG port through one of the service VLANs, i.e. VLAN No. 1 or VLAN No. 2. As has already been mentioned, it is also possible to establish the IPsec tunnel through an RG port that is associated with the local default VLAN 43, or via a public WLAN AP 7 and a service VLAN or the local WLAN AP VLAN 45. When the IPsec tunnel has been established through the local default VLAN 43, it passes an RG 11, an AN 13, the local default VLAN 43 and the local VRF 49. When the IPsec tunnel has been established through a public WLAN AP 7 and a service VLAN 41.1, 41.2, it passes a WLAN AP, possibly an AN 13', depending on whether an AN is used for the WLAN AP case, a service VLAN and the VRF 47.1, 47.2 associated with the respective service VLAN. When the IPsec tunnel has been established through a public WLAN AP 7 and the local WLAN AP VLAN 45, it passes a WLAN AP, possibly an AN 13', depending on whether an AN is used for the WLAN AP case, the local WLAN AP VLAN and the local VRF 49. The end points of the IPsec tunnel may be the same in all these cases, i.e. in the local VRF 49, or possibly in a dedicated tunnel endpoint/termination device 145, in a dedicated VRF 47.1 or 47.2, or in the BAS 19 of an operator shop 3.1, 3.2, as will be discussed hereinafter.

The most straightforward layer 3 procedure is that the IPsec tunnel is established between the terminal 15, 15' and the BAS 19 in the concerned operator shop 3.1, 3.2. This procedure is one of the alternatives that will be described hereinafter, but it suffers from a number of deficiencies.

In a first case the IPsec tunnel 147' to the BAS 19 of an operator shop is established via another operator shop. For the access cases of Figs. 2a and 2c the IPsec tunnel can e.g. extend from the terminal 15 via the RG 1, the AN 13, the VRF No. 1 and the operator shop No. 1 and then across the Internet 149 to the BAS 19 of operator shop No. 2, see Fig. 2e. However, this procedure is suboptimal, both from charging and routing points of view, since the packets of the IPsec tunnel are not given any special treatment. These packets, just like any packets sent through an RG port 11 associated with operator shop No. 1, are forwarded by VRF No. 1 to operator shop No. 1 and then find their way to the BAS 19 of operator shop No. 2 across the Internet 149. Thus, the "another operator shop", via which the IPsec tunnel 147' is undesirably established, is the operator shop with which the concerned RG port is currently associated.

In a second case the IPsec tunnel 147" is extracted and routed internally in the broadband access network 29 up to the BAS 19 of the desired operator shop, see Fig. 2f, this avoiding the drawbacks of the first case. This means that the packets that are used to establish the IPsec tunnel and the packets constituting the IPsec tunnel 147" are specially treated, so that these packets are not routed through the operator shop associated with the respective VRF, in the example VRF 47.1, i.e. not through operator shop No. 1 in the above example, but instead find their way to the destination BAS 19, i.e. the BAS of operator shop No. 2 in the above example, through the BRAS 17 and the VRF dedicated for the destination operator shop, VRF No. 2, 47.2, in the above example. In practice, and in this example, this means that VRF No. 1 must have an entry in its routing table, such as a table stored at a memory place 150, see Fig. 2f, for each IP address - there may be one or multiple IP addresses for each BAS 19 - that is used for IPsec tunnel endpoints in the BAS of operator shop No. 2. The IP addresses that are used in the BAS as possible IPsec tunnel endpoint addresses are obviously included in the address range of the considered operator shop, operator shop No. 2 in the example. Such routing table entries should point towards VRF No. 2. The result is that VRF No. 1 will send packets addressed to a "tunnel endpoint address" indicating or pointing to the BAS 19 of operator shop No. 2 to VRF No. 2 instead of sending them to operator shop No. 1, this procedure executed by the routing unit/IP address handler 150', searching, for the IP address of each received packet, the matching entries in the routing table stored in memory place 150, this table having address entries such that packets destined to these addresses are routed to the respective dedicated VRF 47.1, 47.2. A routing table entry for a single IP address can also be called a "host route".

The table below is a general example of a routing table. Although the exact implementation and representation of a routing table can vary between different systems, in general the properties of the routing table may adhere to this example.

| **Destination** | **Netmask** | **Next hop** | **Interface** |
|---|---|---|---|
| 192.68.8.0 | 255.255.255.0 | 192.68.12.2 | 192.68.12.1 |
| 192.68.6.0 | 255.255.255.0 | 0.0.0.0 | 192.68.6.1 |
| *192.68.3.4* | *255.255.255.255* | *192.68.12.3* | *192.68.12.1* |
| 192.68.3.0 | 255.255.255.0 | 192.68.6.2 | 192.68.6.1 |
| 192.68.2.0 | 255.255.255.0 | 192.68.6.2 | 192.68.6.1 |
| *192.68.1.27* | *255.255.255.255* | *192.68.12.2* | *192.68.12.1* |
| 192.68.1.0 | 255.255.255.0 | 192.68.4.1 | 192.68.4.2 |
| 192.44.0.0 | 255.255.0.0 | 192.68.4.1 | 192.68.4.2 |
| : | : | : | : |
| : | : | : | : |
| 0.0.0.0 | 0.0.0.0 | 192.68.6.2 | 192.68.6.1 |

Each row in the table represents a table entry. The contents in fields "Destination" and "Netmask" of an entry together define which addresses that match the entry. The netmask specifies how many of the bits of the destination that are valid and should be used when matching addresses for routing. A netmask of 255.255.255.0 means that the 24 first bits of the destination field are valid, because each number of the netmask represents 8 bits.

The field "Next hop" of an entry holds the IP address of the next hop router to which packets with destination addresses matching the entry should be forwarded. If the next hop field is 0.0.0.0, this indicates that the destination is located on one of the networks directly attached to the router itself, i.e. a packet matching the entry does not have to be forwarded to another or next hop router, since its destination is located on a network attached directly to the router itself to which the routing table is attached.

The field "Interface" of an entry indicates on which of the own interfaces of the router the packet is to be forwarded. The address indicated in the field "Interface" is the IP address assigned to the concerned interface.

A host route is an entry, for which the netmask is set to 255.255.255.255, i.e. all the 32 bits of the destination field are valid, indicated by italics in the table. This means that only a single address will match the entry, e.g. addresses 192.68.3.4 and 192.68.1.27 respectively for the two host route examples in the table.

When searching for an entry that matches a packet to be forwarded, the router compares the destination address of the packet with the entries in the table. Specifically, when comparing the destination address of the packet with an entry, the router compares the destination address with the destination field of the entry, but in this comparison it uses only the number of bits specified by the content of the field "Netmask" of the entry. That is, if the content of the field "Netmask", for example, is 255.255.255.0, the router compares the 24 first bits of the destination address to the 24 first bits of the content of field "Destination" of the entry, whereas if content of the field "Netmask" is 255.255.255.255, the router compares the complete destination address (32 bits) to the full 32 bits of the content of field "Destination" of the entry. The principle that the router uses for searching the table is a so-called "longest-match-first" principle. This means that if more than one entry matches the destination address of a packet, the router will choose the entry that has the largest number of matching bits, i.e. the one of the matching entries that has a content of the field "Netmask" that indicates the largest number of bits. As an example, a packet having a destination address 192.68.3.4 would match both the third and the fourth entry in the example of a routing table above. The router would then choose the third entry, because that entry matches 32, i.e. all, of the bits of the destination address, whereas the fourth entry only matches 24 bits of the destination address.

The entry at the end of the table, for which both the contents of the fields "Destination" and "Netmask" are set to 0.0.0.0, represents the default route. This is the route that is used for all packets that do not match any other entry in the table.

A routing table may contain more fields for each entry than the fields included in the example above. Such additional entries may further characterize the routes. It is for example common to have a metric field, indicating a "cost" for the route, e.g. in terms of the number of hops to the destination. The metric field may be used when choosing between alternative routes to the same destination.

The term "routing it internally" used above means in particular that the packets of the IPsec tunnel 147", as well as the packets that are used in establishing the IPsec tunnel, are routed in the BRAS 17, as described above from one VRF, VRF 47.1 in the example, through the BRAS to another VRF, VRF 47.2 in the example, and then further to the BAS 19 of the operator shop that is the endpoint of the IPsec tunnel.

However, if operator shops 3.1, 3.2 connected to the same broadband access network 29 use overlapping address spaces, which is a case that must be supported, e.g. address spaces including private addresses, the procedure according to the second case does not work, unless the endpoints of the IPsec tunnels at the operator shop are globally unique addresses, i.e. not included in or taken from any overlapping address range. A private IP address is an address from a dedicated range of addresses, assigned by the IANA (Internet Assigned Numbers Authority) that can be used in networks that are "address-wise" isolated from the global Internet. These addresses can be reused in different networks and are not globally unique. When connecting a network that uses private IP addresses to the global Internet, the gateway between the private network and the Internet has to be or has to include an NAT, cf. Fig. 2c. The basic operation of an NAT is to dynamically associate, i.e. "translate", a pair consisting of a private IP address and a TCP or UDP port on the private network side with a global IP address and a TCP or UDP port on the Internet side. These associations are dynamically established, and also deleted, on a per TCP/UDP connection basis. In this way multiple devices, using private IP addresses, can share a single globally unique IP address in the NAT. However, all applications cannot work across NATs.

Generally, methods in which the IPsec tunnel is established between the terminal 15, 15' and the BAS 19 in the concerned operator shop 3.1, 3.2 make informing the user/terminal 15 about the address of the remote endpoint of the IPsec tunnel more difficult than in those cases where the remote IPsec tunnel endpoint is located in the BRAS 17, because:
- There is a different remote endpoint used for each operator shop 3.1, 3.2 connected to the broadband access network 29. However, this can be handled using methods described below.
- The address of the remote endpoint is administered by an organization different from that of the broadband access network 29.

Another disadvantage of having the IPsec tunnel endpoint in the BAS 19 is that the AAA entities of the broadband access network 29, i.e. the AAA client 23 and the AAA proxy server 27 in the BRAS 17, are not involved in the AAA procedures, which may create issues associated with accounting.

The above disadvantages imply that it in some cases may be preferable to confine layer 3 access procedures to the broadband access network 29.

Locating the remote endpoint of the IPsec tunnel in the BRAS 17 is a way of confining the layer 3 access procedure to the broadband access network 29. It is still, however, possible to provide a different remote endpoint for each operator shop 3.1, 3.2 or a single common remote endpoint for all operator shops. The former alternative, i.e. having different remote endpoints of the IPsec tunnels, provides a simpler mechanism for selection of the desired operator shop, but it makes informing the user or terminal 15, 15' about endpoint addresses more complicated. The latter alternative, i.e. having a common remote endpoint, has the advantage that the same address for the remote endpoint of the IPsec tunnels can be used for all operator shops 3.1, 3.2, but, as a consequence, the selection mechanism becomes more complex, at least in the case when a foreign broadband access network is accessed, in which case this layer 3 solution is more or less reused as will be described below, because the selection mechanism cannot base its selection on or directly derive it from the remote endpoint of the IPsec tunnel.

Thus, these different variants of accessing methods using layer 3 have their respective advantages and disadvantages. They will now be described in detail.

### Access through an IPsec tunnel to a common tunnel endpoint in the BRAS

In this procedure the single common remote endpoint of the IPsec tunnel 147 is located in the BRAS 17 and may belong to the local VRF 49, see Fig. 2d, and the address, the IP address, of the remote endpoint thus points to the local VRF. However, it should be pointed out that even though the description below uses the local VRF as the common remote endpoint, a dedicated tunnel endpoint device, e.g. an IPsec tunnel endpoint server 145 in the BRAS, may be used instead of the local VRF. Such a dedicated endpoint server would then also be connected in a BRAS internal network such as an inter-VRF network 52 and/or in the local service network 51, see Fig. 2g.

Methods for informing about the address of the remote tunnel endpoint will be described below, these methods also being applicable in the other cases in which IPsec tunnels are established and used.

As discussed above, in the basic case it is assumed that a roaming user connects through an RG port 11 which is already associated with an authenticated connection towards one of the operator shops 3.1, 3.2, e.g. operator shop No. 1. Before being capable of establishing an IPsec tunnel, the terminal 15 must acquire an IP address. Hence, an IP address out of the address range of operator shop No. 1 is acquired from the DHCP server 61.1 associated with VRF No. 1 in a previously described manner. Then the IPsec tunnel is established from the terminal 15 to the local VRF 49 via one of the dedicated VRFs 47.1, 47.2, e.g. VRF No. 1, assuming that the RG port through which the IPsec connection is being established is currently associated with the dedicated VRF No. 1, see the dotted line 147 in Fig. 2d, using also some BRAS internal network for the communication between the dedicated VRF and the local VRF as will be described below. The two endpoint devices execute the IKEv2 procedure that is used to establish the IPsec tunnel, i.e. the terminal 15 and the local VRF 49 execute the IKEv2 procedure in this case. The IKEv2 messages are routed via another VRF, the dedicated VRF 47.1 in this example.

The local VRF 49 has an IP address from the address range of the broadband access network 29 and this indicates to VRF No. 1 that the packets should be routed to the local service network 51, or at least to some BRAS-internal network such as the inter-VRF network 52, instead of being forwarded to operator shop No. 1. This is obvious from the IP routing table in VRF No. 1. In another case, the RG port 11 through which the user is connecting may be currently associated with the local default VLAN 43 and the local VRF, through the RG port VLAN 55 and the AN 13, and then the IPsec tunnel 147 will not traverse any of the other VRFs, but this case is of less interest.

The IPsec tunnel 147 is established using IKEv2 (Internet Key Exchange protocol version 2) with the NAT traversal detection option and with EAP as an integrated authentication mechanism. When the terminal 15 provides the user's regular NAI during the EAP authentication procedure, the local VRF 49 examines the realm part of the NAI and identifies the home operator shop of the user, e.g. operator shop No. 2. The local VRF forwards the EAP packets to and from the AAA client 23 in the BRAS 17 and the AAA client communicates with the AAA server 31 of operator shop No. 2 via the AAA proxy server 27.

After a successful authentication the IPsec tunnel establishment proceeds and concludes and the local VRF 49 associates the established tunnel interface with the route to VRF No. 2, 47.2. In the local VRF some data structure is used internally to associate a tunnel interface with a routing table entry, or some other internal mechanism, not involving a routing table. The data structure or mechanism can involve/use pointers, tables or similar arrangements/mechanisms. Then the local VRF 49, assisted by a DHCP server 62 in the BRAS 17, assigns an "inner" IP address, taken from the address range of operator shop No. 2, to the terminal 15 to be used for packets sent inside the IPsec tunnel 147, using the method described in B. Patel, B. Aboba, S. Kelly, V. Gupta, "Dynamic Host Configuration Protocol (DHCPv4) Configuration of IPsec Tunnel Mode", RFC 3456, January 2003. It is possible to implement the DHCP server 62 associated with the local VRF and the DHCP servers 61.1, 61.2 associated with VRF No. 1 and VRF No. 2 as a single entity or unit in the BRAS 17, but they may also be implemented as separate entities or units. In the latter case the DHCP server 62 associated with the local VRF 49 acts as a DHCP relay agent between the terminal 15 and the DHCP server 61.1 associated with VRF No. 1, which in turn may act as a DHCP relay agent towards a DHCP server 59 in operator shop No. 1. Alternatively, the DHCP server 62 associated with the local VRF may be given a pool of addresses out of the address range of operator shop No. 1, and possibly a similar pool of addresses from the address range of operator shop No. 2, to be used for users accessing the respective operator shop via an IPsec tunnel to the common tunnel endpoint in the BRAS. Another alternative for the inner IP address assignment is that the local VRF 49 assigns the inner IP address to the terminal 15 using a Configuration payload in one of the IKEv2 messages during the IPsec tunnel establishment, in which case no subsequent interaction between the terminal and a DHCP server is needed. Subsequently, all packets arriving to the local VRF through the IPsec tunnel will be routed to the dedicated VRF No. 2, and then optionally packets addressed to nodes in the BRAS internal network and the local service network 51 may be excluded, i.e. they may instead be routed directly from the local VRF 49 to their destination.

The VRF No. 2 and the local VRF 49 must each also establish a host route for the assigned inner address, so that packets arriving from operator shop No. 2 destined for the concerned terminal 15 are routed to the local VRF and therefrom to the remote endpoint of the IPsec tunnel. A "host route" is a route, or rather a routing table entry, for a single IP address as has been indicated above. For VRF No. 2, 41.2, an alternative to the host route is possible. The inner IP address assigned to the terminal 15 may be selected out of a special pool of addresses in the address range of operator shop No. 2, 3.2, this special pool of addresses being used only for terminals accessing operator shop No. 2 via the common IPsec tunnel endpoint in the BRAS 17. For this alternative, the VRF No. 2 can have a static configuration indicating that any packet with an IP address out of this special pool as its destination address should be forwarded to the common tunnel endpoint in the BRAS, e.g. the local VRF 49.

The IPsec tunnel 147 may also be established via the local default VLAN 43 as mentioned above, or via a public WLAN AP 7 and a service VLAN 41.1, 41.2, i.e. one of VLAN No. 1 and VLAN No. 2, or the local WLAN AP VLAN 45. If the IPsec tunnel is established via the local default VLAN or the local WLAN AP VLAN, it will not traverse any of the VRFs that are associated with operator shops.

To enable the terminal 15, 15' to establish the IPsec tunnel, it must be informed about the address of the remote endpoint of the IPsec tunnel that it is to use. This can be announced on the service portal 54, either as an FQDN or as an explicit IP address. The operating system of the terminal must have an IKEv2/IPsec protocol stack and some additional software to initiate the IKEv2 procedure, manually or from an application.

Another attractive possibility is to use a DHCP option that indicates the tunnel endpoint either as an FQDN (Fully Qualified Domain Name) or as an explicit IP address, which is possible since it is an address from the address range of the broadband access network 29, this requiring some changes in the DHCP servers 61.1, 61.2, 62 of the broadband access network 29 and the terminal 15, 15'. Then each DHCP server 61.1, 61.2, 62 of the broadband access network is arranged to include this DHCP option, including information on the tunnel endpoint, in a DHCP message, e.g. a DHCPOFFER and/or a DHCPACK message, towards the terminal, even if the DHCP server 61.1, 61.2, 62 is acting as a relay agent between the terminal and another DHCP server, e.g. a DHCP server 59 in an operator shop 3.1, 3.2.

In particular, such a DHCP option may be used in conjunction with a home NAT 143, see Fig. 2c and particularly Fig. 2h, and then the NAT is itself first configured via DHCP and then the NAT in turn configures the connecting terminals 15, 15', including the special DHCP option. The DHCP method of informing the terminals allows the mechanism, including informing the terminals and the subsequent establishing of tunnels, and even the user authentication depending on the authentication method, to be automated and handled by software in the terminal without user intervention. The necessary changes of the DHCP software used in the DHCP server and the terminal are obvious and can be easily implemented by a person skilled in the art using the corresponding RFCs describing the use of options in general in the DHCP protocol. Also the DHCP software in the NAT 143, or in the router 141 containing the NAT function, including both the DHCP client and the DHCP server functionality, can be modified to achieve the desired behavior by a person skilled in the art.

Such a special DHCP option can have the following format for the case where only a single endpoint address is required for all terminals such as when using a common endpoint, each small rectangle denoting a single bit octet:

| Option code | Option length | IP-address | | | |
|---|---|---|---|---|---|
| | | | | | |

The format for the case where a plurality of endpoint addresses are used can be:

| Option code | Option length | IP-address No. 1 | | | | IP-address No. 2 | | | | |
|---|---|---|---|---|---|---|---|---|---|---|
| | | | | | | | | | | |

| | | IP-address No. n | | | | | | | | |
|---|---|---|---|---|---|---|---|---|---|---|
| | | | | | | | | | | |

The format for the case where an FQDN for single endpoint address is used can be:

| Option code | Option length | FQDN | | |
|---|---|---|---|---|
| | | | | |

The format for the case where multiple FQDNs are used can be:

| Option code | Option length | FQDN No. 1 length | FQDN No. 1 | | | FQDN No. 2 length | FQDN No. 2 | | | |
|---|---|---|---|---|---|---|---|---|---|---|
| | | | | | | | | | | |

| | | FQDN No. n length | | FQDN No. n | | | | | | |
|---|---|---|---|---|---|---|---|---|---|---|
| | | | | | | | | | | |

In the same option also there may be a mixing of IP addresses and FQDNs and then the format may be:

| Option code | Option length | List item No. 1 type | List item No. 1 length | IP-addr./ FQDN No. 1 | | | List item No. 2 type | List item No. 2 length | IP-addr./ FQDN No. 2 | | | |
|---|---|---|---|---|---|---|---|---|---|---|---|---|
| | | | | | | | | | | | | |

| | | List item No. n type | List item No. n length | IP-addr./ FQDN No. n | | | | | | | | |
|---|---|---|---|---|---|---|---|---|---|---|---|---|
| | | | | | | | | | | | | |

The list item length field may not be needed, when the preceding list item type field indicates an IP address, since IP addresses have a fixed length. This format allows inclusion of both IPv4 addresses and IPv6 addresses in the list, indicated by different list item types. It is also conceivable to make the list consist of only IPv6 and/or IPv4 addresses, but no FQDNs, in which case the list item type field is needed to indicate the type of address, but no list item length fields are needed.

The above examples of special DHCP option formats can be reused for DHCPv6, with the difference that the option-code and option-length fields are two octets each instead of one octet each. In addition, the IP addresses handled by DHCPv6 are 16-octet IPv6 addresses instead of 4-octet IPv4 addresses. It is also conceivable that a DHCPv6 option contains one or more IPv4 address(es) or mixes of IPv6 and IPv4 addresses, as described above.

A home NAT 143, see Fig. 2h, that uses an MAC address access control list, i.e. a list of allowed MAC addresses, may optionally use this DHCP option for additional features. It may for instance choose to use the DHCP option in messages sent only to terminals 15 having MAC addresses that are not on the list of allowed MAC addresses. Then it could apply packet filtering such that packets from these terminals are discarded unless they are sent to the address provided in the new DHCP option, i.e. the common tunnel endpoint address.

A third possible method of informing the terminal 15, 15' is to convey the information about the tunnel endpoint via off-line means. For example, each household connected to a broadband access network 29 can receive a letter from the operator of the broadband access network 29 containing general information e.g. about the broadband access network, the connected operator shops 3.1, 3.2, the available free services in the local service network 51, how to connect the equipment at home, etc. Such information could include FQDNs or IP addresses to be used for IPsec tunnel endpoints, in the case where the respective procedures are used.

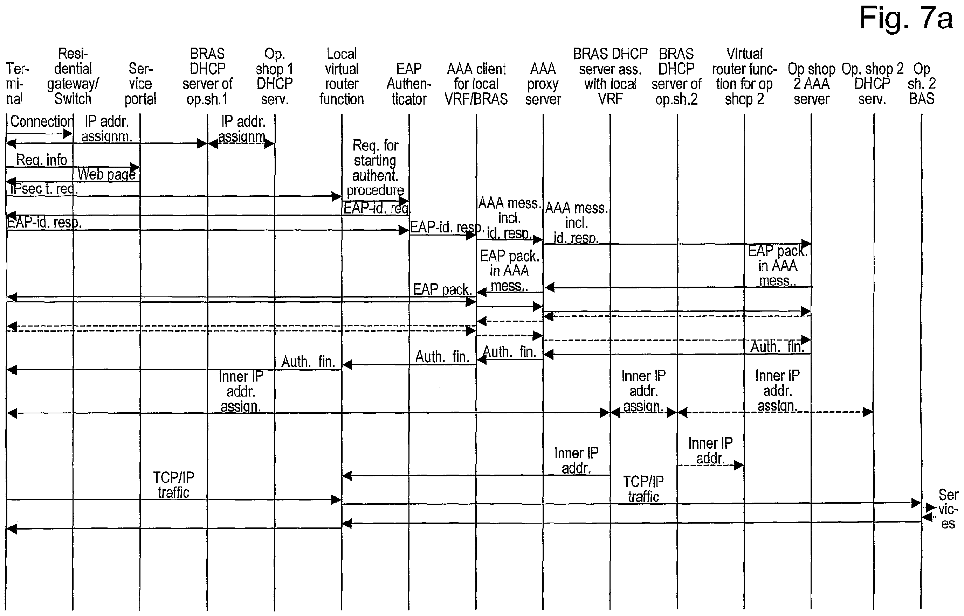

The different steps in accessing an operator shop 3.1, 3.2 using an IPsec tunnel ending in a common endpoint in the BRAS 17 are summarized below, the steps involving transmission of information also illustrated in the signal diagram of Fig. 7a.
1. A roaming user connects his terminal 15 to an RG port 11 having an already established connection with operator shop No. 1
2. The terminal 15 acquires an IP address out of the address range of operator shop No. 1, by interacting with the DHCP server 61.1 associated with VRF No. 1.
3. The user of the terminal 15, or the terminal 15 itself, receives or obtains the address of the common tunnel endpoint, such as by first obtaining a web page from the service portal 54, using a WWW browser running in the terminal and a suitable, known web address, such as "http://my-broadband-access-network-services.com", and then finding the address of the common tunnel endpoint in the displayed web page.
4. The user starts special software in the terminal 15 for starting the establishing of the IPsec tunnel. The different tasks of this software include running IKEv2 and thus establishing the security associations (SAs) for the IPsec tunnel.
5. The special software creates a message addressed to the received or obtained address for establishing an IPsec tunnel having the received or obtained address as its remote endpoint and sends the message through the connected RG port 11, in RG port VLAN 55 and in VLAN No. 1. The AN 13 only looks at the MAC address. If there is a home NAT 143 between RG port 11 and the terminal 15, the home NAT 143 examines the destination IP address of the message and forwards the message to VRF No. 1 via RG port VLAN 55 and VLAN No. 1, 41.1.
6. The VRF No. 1, 47.1, examines the address of the message and finds that the address of the message corresponds to or is an IP address that is included in the address range of the broadband access network 29 and forwards the message to the common IPsec tunnel endpoint in the BRAS 17, e.g. the local VRF 49, in the inter-VRF network 52 or the BRAS internal network.
7. The common tunnel endpoint in the BRAS 17, e.g. the local VRF 49, receives the message. The endpoint recognizes the IP address as belonging to it, starts to establish the IPsec tunnel and first uses EAP for authentication and accordingly messages start to be sent between the common tunnel endpoint and the terminal 15, the EAP Authenticator in the common tunnel endpoint (local VRF 49) sending first an EAP-Identity-Request to the terminal 15.
8. The terminal 15 responds with an EAP-Identity-Response, including the user's identity in the form of a regular NAI.
9. The EAP Authenticator passes the EAP-Identity-Response to the AAA client function 23 in the BRAS 17.
10. The AAA client 23 includes the EAP-Identity-Response in an AAA message and sends the AAA message to the AAA proxy server 27.
11. The AAA proxy server 27 recognizes that operator shop No. 2 is wanted by examining the realm part of the NAI. The AAA proxy server 27 transmits the AAA request to the AAA server 31 in operator shop No. 2.
12. An EAP authentication procedure between the AAA server 31 in operator shop No. 2 and the user terminal 15 through the AAA proxy server 27 and the AAA client 23 of the BRAS 17 is performed. The EAP authentication procedure is handled end-to-end between the terminal 15 and the authentication server which is the AAA server 31 of operator shop No. 2. Between the AAA client 23 of the BRAS 17 and the AAA server 31 the EAP packets are encapsulated in AAA messages.
13. After successful authentication, the very procedure for establishing the IPsec tunnel is executed, the common tunnel endpoint, e.g. the local VRF, associates the established tunnel interface with the route, in the BRAS 17, to VRF No. 2.
14. The terminal 15 interacts with the DHCP server 62 associated with the local VRF to obtain an IP address to be used for packets inside the IPsec tunnel, also called an "inner IP address". As described previously, the DHCP server 62 associated with the local VRF either acts as a DHCP relay agent between the terminal 15 and the DHCP server 61.2 associated with VRF No. 2, which in turn may act as a DHCP relay agent towards a DHCP server 59 in operator shop No. 2, 3.2, or assigns the IP address out of a pool of addresses from the address range of operator shop No. 2. It is also possible for the common tunnel endpoint, e.g. the local VRF, to assign the inner IP address to the terminal using the Configuration payload in IKEv2.
15. The inner IP address is also obtained or received by the VRF No. 2, that enters it in a table telling that packets with this IP address are to be forwarded to the common tunnel endpoint. Alternatively, the inner IP address is selected out of a special pool of addresses in the address range of operator shop No. 2, this special pool of addresses being used only for terminals accessing operator shop No. 2 via the common IPsec tunnel endpoint in the BRAS. Using this alternative procedure, the VRF No. 2, 47.1, can have a static configuration indicating that any packet with an IP address out of this special pool as its destination address should be forwarded to the common tunnel endpoint in the BRAS.
16. The IP address is also obtained or received by the common tunnel endpoint, the common tunnel endpoint enters in a table that packets with this IP address as destination address are to be forwarded into the established IPsec tunnel.
17. The user can start traffic using TCP/IP, through the IPsec tunnel 147, the common tunnel endpoint, VRF No. 2, and the BAS 19 of operator shop No. 2. For example, the user can receive a web page from the BAS. Such a web page can present available services.

Steps to be performed by the special software in the terminal 15:
1. Obtain the address of the common tunnel endpoint 49; 145.
2. Transmit into the connected network a message including the address of the common tunnel endpoint for establishing an IPsec tunnel.

Steps to be performed by the common tunnel endpoint 49; 145:
1. After receiving a request of establishing an IPsec tunnel, start an EAP authentication procedure by activating EAP Authenticator 56.
2. Receive from the EAP Authenticator 56 information about the wanted operator shop, such as by receiving the user's regular NAI obtained from the terminal 15 in the EAP authentication procedure and evaluating the realm part thereof. The EAP Authenticator can be considered a part of, or associated with, the local VRF 49 or the common tunnel endpoint server 145. In that case the information is inherently available, since the terminal supplies the NAI in the EAP-Identity-Response packet. Also the NAI analysis functionality may be used that is anyway present in the AAA proxy server 27 and the AAA proxy server may then pass the result of the analysis, in terms of which operator shop the message concerns, to the local VRF or the common tunnel endpoint server 145. Other ways may be chosen, since passing data back and forth between BRAS internal entities and, if the EAP Authenticator is regarded as a separate module in the BRAS 17, it is simply a matter of implementation and can be done in a multitude of ways obvious to one skilled in the art, depending on the preferences of the designer of the BRAS.
3. After receiving information that EAP authentication has been successfully completed, establish the IPsec tunnel to the terminal 15, creating an IPsec tunnel interface for the terminal, where such an interface is software based and can be considered a "virtual interface". Sending and receiving packets to and from the created IPsec tunnel interface includes that appropriate IPsec procedures are invoked.
4. Associate the created IPsec tunnel interface with the dedicated VRF 47.1, 47.2 of the wanted operator shop.
5. Receive the IP address assigned to the terminal 15 from the DHCP server 62, 61.1, 61.2. Optionally send the IP address to the terminal in a Configuration payload in an IKEv2 packet during the IPsec tunnel establishment procedure, in which case the common tunnel endpoint may select the IP address itself out of a dedicated pool of addresses instead of receiving it from the DHCP server.
6. After receiving or selecting the IP address, associate it with the created IPsec tunnel interface.
7. When receiving packets on the IPsec tunnel interface, route them to the VRF 47.1, 47.2 of wanted operator shop.
8. When receiving packets from VRFs 47.1, 47.2, compare their destination IP addresses to IP addresses associated with existing IPsec interfaces, and send into the respective IPsec tunnel if agreement.
9. In the case where host routes are used in the VRFs 47.1, 47.2 for routing packets to the common tunnel endpoint, inform, after having removed an IPsec tunnel and the IPsec tunnel interface thereof, the VRF associated with the IPsec tunnel interface, that routing to the assigned IP address should be stopped or closed.

If the inner IP address assigned to the terminal 15 is selected out of a dedicated pool of IP addresses that is used only for terminals accessing the operator shop via IPsec tunnels to the common tunnel endpoint, then the VRF of the selected operator shop, VRF 47.1, 47.2, does not have to perform any particular steps, except its regular IP routing, in order to support this procedure. Otherwise, the following are the additional steps to be performed by the dedicated VRF 47.1, 47.2 of the wanted operator shop:
1. After receiving the IP address from the DHCP server 62, 61.1, 61.2, modify the routing table by entering the IP address as a new entry in the table, thus creating a host route associated with the IP address, indicating that packets with the received IP address as its destination address should be forwarded to the common tunnel endpoint, e.g. the local virtual router function 49.
2. After receiving information on stopped routing for the concerned IP address, remove the respective entry from the routing table.

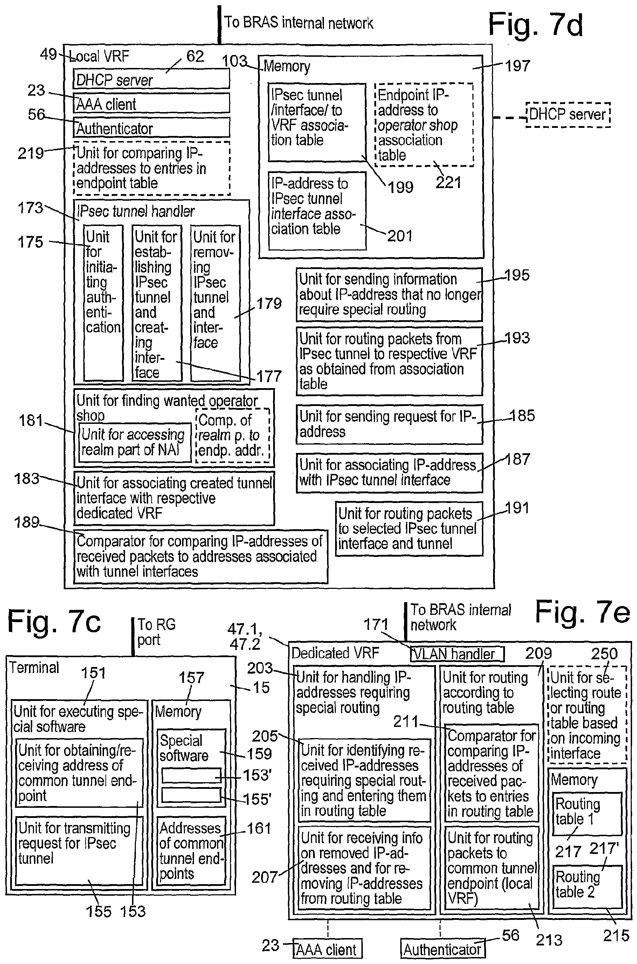

The terminal 15 may have at least the following modules/components/functions that may be necessary to perform the operator shop access in this case, see Fig. 7c:
- A unit 151, typically including a suitable processor and suitable software, stored in some memory, for executing special procedures including
   -- a unit 153 for executing a procedure for obtaining or receiving addresses of common tunnel endpoints to be used for establishing IPsec tunnels and/or for storing them, if required.
   -- a unit 155 for executing a procedure for transmitting a request for establishing an IPsec tunnel.
- A memory 175 including
   -- a memory place 159 for storing special software including places 153' for the procedure for obtaining or receiving addresses and 155' for the procedure of transmitting an IPsec tunnel request, and
   -- a memory place/memory places 161 for storing addresses of common tunnel endpoints.

The BRAS 17 may have at least the following modules/components/functions that may be necessary to perform the operator shop access in this case:
- A BRAS network, also called the BRAS internal network, including a connection to/including the local service network 51 and/or the inter-VRF network 52.
- A local VRF 49 connected in the BRAS network.
- An AAA client 23.
- An authenticator unit 56.
- An AAA proxy server 27 connected in the BRAS network and to AAA servers 31 in operator shops Nos. 1 and 2.
- A VRF No. 1, 47.1, connected in the BRAS network for routing traffic only to/from operator shop No. 1, except for certain special cases when traffic can be routed differently.
- A VRF No. 2, 47.2, connected in the BRAS network for routing traffic only to/from operator shop No. 2, except for certain special cases when traffic can be routed differently.
- A DHCP server 62 associated with the local VRF 49.
- A DHCP server 61.1 associated with VRF No. 1, 47.1.
- A DHCP server 61.2 associated with VRF No. 2, 47.2.
- Optionally a service portal 54.
- Optionally a dedicated IPsec tunnel server 145, optionally also having DHCP server functionality.

The local VRF 49 of the BRAS 17 may have at least the following modules/components/functions that may be necessary to perform the operator shop access in this case, see Fig. 7d:
- An AAA client 27 that may only be connected to the local VRF.
- An authenticator function 56 that may be a component of or connected to the local VRF.
- An IPsec tunnel handler 173 including
   -- a unit 175 for initiating authentication,
   -- a unit 177 for establishing IPsec tunnels and creating corresponding tunnel interfaces, and
   -- a unit 179, possibly integrated with the unit 177, for removing IPsec tunnels and corresponding tunnel interfaces.
- A unit 181 for finding the wanted operator shop as a consequence of having received a request for establishing an IPsec tunnel. This unit may evaluate the realm part of the user's regular NAI received in the EAP authentication procedure.
- A unit 183 for associating created tunnel interfaces with wanted operator shops 3.1, 3.2 connected to the broadband access network 29, such as by storing corresponding entries.
- A DHCP server 62 that may be a component of or connected to the local VRF 49.
- An optional unit 185 for sending requests for IP addresses to the DHCP server 62.
- A unit 187 for associating IP addresses with respective IPsec tunnel interfaces.
- A comparator 189 for comparing IP addresses of packets received in BRAS internal network.
- A unit 191 for forwarding packets to a selected IPsec tunnel interface and tunnel after having received required information from the comparator 189.
- A unit 193 for routing packets from IPsec tunnels to respective VRFs, information about the correct VRFs taken from an association table.
- A unit 195 for sending information about IP addresses that no longer require special routing to the respective VRFs, this unit provided only if dynamically established host routes are used in the dedicated VRFs 47.1, 47.2.
- A memory 197 including
   -- a memory place 199 for a table, which may be a part of the routing table, listing associations between IPsec tunnels/tunnel interfaces and dedicated VRFs 47.1, 47.2, and
   -- a memory place 201 for a table, which may be a part of the routing table, listing associations between IP addresses and IPsec tunnel interfaces.

If a dedicated IPsec tunnel endpoint server 145 is used, it may require most of the same or corresponding components.

The dedicated VRFs 47.1, 47.2 of the BRAS 17 may have at least the following modules/components/functions that may be necessary to perform the operator shop access in this case, see Fig. 7e:
- A VLAN handler 171.
- A unit 203 for handling IP addresses requiring special routing including
   -- a unit 205 for identifying received IP addresses as requiring special routing and entering such IP addresses in a routing table, and
   -- a unit 207 for receiving information on non-current addresses and removing corresponding entry from routing table.
- A unit 209 for routing according to routing table including
   -- a comparator 211 for comparing IP addresses of packets received from the BAS 19 of associated operator shop 3.1, 3.2 to entries in routing table, and
   -- a unit 213 for routing, according to the comparing operation executed in the comparator 211, in the case where the IP addresses agree with the dynamically created routing table entries indicating the common tunnel endpoint, to the common tunnel endpoint, e.g. the local VRF 49.
- A memory 215 including
   -- a memory place 217 for storing a routing table.

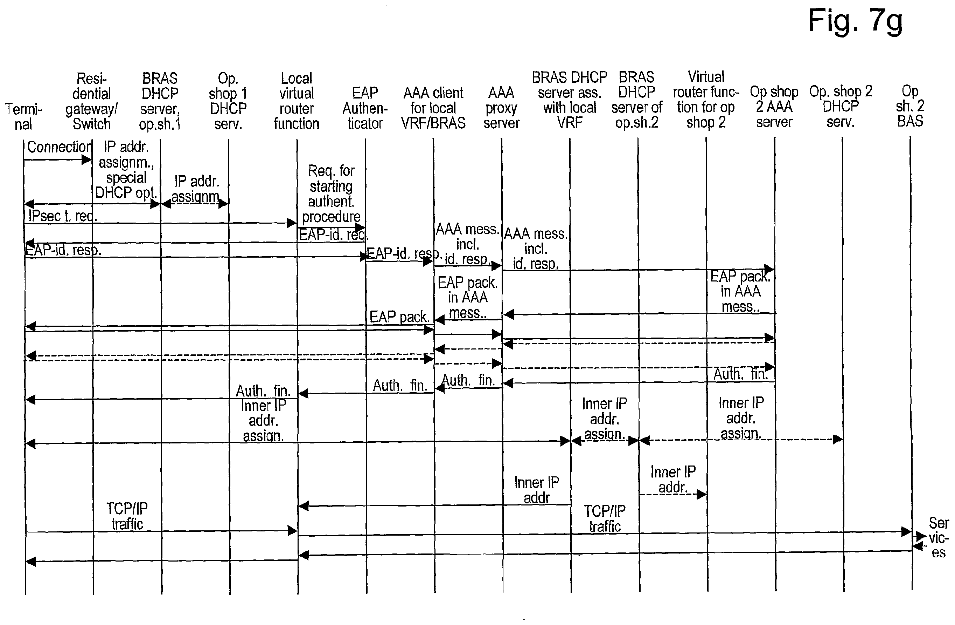

The different steps in accessing an operator shop 3.1, 3.2 using a common IPsec tunnel endpoint in the BRAS 17 and the special DHCP option for the case of a terminal connecting directly to an RG port 11 are almost the same as in the cases where the special DHCP option is not used. The way in which the terminal 15 obtains the IP address of the common IPsec tunnel endpoint is the only part that differs. There are two cases to consider. In the first case the special DHCP option includes an IP address of the common tunnel endpoint. In the second case the special DHCP option includes a FQDN that can be translated into an IP address of the common tunnel endpoint. In both cases the BRAS DHCP server 61.1, 61.2, 62, as in regular DHCP operation, also provides the terminal 15 with the IP address of a DNS (Domain Name System) server 148 that can translate FQDNs into IP addresses. This DNS server may be located in the BRAS 17, dedicated for a certain VRF or serving the entire broadband access network 29, or it may be located in the operator shops 3.1, 3.2. The different steps involved in this procedure when the special DHCP option contains an IP address are summarized below, the steps involving transmission of information also illustrated in the signal diagram of Fig. 7g. The first steps performed when using the special DHCP option are:
1. A roaming user connects his terminal 15 to an RG port 11 having an already established connection with operator shop No. 1 and acquires an IP address out of the address range of operator shop No. 1, by interacting with the DHCP server 61.1 associated with VRF No. 1.
2. From the same DHCP server 61.1 the terminal 15 receives a special DHCP option that includes an IP address of the common tunnel endpoint (49; 145).

The remaining steps are the same as steps 3 - 16 described above for the case when the terminal, connecting directly to an RG port 11, accesses an operator shop 3.1, 3.2 using a common IPsec tunnel endpoint in the BRAS 17 without the use of the special DHCP option.

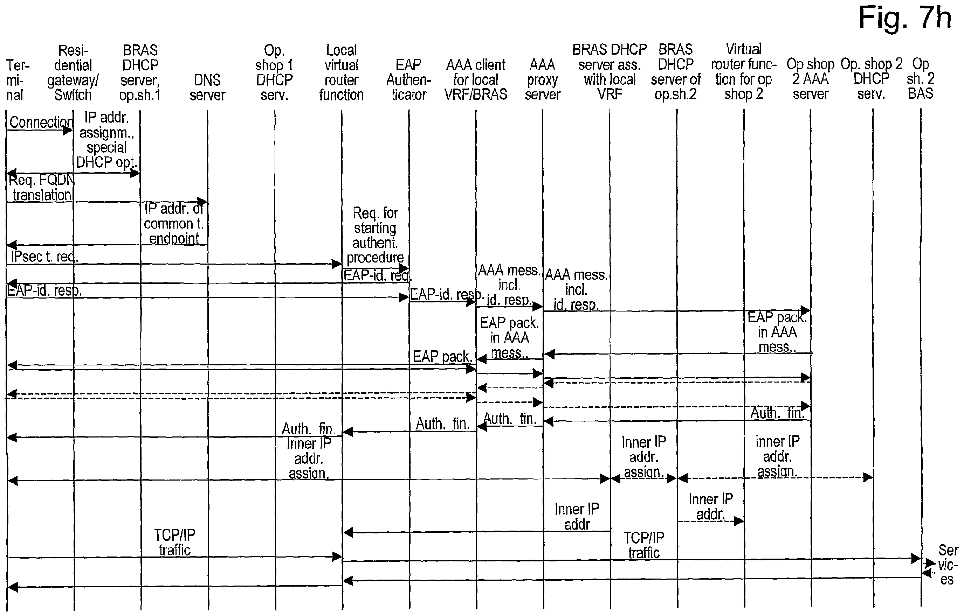

The first steps involved in this procedure when the special DHCP option contains an FQDN are summarized below, the steps involving transmission of information also illustrated in the signal diagram of Fig. 7h.
1. A roaming user connects her/his terminal 15 to an RG port 11 having an already established connection with operator shop No. 1 and acquires an IP address out of the address range of operator shop No. 1, as well as a DNS server address, by interacting with the DHCP server 61.1 associated with VRF No. 1, 47.1.
2. From the DHCP server 61.1 the terminal 15 receives a special DHCP option that includes a FQDN of the common tunnel endpoint (49; 145).
3. The terminal 15 includes the FQDN in a request message and sends the request message to the DNS server 148, the address of which it has previously received.
4. The DNS server 148 examines the request and translates the FQDN into an IP address, or possibly a list of IP addresses, belonging to the common tunnel endpoint (49; 145), in accordance with regular DNS server operation.
5. The DNS server 148 sends the IP address, or the list of IP addresses respectively, resulting from the translation to the terminal 15.

The remaining steps are the same as steps 3 - 16 described above for the case where the terminal 15, connecting directly to an RG port 11, accesses an operator shop 3.1, 3.2 using a common IPsec tunnel endpoint in the BRAS 17 without the use of a special DHCP option.

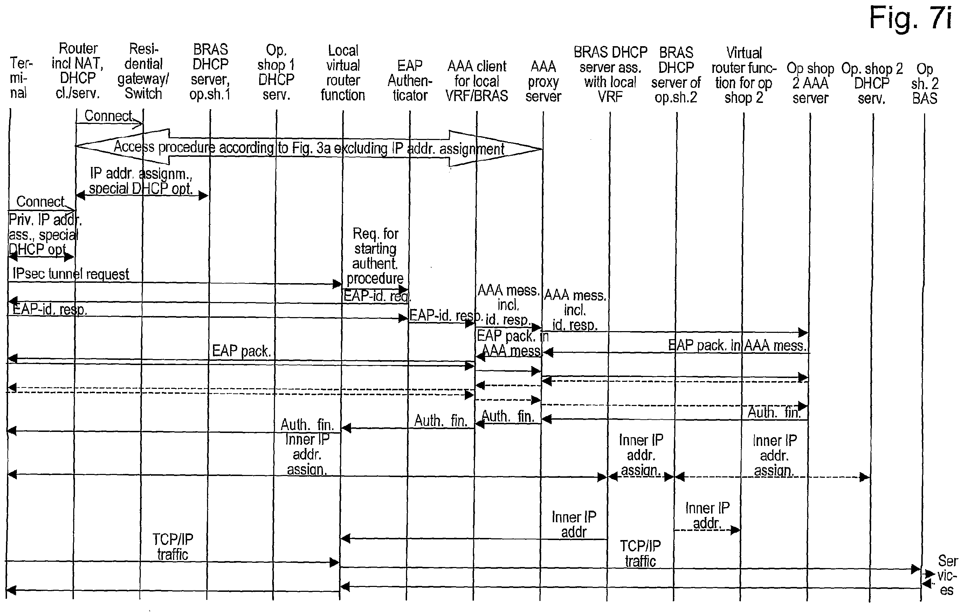

The first steps in accessing an operator shop 3.1, 3.2 using a common tunnel endpoint in the BRAS 17 and the special DHCP option for the case of a terminal 15 connecting to an NAT 143 and the special DHCP option containing an IP address are summarized below, the steps involving transmission of information also illustrated in the signal diagram of Fig. 7i.
1. An NAT 143 connects to an RG port 11.
2. The NAT 143 is authenticated and a VLAN association is created, connecting the NAT to operator shop No. 1, in the manner previously described for the case of a terminal 15 accessing an operator shop 3.1, 3.2 through a CPN 5.
3. The NAT 143 interacts with the DHCP server 61.1 associated with VRF No. 1, 47.1, and acquires an IP address out of the address range of operator shop No. 1, as well as the address of a DNS server 148.
4. From the DHCP server 61.1. the NAT 143 receives a special DHCP option that includes an IP address of the common tunnel endpoint, this special DHCP option actually included in the same message as the IP address assigned to the NAT and the DNS server address.
5. A roaming user connects her/his terminal 15 to the NAT 143.
6. The terminal 15 interacts with a DHCP server in the NAT 143 to acquire a private IP address.
7. From the DHCP server in the NAT 143 the terminal receives a special DHCP option that includes an IP address of the common tunnel endpoint (49; 145).

The remaining steps are the same as steps 3 - 16 described above for the case where the terminal, connecting directly to an RG port 11, accesses an operator shop 3.1, 3.2 using a common IPsec tunnel endpoint in the BRAS 17 without the use of a special DHCP option.

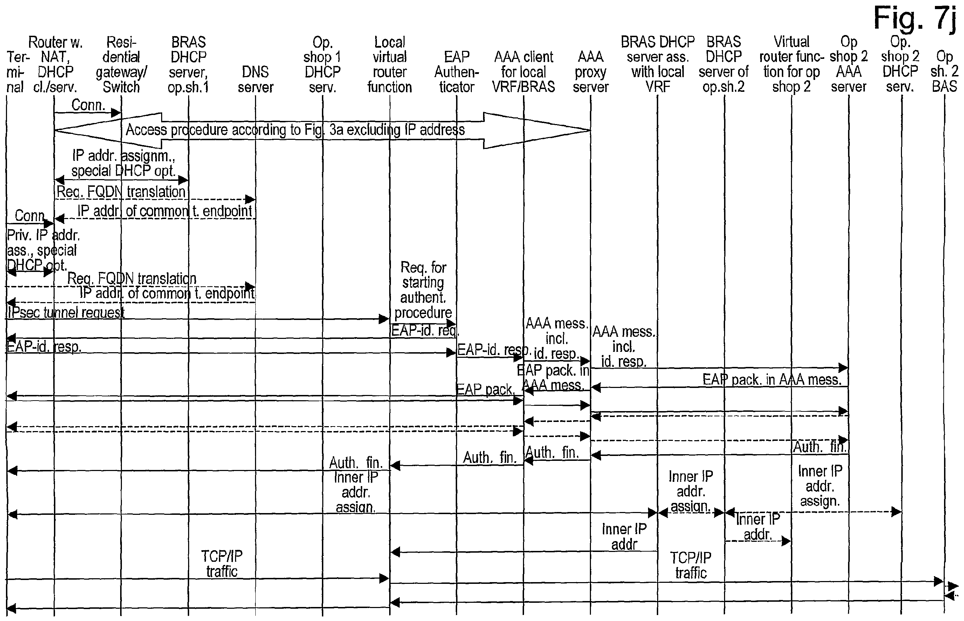

The different steps in accessing an operator shop 3.1, 3.2 using a common tunnel endpoint in the BRAS 17 and the special DHCP option for the case of a terminal 15 connecting to an NAT 143 and the special DHCP option containing an FQDN are summarized below, the steps involving transmission of information also illustrated in the signal diagram of Fig. 7j.
1. An NAT 143 connects to an RG port 11.
2. The NAT 143 is authenticated and a VLAN association is created, connecting the NAT to operator shop No. 1, 3.1, in the manner previously described for the case of a terminal accessing an operator shop through a CPN 5.
3. The NAT 143 interacts with the DHCP server 61.1 associated with VRF No. 1 and acquires an IP address out of the address range of operator shop No. 1, as well as the address of a DNS server 148.
4. From the DHCP server 61.1 the NAT 143 receives a special DHCP option that includes an FQDN of the common tunnel endpoint (49; 145).
5. Optionally, if the special DHCP option contains an FQDN, the NAT 143 includes the FQDN in a request message, which it sends to the DNS server 148, the address of which it has previously received.
6. If the NAT 143 sent the FQDN in a request message to the DNS server 148, the DNS server examines the request, translates the FQDN into an IP address, or possibly a list of IP addresses), belonging to the common tunnel endpoint (49; 145) and returns it to the NAT.
7. A roaming user connects her/ his terminal 15 to the NAT 143.
8. The terminal 15 interacts with a DHCP server in the NAT 143 to acquire a private IP address, as well as the IP address of a DNS server 148.
9. From the DHCP server in the NAT 143 the terminal 15 receives a special DHCP option that includes an IP address, if the NAT has chosen to have the FQDN translated, or an FQDN of the common tunnel endpoint (49; 145).
10. If the special DCHP option received from the DHCP server in the NAT 143 contains an FQDN, the terminal 15 includes the FQDN in a request message, which it sends to the DNS server 148, the address of which it has previously received. 11. If the terminal 15 sent the FQDN in a request message to the DNS server 148, the DNS server examines the request, translates the FQDN into an IP address, or possibly a list of IP addresses, belonging to the common tunnel endpoint (49; 145) and returns it to the terminal.

The remaining steps are the same as steps 3 - 16 described above for the case where the terminal 15, connecting directly to an RG port 11, accesses an operator shop 3.1, 3.2 using a common IPsec tunnel endpoint (49; 145) in the BRAS 17 without the use of a special DHCP option.

Steps to be performed by the special software in the terminal 15 and in the NAT 143 in the case where the special DHCP option contains one or more IP addresses of a common IPsec tunnel endpoint in the BRAS 17:
1. When a NAT 143 receives configuration data, e.g. an IP address and a DNS server address, from the DHCP server 61.1, 61.2 associated with the VRF 47.1, 47.2 of the operator shop 3.1, 3.2 that the NAT has connected to, it also receives and recognizes from the DHCP server a special DHCP option.
2. The NAT 143 extracts and stores the IP address(es) contained in the special DHCP option.
3. When a terminal 15 of a roaming user has connected to the NAT 143 and requests configuration data from the DHCP server of the NAT, the DHCP server sends a special DHCP option, in which it includes the IP address(es) of a common IPsec tunnel endpoint in the BRAS 17, to the terminal in addition to the regular configuration data.
4. When the terminal 15 receives the configuration data, e.g. an IP address and a DNS server address, from the DHCP server of the NAT, it also receives and recognizes the special DHCP option.
5. The terminal 15 extracts and stores the IP address(es) contained in the special DHCP option.
6. The terminal 15 uses a received IP address of a common IPsec tunnel endpoint (49; 145) in the BRAS 17 to establish an IPsec tunnel towards the common tunnel endpoint.

Steps to be performed by the special software in the terminal 15 and in the NAT 143 in the case where the special DHCP option contains an FQDN of a common IPsec tunnel endpoint in the BRAS and the NAT chooses to have the FQDN translated:
1. When a NAT 143 receives configuration data, e.g. an IP address and a DNS server address, from the DHCP server 61.1, 61.2 associated with the VRF 47.1, 47.2 of the operator shop 3.1, 3.2 that the NAT has connected to, it also receives and recognizes from the DHCP server a special DHCP option.
2. The NAT 143 extracts the FQDN from the special DHCP option and sends the FQDN in a DNS query to the DNS server 148, the address of which it received in step 1.
3. The NAT 143 receives one or more IP addresses in the response from the DNS server 148.
4. The NAT 143 extracts and stores the IP address(es) contained in the response from the DNS server 148.
5. When a terminal 15 of a roaming user has connected to the NAT 143 and requests configuration data from the DHCP server of the NAT, the DHCP server sends a special DHCP option, in which it includes the IP address(es) of a common IPsec tunnel endpoint (49; 145) in the BRAS 17, to the terminal in addition to the regular configuration data.
6. When the terminal 15 receives the configuration data, e.g. IP address and DNS server address, from the DHCP server of the NAT, it also receives and recognizes the special DHCP option.
6. The terminal 15 extracts and stores the IP address(es) contained in the special DHCP option.
7. The terminal 15 uses a received IP address of a common IPsec tunnel endpoint (49; 145) in the BRAS 17 to establish an IPsec tunnel towards the common tunnel endpoint.

Steps to be performed by the special software in the terminal 15 and in the NAT 143 in the case where the special DHCP option contains an FQDN of a common IPsec tunnel endpoint (49; 145) in the BRAS 17 and the NAT does not have to have the FQDN translated:
1. When a NAT 143 receives configuration data, e.g. an IP address and a DNS server (148) address, from the DHCP server 61.1, 61.2 associated with the VRF 47.1, 47.2 of the operator shop 3.1, 3.2 that the NAT has connected to, it also receives and recognizes from the DHCP server a special DHCP option.
2. The NAT 143 extracts and stores the FQDN contained in the special DHCP option.
3. When a terminal 15 of a roaming user has connected to the NAT 143 and requests configuration data from the DHCP server of the NAT, the DHCP server sends a special DHCP option, in which it includes the FQDN of a common IPsec tunnel endpoint (49; 145) in the BRAS 17, i.e. the FQDN that it stored in step 2, to the terminal in addition to the regular configuration data.
4. When the terminal 15 receives the configuration data, e.g. an IP address and a DNS server address, from the DHCP server of the NAT 143, it also receives and recognizes the special DHCP option.
5. The terminal 15 extracts the FQDN from the special DHCP option and sends the FQDN in a DNS query to the DNS server 148, the address of which it received in step 4.
6. The terminal 15 receives one or more IP addresses in response from the DNS server 148.
7. The terminal 15 extracts and stores the IP address(es) contained in the response from the DNS server.
8. The terminal 15 uses a received IP address of a common IPsec tunnel endpoint (49; 145) in the BRAS 17 to establish an IPsec tunnel towards the common tunnel endpoint.

The BRAS 17, the local VRF 49 of the BRAS 17 and the VRFs 47.1, 47.2 may have the same modules/components/functions as described above.

### Access through an IPsec tunnel to an operator shop specific endpoint in the BRAS

In this procedure each operator shop 3.1, 3.2 connected to the broadband access network 29 has a dedicated tunnel endpoint in the BRAS 17. The following alternatives for dedicated tunnel endpoints may be considered:
1. The dedicated tunnel endpoints are given as dedicated addresses of the local VRF 49, i.e. special IP addresses pointing to the local VRF and possibly only used for the purpose of serving as tunnel endpoints. The local VRF could use only a subset, e.g. one, of its addresses for this purpose, but it could as well be all of its addresses, in which case they are not special at all. When an IP packet containing an IKE message is received in the local VRF 49, the contents of the packet is passed to the IKE software in the local VRF. This functionality may be available irrespective of which one of the addresses of the local VRF that is used. It is also possible that the local VRF 49 has only one address in the BRAS internal network, in which case this address will obviously be used for all purposes, including termination of IPsec tunnels. This also applies to the case where the tunnel endpoints are located in the BASs 19.
2. The dedicated tunnel endpoints are given as dedicated addresses of a dedicated tunnel endpoint device, such as an IPsec tunnel endpoint server 145. In the case where a dedicated tunnel endpoint device is used it must, as in cases described above, "have access to" an EAP Authenticator and an AAA client. The BRAS 17 may, in principle, be regarded a monolithic device. It may therefore be assumed that the internal entities thereof, comprising VRFs, EAP Authenticator(s), AAA client(s), etc. have means for possible communication with each other. Such communication may be implemented in a variety of ways obvious to one skilled in the art. Due to this property of the BRAS 17, it may e.g. be possible to let all BRAS internal entities that need an EAP Authenticator use the same EAP Authenticator entity. It may also be possible to arrange that each such entity has its own EAP Authenticator. The same applies to the AAA client.
3. The dedicated tunnel endpoints are given as dedicated addresses of each of the VRFs 47.1, 47.2 that are associated with an operator shop 3.1, 3.2.

As above, it may be assumed that a roaming user connects through an RG port 11 which is already associated with an authenticated connection towards one of the operator shops 3.1, 3.2, e.g. operator shop No. 1. In case 1 mentioned above the IPsec tunnel extends as illustrated in Fig. 2d for the common tunnel endpoint case and the tunnel establishment mechanisms are also basically the same as in the case using a common tunnel endpoint. The only difference is that the operator shop selection is not solely based on the realm part of the NAI, but also on the selected tunnel endpoint. If the supplied realm and the selected tunnel endpoint do not indicate or do not belong to the same operator shop, the tunnel establishment may optionally be rejected.

In the steps executed for the case of a common tunnel endpoint described with reference to Fig. 7a, step 6. is modified so that the local VRF 49, such as in a unit 219, recognizes the IP address of the request for an IPsec tunnel as being an address that it has to handle or is linked to it by comparing the IP address to entries in a table stored in a memory place 221 in the memory 103, see Fig. 7d. It then starts to establish the IPsec tunnel as described above. In the above listed steps to be performed by the common tunnel endpoint a new step may be executed before step 1 in which IP addresses of packets sent in the internal BRAS network are compared to all IP addresses handled by the local VRF. In step 2 the local VRF 49 receives from the EAP Authenticator 56 information on the user's regular NAI, as obtained in the EAP authentication procedure, in particular the realm part of the NAI, but this step may be modified to also include that this information is be compared to the address of the tunnel endpoint as obtained in the request for setting up the IPsec tunnel. This procedure is suitably executed by the unit 181, see Fig. 7d.

If the dedicated tunnel endpoints are distributed to the different dedicated VRFs 47.1, 47.2, i.e. in case 3. mentioned above, a tunnel endpoint does not have to be associated with a route to another VRF, see Fig. 2k. Instead the respective dedicated VRF routes the packets coming out of the IPsec tunnel like all other uplink packets, i.e. to the operator shop to which the VRF is dedicated, unless the packets have destination addresses from the address range of the broadband access network, indicating e.g. the local service network 51. However, in the downlink direction, the dedicated VRF 47.1, 47.2 of the wanted operator shop still has to establish a host route for the "inner" IP address of the terminal 15, 15', pointing to the tunnel interface, so that downlink packets addressed to the terminal 15 are sent through the tunnel to the terminal instead of being routed to the service VLAN 41.1, 41.2 associated with the VRF, like other downlink packets. Also in this case the realm part of the NAI should indicate the same operator shop as that for which the dedicated VRF is arranged.

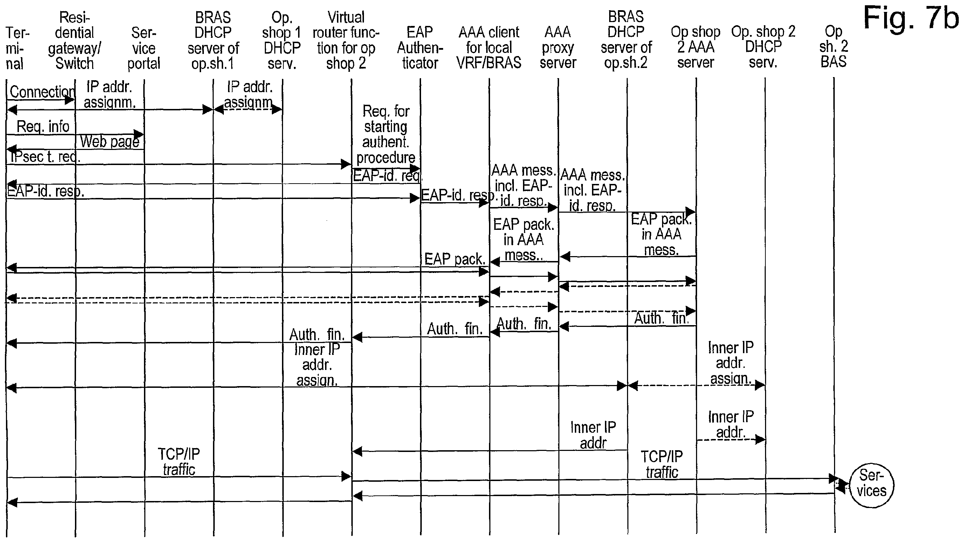

For the example illustrated by the signal diagram of Fig. 7a, in this third case, the signal instance "Local virtual router function" may be substituted with "Virtual router function for op shop 2", the signal instance "BRAS DHCP server" substituted with "Dedicated DHCP server" and the signal instance "Virtual router function for op shop 2" deleted, see Fig. 7b. The AAA client and the EAP Authenticator used by the dedicated VRF may be the same BRAS internal entities as used by the local VRF, i.e. AAA client 23 and authenticator 56, but they may also be entities that are integrated in or associated with only the concerned VRF, 47.1, 47.2, see Fig. 7e. The units 219, 173, 175, 177, 179, 189, 185, 187 and optionally the unit 191 and the table in the memory place 201 used in the local VRF for the case of a common tunnel endpoint in the local VRF, as illustrated in Fig. 7d, must be moved to the dedicated VRF illustrated in Fig. 7e.

The IPsec tunnel may also be established via the local default VLAN 43, or via a WLAN AP 7 and a service VLAN 41.1, 41.2, or the local WLAN AP VLAN 45.

The methods of informing the terminals 15, 15' about the available potential tunnel endpoints may basically be the same as in the case where a single common endpoint is used, as described above. A difference is that the new possible DHCP option in this case contains a list of tunnel endpoints, each identified by the realm, and/or possibly the name, of the associated operator shop followed by an FQDN or one or more explicit IP addresses, compare the format examples given above. Alternatively, the new possible DHCP option may contain a single tunnel endpoint, but instead appear a plurality of times in the DHCP message, once for each dedicated tunnel endpoint. Generally, a message field, like a DHCP option, may be specified as including one or more, i.e. a list, of a certain type of information, such as the tunnel endpoint reference in our case. Alternatively, the message field may be specified as always including one and only one instance of a certain piece of data, such as the tunnel endpoint reference in the case described herein. In the former case a single instance of the message field, i.e. the special DHCP option in this case, is enough to convey a list. In the latter case a list is instead conveyed by including multiple instances of the message field, together, in essence, constituting a list. Obviously the same information is conveyed by the message in both cases.

In the previously illustrated examples of possible special DHCP option formats a realm length field and a realm field is in this case inserted before or after each item, where an "item" refers to a field containing an IP address or two associated fields consisting of an FQDN length field and an FQDN field. The two examples below illustrate how this "transformation" of the previously illustrated special DHCP option format examples is performed.

Format of option including a list of realms and associated FQDNs:

| Option code | Option length | Realm No. 1 length | Realm No. 1 | | | FQDN No. 1 length | FQDN No. 1 | | | |
|---|---|---|---|---|---|---|---|---|---|---|
| | | | | | | | | | | |

| | | Realm No. n length | Realm No. n | | | FQDN No. n length | FQDN No. n | | | |
|---|---|---|---|---|---|---|---|---|---|---|
| | | | | | | | | | | |

The realm may be the same for several FQDNs, e.g. Realm No. 1 = Realm No. 2, such that several FQDNs consequently belong to the same operator shop 3.1, 3.2, each FQDN representing a potential IPsec tunnel endpoint in the BAS 19 of the operator shop.

Format of option including a single IP address and associated realm:

| Option code | Option length | Realm length | Realm | | | IP address | | | |
|---|---|---|---|---|---|---|---|---|---|
| | | | | | | | | | |

The above examples of special DHCP option formats can be reused for DHCPv6, with the difference that the option-code and option-length fields are two octets each instead of one octet each. In addition, the IP addresses handled by DHCPv6 are 16-octet IPv6 addresses instead of 4-octet IPv4 addresses.

### Access through an IPsec tunnel to a broadband access server

The simplest way to establish an IPsec tunnel from the terminal to the BAS 19 of a selected operator shop 3.1, 3.2 is to use the regular IPsec establishment mechanisms and make no difference between this IPsec tunnel and other IPsec tunnels that a terminal 15 may establish. However, it would mean that the IPsec tunnel is routed through the operator shop that is associated with the RG port 11, unless the RG port is currently associated with the local default VLAN 43. As a consequence, the resources of that operator shop, e.g. operator shop No. 1, and possibly other resources on the Internet, would have to be used, resulting in suboptimal routing and unnecessary charges for the subscriber of operator shop No. 1. In the case illustrated in Fig. 2e, it is assumed that the RG port 11 is associated with operator shop No. 1, whereas the terminal 15 wishes to access operator shop No. 2 through an IPsec tunnel to the BAS 19 of operator shop No. 2. The IPsec tunnel 147' then extends from the terminal 15 via the RG 1, the AN 13, VLAN No. 1, VRF No. 1, the BAS 19 of operator shop No. 1, the Internet 149 and ending in the BAS of operator shop No. 2.

A more attractive method is to establish host routes in all VRFs, including the local VRF 49, to tunnel endpoints in the BASs 19 of all operator shops 3.1, 3.2 connected to the broadband access network 29, compare the discussion of Fig. 2f above. Then, instead of going through operator shops and external networks, the IPsec tunnels are routed internally between the VRFs in the BRAS 17. For example, the dedicated VRF No. 1 may have a host route for the tunnel endpoint in the BAS 19 of operator shop No. 2, i.e. a routing table entry for the IP address of this tunnel endpoint, pointing to VRF No. 2 through the BRAS internal network. However, as mentioned above, if multiple operator shops connected to a broadband access network use overlapping address spaces, e.g. private addresses, then this method does not work, unless the tunnel endpoints at the operator shops are globally unique addresses, i.e. not taken from any overlapping private range.

The host routes to the BAS tunnel endpoints of the other operator shops control the routing of the uplink tunnel packets - and IKEv2 packets for establishment of the tunnels - but not the routing of the corresponding downlink packets. Using as an example an IPsec tunnel established between a terminal 15 communicating via the VRF No. 1 and the BAS 19 of operator shop No. 2, 3.2, the tunnel will pass through both VRF No. 1 and VRF No. 2 between the terminal and the BAS. The host route in VRF No. 1 ensures that uplink packets pertaining to the tunnel, or packets in the tunnel establishment procedure, are forwarded internally in the BRAS 17 to the VRF No. 2 and the regular routing in the VRF No. 2 forwards the packet to the BAS of operator shop 2. However, a corresponding downlink packet from the BAS 19 received by the VRF No. 2 has a destination address from the address range of operator shop No. 1. Hence, the regular routing table of VRF No. 2 would indicate that the packet should be forwarded towards the BAS of operator shop No. 2, although in this case the desired treatment of the packet would be to forward it to the VRF No. 1.

Hence, VRF No. 2 must be capable of handling a packet having a destination address out of the address range of operator shop No. 1 in different ways depending on whether it arrives from inside the broadband access network 29 or from its dedicated operator shop. If the packet arrives from the broadband access network, or from another VRF, the VRF No. 2 should forward it towards the BAS 19 of its dedicated operator shop, i.e. operator shop No. 2, whereas if the packet arrives at the interface towards the BAS of its dedicated operator shop, the VRF No. 2 should forward it to the VRF No. 1.

This behavior can be achieved, e.g. by having a separate routing table for packets arriving at the interface towards the BAS 19 of the dedicated operator shop. When the VRF uses different routing tables depending on the interface on which the concerned packet arrives, the different routing tables can be configured differently to incur the desired routing behavior. In the case of this example the routing table for packets arriving at the interface towards the BAS of operator shop No. 2 would indicate VRF No. 1 as the next hop for packets with a destination address out of the address range of operator shop No. 1. The routing table(s) for packets arriving at the other interfaces of VRF No. 2 would instead indicate the BAS of operator shop No. 2, or a router in the path towards the BAS of operator shop No. 2, as the next hop for packets with a destination address belonging to the address range of operator shop No. 1.

When the VRF No. 1 receives the downlink packet from the VRF No. 2, its regular routing ensures that the packet is forwarded in the broadband access network 29 towards the terminal 15.

Using the method of BRAS internal routing, the IPsec tunnel establishment becomes rather straightforward using IKEv2 with the NAT traversal detection option. The BAS 19 and the AAA devices/modules 37, 31 of the operator shop 3.1, 3.2 handle the user authentication.

As discussed above, the IPsec tunnel can also be established via a service VLAN 41.1, 41.2 or the local default VLAN 43, whichever is currently associated with the concerned RG port 11. In addition, the IPsec tunnel may be established via a WLAN AP 7 and a service VLAN or the local WLAN AP VLAN 45.

The ways of informing the terminal 15, 15' about the available potential tunnel endpoints are the same as for the procedure using multiple operator shop specific tunnel endpoints in the BRAS 17.

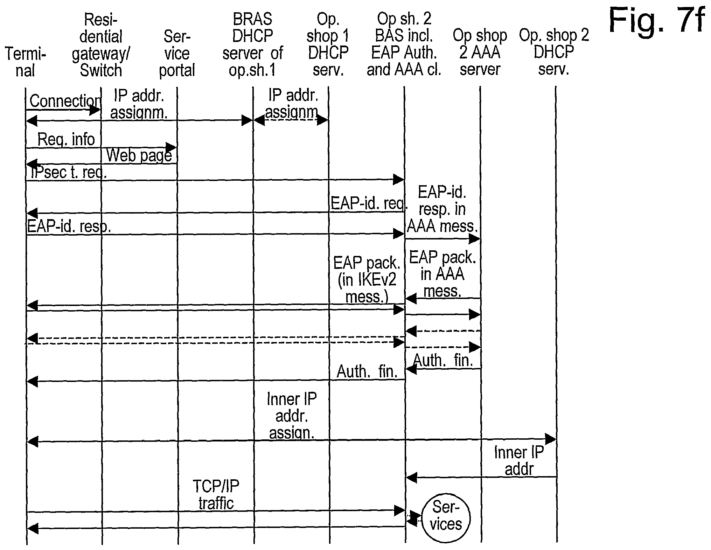

The different steps in accessing an operator shop 3.1, 3.2 using internal routing in the BRAS 17 to the BAS of a wanted operator shop are summarized below for the same example as above, i.e. it is assumed that a roaming user connects through an RG port 11 which is already associated with an authenticated connection towards operator shop No. 1 and that the user wants to connect to operator shop No. 2, the steps involving transmission of information also illustrated in the signal diagram of Fig. 7f.
1. A roaming user connects his terminal 15 to an RG port 11 having an already established connection with operator shop No. 1
2. The terminal 15 acquires an IP address out of the address range of operator shop No. 1, by interacting with the DHCP server 61.1 associated with VRF No. 1.
3. The user or terminal 15 receives or obtains the address of a tunnel endpoint in the BAS 19 of operator shop No. 2, such as by obtaining a web page from service portal 54 and finding the
   ) address therein, as illustrated in Fig. 7f, or by receiving a special DHCP option including an FQDN or one or more IP addresses of the tunnel endpoint in the BAS. If the terminal obtains an FQDN of the tunnel endpoint, it has it translated into one or more IP addresses, assisted by a DNS server 148, as previously described in the descriptions of IP sec tunnel establishment to a tunnel endpoint in the BRAS 17.
4. The users starts special software in the terminal 15 for starting the establishing of the IPsec tunnel, the special software adapted to in particular run IKEv2 and thus establish the security associations (SAs) for the IPsec tunnel.
5. The special software creates a message addressed to the received or obtained address for establishing an IPsec tunnel having the received or obtained address as its remote endpoint and ) sends the message through the connected RG port 11, in RG port VLAN 55 and in VLAN No. 1, 41.1.
6. The dedicated VRF No. 1, 47.1, examines the address of the message by searching a routing table and finds that the address of the request message corresponds to an entry in the table indicating VRF No. 2, 47.2, as the next hop and forwards the message to VRF No. 2 through the inter-VRF network 52 or the BRAS internal network.
7. The message is received by VRF No. 2, the VRF No. 2 recognizing that the IP address of the endpoint is an address belonging to the operator shop to which it itself is dedicated, and it then forwards the request to the BAS 19 of operator shop No. 2.
8. The request is received by the BAS 19 of operator shop No. 2, the BAS recognizing that the ) destination IP address of the message is an address belonging to or associated with it, then starting to establish the IPsec tunnel and first, using EAP for authentication, activating the AAA client 37 integrated in, or associated with, the BAS, which AAA client 37 in turn communicates with the AAA server 31 of operator shop No. 2.
9. In the case where an EAP Authenticator, not shown, integrated in, or associated with, the BAS 19 has sent an EAP-Identity-Request to the terminal 15, messages start to be sent between the AAA server 31 and the terminal 15, the AAA client 37 in the BAS also being involved.
10. The terminal 15 responds with an EAP-Identity-Response, including the user's identity in the form of a regular NAI.
11. An EAP authentication procedure between the AAA server 31 in operator shop No. 2 and the user terminal 15, via the AAA client 37 integrated in, or associated with, the BAS 19 of operator shop No. 2 3.2 is performed. The EAP authentication procedure is handled end-to-end between the terminal 15 and the authentication server which is the AAA server 31 of operator shop No. 2. Between the AAA client 37 of the BAS 19 and the AAA server 31 the EAP packets are encapsulated in AAA messages.
12. After successful authentication, the very procedure for establishing the IPsec tunnel is executed.
13. The terminal 15 interacts with the DHCP server 59 associated of operator shop No. 2 to obtain an IP address to be used for packets inside the IPsec tunnel, also called an "inner IP address". It is also possible for the BAS to assign the inner IP address to the terminal using the Configuration payload in IKEv2.
14. The IP address is sent to the BAS 19, the BAS enters in a table that packets with this IP address as destination address are to be forwarded into the established IPsec tunnel. If the DHCP server 59 is integrated in the BAS, the passing of the IP address between the DHCP server and other parts of the BAS is simply BAS internal data handling. If the DHCP server is external to the BAS, the BAS may obtain the IP address, either by snooping the DHCP messages being passed between the DHCP server and the terminal 15 or by receiving it from the DHCP server via operator shop internal communications means, e.g. an operator shop internal network.
15. The user can start traffic using TCP/IP through the BAS 19 of operator shop No. 2. For example, the user can receive a web page from the BAS. Such a web page can present services available in operator shop No. 2.

The special software in the terminal 15 may perform the same steps and be configured as described above.

The dedicated VRFs 47.1, 47.2 of the BRAS 17 may have at least the following modules/components/functions that may be necessary to perform the operator shop access in this case in addition to the modules/components/functions described in conjunction with access via an IPsec tunnel to a common tunnel endpoint in the BRAS, see Fig. 7e:
- A unit 250 for selecting a route or a routing table based on the incoming interface.
- Separate routing tables Nos. 1 and 2 stored at memory places 217, 217' for packets arriving at the interface towards the BAS 19 of the operator shop 3.1, 3.2 for which the VRF 47.1, 47.2 is dedicated and for packets arriving at other interfaces, respectively.

### Operator shop selection in a foreign broadband access network

In a foreign broadband access network, which herein is taken to refer to a broadband access network that has no relation or connection to the home operator shop of a user, the operator shop selection is a much more complex matter than in the home broadband access network. The reason is that a regular NAI cannot be used to indicate the operator shop that the user desires to visit, this shop called herein the selected visited or selected desired operator shop. The NAI indicates the home operator shop 3h of the subscriber, i.e. the considered user, see Fig. 2i, but it provides no indication of the operator shop that is the desired visited operator shop. As described above, the user can from the terminal only access her/his home operator shop or an operator shop with which her/his home operator shop has a roaming agreement. In the operator shops involved, lists of other operator shops with which such agreements are stored, such as in memories 64 in or connected to their AAA servers 31, 31h.

The main cases that should be considered in a foreign broadband access network include:
- The user accesses the broadband access network through a CPN.
- The user accesses the broadband access network through a WLAN AP.
- The user accesses the broadband access network through an IPsec tunnel.

### Access through a CPN

In this case it may be easier to achieve operator shop selection, if there is specific support for the selection process in the client software in the terminal 15, i.e. extra or modified software in addition to the support for EAP. However, the roaming architecture becomes more general and can easier encompass roaming users from other types of networks, if no specific support is required in the client software. Both these cases are considered below.

### Access through a CPN with support in software of terminal

The procedure for this case relies on the concept of a modified NAI of the previously described general extended format. In this case the NAI is extended to include the realm of the selected operator shop 3.1, 3.2 that the user wants to visit. Thus, in this case the extended NAI has the format
"home-op-shop/name@visited-op-shop" or
"home-op-shop!name@visited-op-shop"
where "home-op-shop" is the realm of the home operator shop 3h of the user, see Fig. 2i, "visited-op-shop" is the realm of the selected operator shop that the user wants to visit, i.e. the one of the operator shops connected to the foreign broadband access network 29 that is selected to act as the visited operator shop, i.e. as illustrated in the drawings one of operator shops 3.1 and 3.2, and "name" is the user's username.

For producing such an extended NAI the software of the terminal 15 may e.g. allow
- manual selection, i.e. that the user enters his choice into the terminal, and/or
- automatic selection, i.e. the terminal software includes a function arranged to select an operator shop from a configured list of preferred visited operator shops.

As previously described, the communication from/with a user or a terminal 15 who/which is connecting to an RG port 11, without a previously active session, is by default directed to the local default VLAN 43, where the EAP authentication procedure is initiated by the Authenticator 56 and the AAA client 23 of the BRAS 17. If the terminal is to supply an extended NAI of the format described above during the authentication procedure, the terminal requires information about the operator shops that are available, i.e. about the operator shops 3.1, 3.2 that are connected to the broadband access network 29 to which the RG port is connected through an AN 13. The broadband access network can provide this information in different ways:
a) A first way for the broadband access network 29 to advertise available operator shops is the method suggested to be used in 3GPP-WLAN interworking. This method is described in Farid Adrangi (Ed.), "Mediating Network Discovery and Selection", Internet draft, <draft-adrangi-eap-network-Discovery-and-Selection-01.txt>, February 2004. The basic concept is that the operator shop information is provided to the terminal 15 via EAP, in the case where the broadband access network receives from the terminal an NAI with an unrecognized realm part, i.e. a realm for which there is no available AAA route. The user or terminal then selects one of the advertised operator shops and provides a second NAI to the broadband access network, this time an extended NAI of the format described above.
b) A second way for the broadband access network 29 to advertise the available operator shops is to use a new link layer protocol to broadcast the information in the local default VLAN 43.
c) A third way is to let the user retrieve the operator shop information through off-line means.
d) Alternative methods that do not rely on information provided by the broadband access network 29 have been described and in these methods either the terminal 15 is designed to transfer a list of preferred visited operator shops to the broadband access network, and the network is made do the very selection, as described in the published International patent application WO 2006/038843, "Terminal controlled selection of intermediary network for roaming UMTS/WLAN subscribers", or they rely on support from a central Diameter redirect agent, as described in the published International patent application WO 2006/038844, "Home network controlled selection of intermediary network for roaming UMTS/WLAN subscribers".

In any case, the AAA proxy server 27 recognizes the realm of the selected visited operator shop in the modified NAI and routes the AAA message containing the EAP-Identity-Request to the AAA server 31 of the selected visited operator shop 3.1 or 3.2. Before forwarding the AAA message, the AAA proxy server may or may not remove the realm of the selected visited operator shop from the modified NAI and turn the NAI into its regular format. When the AAA server 31 of the selected visited operator shop receives the AAA message containing the EAP-Identity-Request, it recognizes the realm of the home operator shop as belonging to an operator shop with which it has a roaming agreement and routes the AAA message to the AAA server 31h of the home operator shop 3h. If the AAA proxy server 27 did not turn the NAI into its regular format, then the AAA server of the selected visited operator shop turns the extended NAI into its regular format before forwarding it to the AAA server of the home operator shop. Then a user authentication procedure is performed between the user/terminal 15 and the home AAA server 31h of the user, the AAA requests routed through the AAA client 23 of the BRAS, the AAA proxy server 27, the AAA server 31 of the selected one of the operator shops 3.1, 3.2 to the home AAA server 31h. After a successful user authentication the BRAS 17 instructs the concerned AN 13, e.g. via SNMP or some other protocol that the BRAS can use in the control of ANs, to associate the concerned RG port VLAN 55 with the service VLAN 41.1, 41.2, associated with the selected visited operator shop, e.g. VLAN No. 2 if operator shop No. 2 is selected, instead of the local default VLAN 43. Then the user can proceed to acquire an IP address via DHCP, in the example from the DHCP server 59 of operator shop 3.2, to enable subsequent IP communication with the selected visited operator shop and also with networks beyond the selected visited operator shop. In order for the BRAS 17 to know which AN to instruct virtual MAC addresses must be used.

In the description above the AAA client 23 is assumed to be located in the BRAS 17, closely connected to the local VRF 49. However, if the AAA client is instead located in the AN 13, neither the local default VLAN 43 nor virtual MAC addresses are needed for achieving the above described VLAN association in this access case.

If the user/terminal 15 only desires access to the local service network 51, the user/terminal may supply, just as in the case of access through the home broadband access network, a special NAI, having a realm part belonging to the broadband access network 29 that is dedicated for this purpose. Then, the AN 13 can keep its association between the concerned RG port VLAN 55 and the local default VLAN 43.

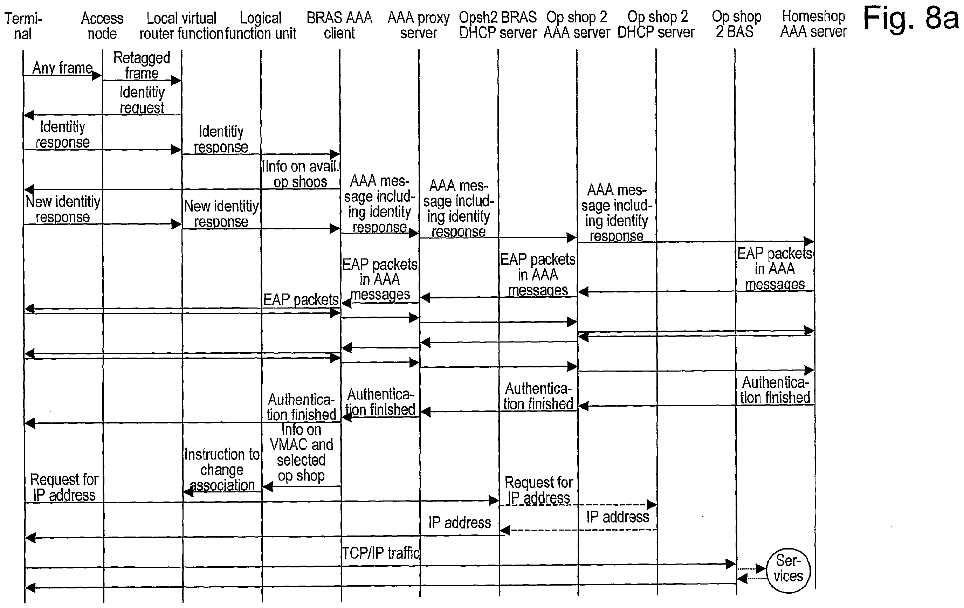

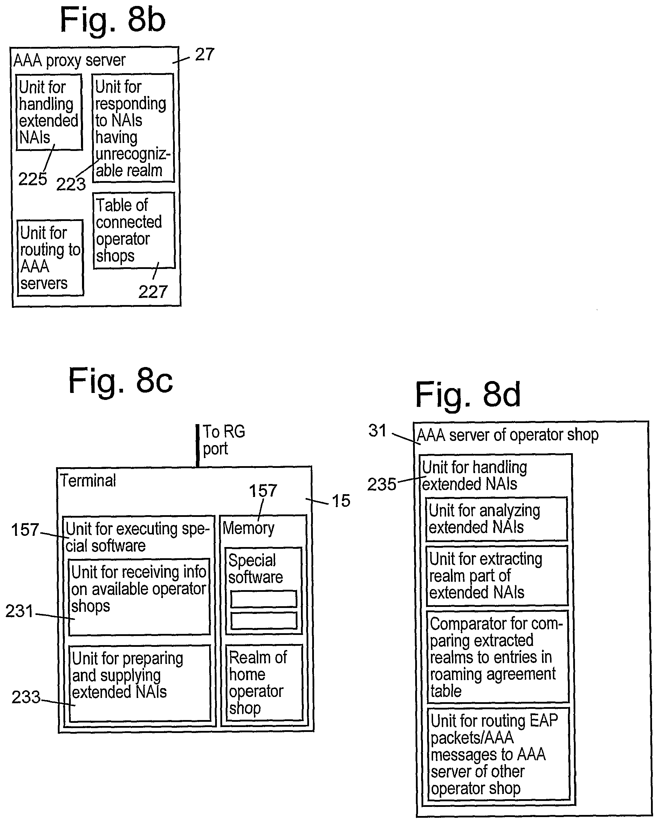

The different steps necessary for a roaming user to access a foreign operator shop 3.1, 3.2 for the case of the AAA client 23 located in the BRAS 17, special software provided in the user's terminal and the method a) described above for informing the user, are summarized below with reference to the signal diagram of Fig. 8a. The user is assumed to be logged in to a CPN 5 on a specific port 11 of the RG 1 from a terminal 15. Steps 1 - 7 are identical to the previously described steps 1 - 7, unless otherwise is explicitly stated, for the case where a user is accessing an operator shop 3.1, 3.2 via a CPN 5 in her/his home broadband access network and the AAA client 23 is located in the BRAS 17. Similarly, steps 16 - 19 are the same as the previously described steps 10 - 13 for the same case, the only difference being that when the user is accessing a foreign broadband access network, the selected one of the operator shops 3.1, 3.2 that are connected to the broadband access network 29 acts as a visited operator shop instead of a home operator shop. For ease of understanding, these steps are repeated below, but in a more summarized manner. In addition, a general difference is that in the example used to illustrate the previously described steps for the case where a user is accessing an operator shop 3.1, 3.2 via a CPN 5 in his home broadband access network and the AAA client 23 is located in the BRAS 17 operator shop No. 1, 3.1, is assumed to be selected, whereas in the example used to illustrate the steps below operator shop No 2, 3.2, is assumed to be selected, i.e. it is the visited operator shop, but this difference is of little significance to the procedures as such.
1. The user connects her/his terminal to a broadband access network 29, e.g. by simply turning on the terminal device that is assumed to be connected to an RG port 11.
2. A frame or frames from the terminal 15 is/are received in the AN 13, retagged and forwarded into the local default VLAN 43.
3. A retagged frame or retagged frames from the terminal 15 is/are received in the local VRF 49 of the BRAS 17 and specifically received by the Authenticator symbolically indicated at 56.
4. The Authenticator 56 sends an EAP-Identity-Request to the terminal 15.
5. The terminal 15 responds with an EAP-Identity-Response, including the user's identity in the form of a regular NAI such as described above.
6. The Authenticator passes the EAP-Identity-Response to AAA client function 23 in BRAS 17.
7. The AAA client 23 sends the EAP-Identity-Response in an AAA message to the AAA proxy server 27.
8. The AAA proxy server 27 examines the NAI and recognizes a realm part for which it has no available AAA route.
9. The AAA proxy server 27 sends a message, typically an EAP-Identity-Request, containing information about available operator shops via EAP to the terminal 15. Between the AAA proxy server 27 and the AAA client 23 the message is carried in an AAA message.
10. The terminal 15 receives information about available operator shops and selects one thereof, which has a roaming agreement with the home operator shop.
11. The terminal 15 sends a new EAP-Identity-Response including an NAI having the extended format such as described above.
12. The message is received by the AAA proxy server 27 that forwards the AAA request to the AAA server 31 of the wanted visited operator shop, in the example operator shop No. 2, 3.2.
13. The AAA server 31 in the wanted visited operator shop examines the NAI and finds the realm of the home operator shop 3h of the user.
14. The AAA server 31 in the wanted visited operator shop, in the example operator shop 3.2, forwards the message to the AAA server 31h of the home operator shop 3h.
15. An EAP authentication procedure between the AAA server 31h of the home operator shop 3h and the user terminal 15 through the AAA server 31 of operator shop No. 2, 3.2 in the example, the AAA proxy server 27 and the AAA client 23 of the BRAS 17 is performed. The EAP authentication procedure is handled end-to-end between the terminal 15 and the authentication server which is the AAA server 31h of the home operator shop 3h. Between the AAA client 23 of the BRAS 17 and the home AAA server 31h the EAP packets are encapsulated in AAA messages.
16. The logical function unit 57 in the BRAS 17 obtains information that the EAP/AAA procedure, in particular the identification and authentication procedures, has been completed and about the operator shop that has been selected. Out of the four alternatives for this in step 13 for the case described above where a user is accessing an operator shop 3.1, 3.2 via a CPN 5 in his home broadband access network and the AAA client 23 is located in the BRAS 17 only alternatives a and d are relevant in this case. In addition, it would be possible for the AAA client and the AAA proxy server to supply one part each of the information to the LU 57. The AAA client 23 would then supply the VMAC address of the terminal 15 together with the session identifier of the AAA session. The AAA client could do this as it receives the EAP-Identity-Request or after it has received, from the AAA server 31h in the home operator shop 3h, via the AAA server 31 in the selected visited operator shop, in the example operator shop No. 2, 3.2, via the AAA proxy server 27, the AAA message including the indication of a successful user authentication. The AAA proxy server would supply an FQDN equal to the realm of the selected visited operator shop, or possibly some other BRAS internal identifier of the selected visited operator shop, together with the session identifier of the AAA session. The logical function unit 57 would associate the VMAC address and the FQDN, or the other BRAS internal identifier, respectively, by matching the session identifiers received from the AAA client 23 and the AAA proxy 27 server respectively. The logical function unit instructs the AN 13 to change the existing association between VLANs, using the VMAC address of the terminal 15 to find the correct AN 13.
17. The AN 13 receives an association instruction message and changes tagging for VLANs accordingly.
18. After the user has become authenticated, the terminal 15 can proceed to acquire an IP address supplied by the DHCP server 59 in desired visited operator shop, operator shop No. 2, 3.2, in the example, using the respective DHCP server 61.2 in the BRAS 17 as a DHCP relay agent. Alternatively the DHCP server 61.1 in the BRAS 17 can allocate, if assigned a predetermined address range, IP addresses directly to the terminal 15 from the address range of the desired visited operator shop such as operator shop No. 2, 3.2.
19. After the terminal 15 has been given an IP address, the user can start traffic using TCP/IP, through the VLAN 41.2, the VRF 47.2 and the BAS 19 of the desired visited operator shop such as operator shop No. 2, 3.2.

The AN 13 and the BRAS 17 may have the same components and functions as in the case of a user accessing through his home broadband access network. In addition, the AAA proxy server 27 may have a unit 223, see Fig. 8b, for responding to NAIs having an unrecognizable realm part, and a unit 225 for handling extended NAIs. Such a handling unit may then be arranged to analyze received extended NAIs, extracting the realm of the home operator shop and the realm of the operator shop that the source of the NAI desires to use as the visited operator shop. It may compare the realm of the desired visited operator shop to those connected to the BRAS, such as by referencing a table or list stored in a memory place 227, and if the realm of the desired operator shop agrees with an entry in the list, route AAA messages, some of them including EAP packets, to the AAA server 31 of the respective operator shop 3.1, 3.2. The terminal 15 must have some special software, see Fig. 8d, such as e.g. a unit 231 for receiving, in a suitable EAP packet, information about available operator shops, and a unit 233 for preparing and supplying extended NAIs. The AAA servers 31 of the operator shops 3.1, 3.2 may use, as described above, lists of operator shops with which they have roaming agreements, stored in memory places 64. Furthermore, they may include, see Fig. 8e, a unit 235 for handling extended NAIs, such a unit arranged to analyze extended NAIs, to extract the realm of the home operator shop of the source of the extended NAI, to compare extracted realms to entries in the table and to route AAA messages, some of which including EAP packets, to the AAA server 31h of the home operator shop 3h in the case where an agreement with an entry is detected.

### Access through a CPN without support in software of terminal

As previously described, when a user or terminal 15 connects to an RG port 11, without a previously active session, she/he/it is for the communication by default directed to the local default VLAN 43, where the EAP authentication procedure is initiated by the Authenticator 56 of the BRAS 17. This is obviously also valid for a user wanting access to an operator shop through a foreign broadband access network.

Since the software of the terminal 15 in this case is assumed to have no support for the operator shop selection procedure, the terminal cannot receive operator shop information advertised by the broadband access network 29, irrespective of whether it is advertised using EAP or a new link layer protocol, i.e. alternatives a) and b) as described above. Thus, the terminal will supply the user's regular NAI to the broadband access network, unless the user has acquired operator shop information off-line, i.e. in some suitable way not using the services of the broadband access network, and has manually extended the NAI.

When faced with a non-routable NAI, the broadband access network 29, in particular the BRAS 17 thereof, is in this case arranged to bypass the actual authentication procedure, by immediately sending an EAP-Success packet, granting the user access to the local service network 51 and keeping the default association between the RG port VLAN 55 and the local default VLAN 43. Before sending the EAP-Success packet the broadband access network may optionally send an EAP-Notification-Request packet to the terminal 15 with a displayable message instructing the user to start her/his browser to select an operator shop, or publicly available services in the local service network 51. The EAP-Success packet and the optional preceding EAP-Notification-Request packet can be sent by the Authenticator 56 or the AAA proxy server 27. In the latter case, the Authenticator passes the EAP-Identity-Response packet from the terminal to the AAA client 23, which forwards it, included in an AAA message, to the AAA proxy server 27. Then, the AAA proxy server discovers that the packet is non-routable. In the former case, the Authenticator 56 itself discovers that the realm part of the NAI in the EAP-Identity-Response received from the terminal 15 does not belong to any of the operator shops 3.1, 3.2 that are connected to the broadband access network 29 and hence does not pass the packet to the AAA client 23.

Thereupon, when the user uses her/his browser, after acquiring an IP address from the address space of the broadband access network 29, in a procedure between the DHCP client of the terminal 15 and the general DHCP server 62 of the BRAS 17, she/he is redirected to a web page on the service portal 54 of the broadband access network, unless she/he attempts to access a specific web page in the local service network 51. On the web page obtained from the service portal the user can select between the available operator shops as well as services from the local service network.

If the user selects access to local services, the VLAN association, i.e. the association between the RG port VLAN 55 and the local default VLAN 43, as handled by the access node 13, and the IP address can remain as they are.

If the user clicks on a symbol for one of the available operator shops, this triggers, by a routine coupled to the displayed web page, the BRAS 17 to start executing the following steps, such as controlled by the logical function unit 57:
1. The BRAS 17 stores information on the selected operator shop and associates it with the virtual MAC address that is used for the concerned terminal 15 or, if no virtual MAC address is used, the actual MAC address of the terminal 15.
2. The BRAS 17 forces the DHCP client in the user's terminal 15 into the INIT state using a DHCP force renew procedure and a subsequent rejection of a possible request from the client to prolong its IP address lease from the address space of the broadband access network 29.
3. The BRAS 17 initiates a new EAP procedure towards the terminal 15, but this time with the user's selected operator shop stored.
   - This new EAP procedure will start in the same way as the previous one, i.e. with the EAP Authenticator 56 or the AAA proxy server 27 sending an EAP-Identity-Request packet to the terminal 15, but this time the BRAS 17 knows to which operator shop 3.1, 3.2 the resulting AAA request is to be routed. Thus it is ensured that the AAA request ends up in the selected operator shop 3.1, 3.2, i.e. in the AAA server 31 thereof, irrespective of which NAI the user provides. One way to achieve this is to let some unit in the BRAS 17, e.g. the EAP Authenticator unit 56, modify the NAI into the previously described extended format before handing it over to the AAA client 23 of the BRAS, but the AAA request may also be routed to the selected operator shop without any NAI modification, since the BRAS, that holds the knowledge about the selected operator shop, comprises both the EAP Authenticator unit 56, the AAA client 23 and the AAA proxy server 27.
   - If the BRAS 17 fails to initiate the second EAP procedure, or if the authentication fails, the operator shop selection information, which was associated with the virtual MAC address used for the concerned user, or the MAC address of the user's terminal 15 if virtual MAC is not used, eventually times out and is deleted.
   - Another method that may be used in this case is a method that relies on support from a central Diameter redirect agent, which is described in the cited published International patent application WO 2006/038844. That method is based on a central Diameter redirect agent that aggregates information about roaming agreements and visited network, i.e. visited operator shop, priority lists from operators, i.e. basically from home operator shops. The Diameter redirect agent information can be obtained through real-time operations, non-real-time - semi-manual - operations or manual off-line operations. In the case where this method is used, the terminal of a roaming user would supply a NAI having a realm part that has a specific ending, following a part that indicates the user's home operator shop that indicates the domain of the central Diameter agent. Thus, the AAA proxy server 27 of the broadband access network 29 will route the first AAA message pertaining to the user to the central Diameter redirect agent. The Diameter redirect agent returns a prioritized list of AAA servers of potential intermediary, i.e. visited, operator shops. The AAA proxy server searches the received list for a AAA server of an operator shop with which it has an association, i.e. one of the operator shops that are connected to the broadband access network, and selects the one of those that has the highest priority indicated. Then the AAA proxy server routes the initial AAA message to the AAA server 31 of the selected visited operator shop 3.1, 3.2.
4. Following a successful user authentication the BRAS 17 instructs the concerned AN 13, e.g. via SNMP, or some other protocol that the BRAS can use to control ANs, to associate the concerned RG port VLAN 55 with the service VLAN 41.1, 41.2 associated with the selected operator shop 3.1, 3.2, e.g. VLAN No. 1 if operator shop No. 1 is selected, instead of the local default VLAN 43. Then the terminal 15 may proceed to acquire an IP address via DHCP to enable subsequent IP communication. In order for the BRAS 17 to know which AN 13 to instruct virtual MAC must be used.

In the description above the AAA client 23 is assumed to be located in the BRAS 17, connected to the local VRF 49, but if the AAA client located most adjacent to the terminal is located in the AN 13, virtual MAC is not needed for this purpose, but the BRAS then has to be capable of triggering the AN to reinitiate the EAP procedure towards the terminal 15, and possibly inform the AN about the selected operator shop, e.g. using SNMP or some other protocol that the BRAS can use to control ANs.

If access only to the local service network 51 is desired, the user may supply, as in the case of access through the user's home broadband access network, a special NAI having a realm part belonging to the broadband access network 29, dedicated for this purpose. The AN 13 may then keep its association between the concerned RG port VLAN 55 and the local default VLAN 43. However, the communication from the terminal 15 of a roaming user will anyway be restricted to the local default VLAN 43 and the local service network 51 before the second EAP procedure is concluded. Hence, the terminal of a roaming user may, as well as using the above mentioned special NAI, supply the user's regular NAI and then select to access only services from the local service network, in which case the second EAP procedure is not initiated.

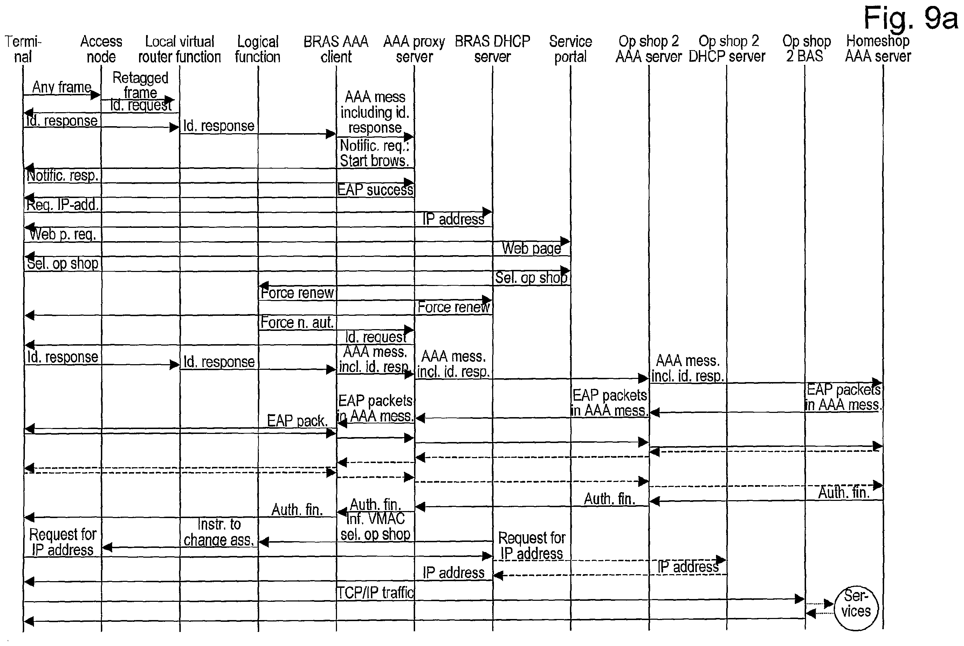

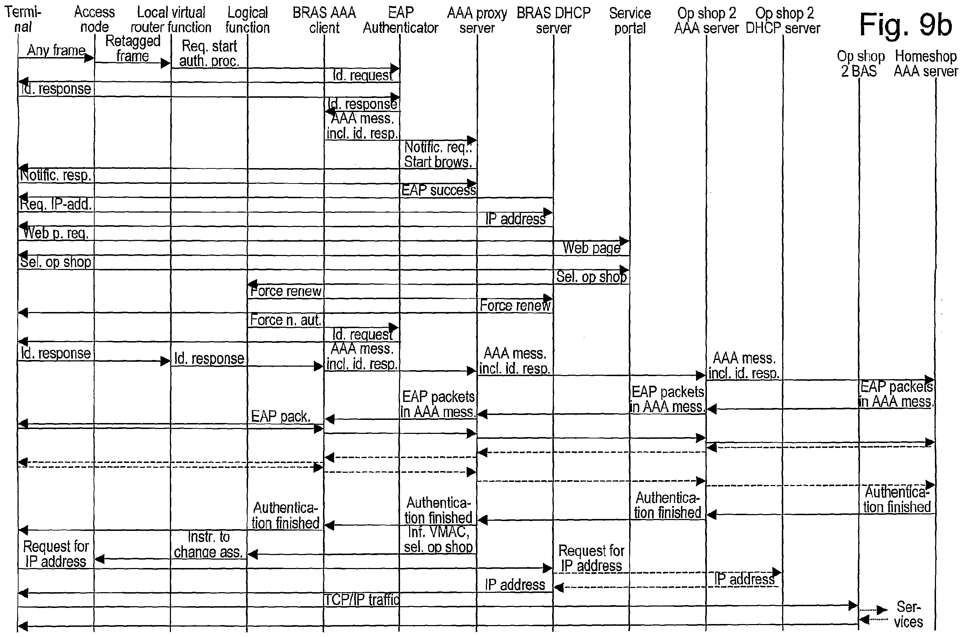

The different steps necessary for a roaming user to access an operator shop 3.1, 3.2 for the case of the AAA client 23 located in the BRAS 17 and no special software provided in the terminal 15 are summarized below with reference to the signal diagrams of Figs. 9a and 9b illustrating different cases. The user is assumed to be logged in to a CPN 5 on a specific port 11 of the RG 1 from a terminal 15. Steps 1 - 7 are identical, unless an exception is explicitly stated), to the previously described steps 1 - 7 for the case where a user is accessing an operator shop 3.1, 3.2 via a CPN 5 in his home broadband access network and where the AAA client 23 is located in the BRAS 17. Similarly, steps 25 - 28 for the case illustrated in Fig. 9a and steps 26 - 29 for the case illustrated in Fig. 9b are the same as the previously described steps 10 - 13 for the case where a user is accessing an operator shop 3.1, 3.2 via a CPN 5 in his home broadband access network and where the AAA client 23 is located in the BRAS 17, with the only difference being that when the user is accessing a foreign broadband access network, the selected one of the operator shops 3.1, 3.2 that are connected to the broadband access network acts as a visited operator shop instead of a home operator shop. For ease of understanding, these steps are repeated below, but in a more summarized manner. In addition, a general difference is that in the example used to illustrate the previously described steps for the case where a user is accessing an operator shop 3.1, 3.2 via a CPN 5 in his home broadband access network and where the AAA client 23 is located in the BRAS 17 operator shop No. 1 3.1 is selected, whereas in the example used to illustrate the steps below operator shop No 2 3.2 is selected, as the visited operator shop, but this difference is of no significance to the procedures as such. Of the above described two alternatives for which entity that discovers that the NAI does not belong to any of the operator shops that are connected to the broadband access network, i.e. the AAA proxy server 27 or the EAP Authenticator 56, the AAA proxy server 27 is assumed in the description of the steps below.

First the steps for the case illustrated in Fig. 9a will be described.
1. The user connects his terminal 15 to a broadband access network 29, e.g. by simply turning on his terminal device that is assumed to be connected to an RG port 11.
2. A frame or frames from the terminal 15 is/are through the residential gateway 1 or switch received in the AN 13, is/are retagged therein and forwarded into the local default VLAN 43.
3. A retagged frame or retagged frames from the terminal 15 is/are received in the local VRF 49 of the BRAS 17.
4. From the local VRF 49 an EAP-Identity-Request is sent to the terminal 15.
5. The terminal 15 responds with an EAP-Identity-Response, including the user's identity in the form of a regular NAI such as described above.
6. The local VRF 49 passes the EAP-Identity-Response to AAA client function 23 in the BRAS 17.
7. The AAA client 23 sends the EAP-Identity-Response in an AAA message to the AAA proxy server 27.
8. The AAA proxy server 27 examines the NAI and recognizes a realm part for which it has no available AAA route.
9a. In this optional step, the AAA proxy server 27 may send an EAP-Notification-Request packet to the terminal 15, including a displayable text string instructing/recommending the user to start her/his browser and select an operator shop.
9b. In this optional step, performed only if step 9a is performed, the AAA proxy server 27 receives an EAP-Notification-Response in return from the terminal. Such a response is mandatory according to the EAP specification.
10. The AAA proxy server 27 sends an EAP-Success packet to the terminal.
11. The terminal 15 receives the EAP-Success packet and acquires an IP address from the BRAS DHCP server 62.
12. The terminal 15 connects through its browser to the service portal 54 in the local service network 51, either directly or after being redirected during an attempt to connect to a server outside the local service network.
13. The terminal 15 receives a web page from the service portal 51 including information about available operator shops.
14. The user, using the browser of her/his terminal 15, selects one of the available operator shops which has a roaming agreement with the user's home operator shop 3h.
15. Information about the selection made is transferred to the BRAS 17, such as first to the service portal 54.
16. Information about the selection made is stored in the BRAS 17 such as first transferred from the service portal 54 to the logical function unit 57 and then stored by this unit in a suitable memory, the information stored e.g. in the form of the realm part of the NAI or some other BRAS internal indicator of the selected operator shop, coupled to e.g. the virtual MAC address used for the terminal 15 or some other suitable information identifying the user terminal. The coupling of these stored data to each other may be executed by e.g. storing them together, storing them separately with a reference, such as a pointer, between them, storing them in a mutual software "object", such as in object oriented programming languages.
17. The BRAS 17 transmits a message, e.g. a DHCP FORCERENEW message, such as commanded by its logical function unit 57 sending a message to the DHCP server 62, to the terminal 15, forcing it into the INIT state according to DHCP to make the IP address of the terminal no longer usable. If the terminal subsequently requests the DHCP server to renew or prolong the lease of the old IP address of the terminal, the DHCP server will reject such a request.
18. The BRAS 17, e.g. the AAA proxy server 27, such as commanded by a message received from the logical function unit 57, sends an EAP-Identity-Request to the terminal 15.
19. The terminal 15 sends an EAP-Identity-Response, including the user's identity in the form of a regular NAI.
20. The EAP-Identity-Response is received by the BRAS AAA client 23, which includes it in an AAA message and sends it to the AAA proxy server 27.
21. The message is received by the AAA proxy server 27, as described above for the initial EAP-Identity-Response in steps 6 and 7. The AAA proxy server examines the NAI and compares it to stored entries, finds in the example that operator shop No. 2, 3.2 is selected as the visited operator shop and forwards the AAA request to the AAA server 31 in operator shop No. 2, 3.2.
22. The AAA server 31 in the wanted visited operator shop, in the example operator shop No. 2, 3.2, examines the NAI of the AAA request and finds the realm of the home operator shop 3h of the user.
23. The AAA server 31 in the wanted visited operator shop forwards a message to the AAA server 31h of the home operator shop 3h, see also Fig. 2j.
24. An EAP authentication procedure between the AAA server 31h of the home operator shop 3h and the user terminal 15 through the AAA server 31 of operator shop No. 2, 3.2 in the example, the AAA proxy server 27 and the AAA client 23 of the BRAS 17 is performed. This EAP authentication procedure is handled end-to-end between the terminal 15 and the authentication server which is the AAA server 31h of the home operator shop 3h. Between the AAA client 23 of the BRAS 17 and the home AAA server 31h the EAP packets are encapsulated in AAA messages.
25. The logical function unit 57 in BRAS 17 obtains information that the EAP/AAA procedure has been completed and about the operator shop that has been selected if it has not been informed thereof in step 16 above. Out of the four alternatives for this in step 13 for the case where a user is accessing an operator shop 3.1, 3.2 via a CPN 5 in his home broadband access network for the case where the AAA client 23 is located in the BRAS 17 only alternatives a) and d) are relevant in this case. In addition, it would also be possible for the AAA client 23 and the AAA proxy server 27 to supply one part each of the information to the LU 57. The AAA client would then supply the VMAC address of the terminal 15 together with the session identifier of the AAA session. The AAA client 23 could do this as it receives the EAP-Identity-Request or after it has received, from the AAA server 31h in the home operator shop, via the AAA server 31 in the selected visited operator shop, via the AAA proxy server 27, the AAA message including the indication of a successful user authentication. The AAA proxy server would supply an FQDN equal to the realm of the selected visited operator shop, or some other suitable BRAS internal identifier of the selected visited operator shop, together with the session identifier of the AAA session. The logical function unit 57 would associate the VMAC address and the FQDN, or another BRAS internal identifier respectively, by matching the session identifiers received from the AAA client 23 and the AAA proxy server 27, respectively. The logical function unit instructs the AN 13 to change the existing association between VLANs, using the VMAC address of the terminal 15 to find the correct AN 13.
26. The AN 13 receives an association instruction message and changes tagging for VLANs accordingly.
27. After the user has become authenticated, the terminal 15 can proceed to acquire an IP address supplied by the DHCP server 59 in the selected visited operator shop No. 2, 3.2 in the example, using the respective DHCP server 61.2 in the BRAS 17 as a DHCP relay agent. Alternatively the DHCP server 61.2 in the BRAS 17 can allocate, if assigned a predetermined address range, an IP address directly to the terminal 15 from the address range of the selected visited operator shop, operator shop No. 2, 3.2, in the example.
28. After the terminal 15 has been given an IP address, the user can start traffic using TCP/IP, through the VLAN 41.2, the VRF 47.2 and the BAS 19 of the selected visited operator shop, in the example operator shop No. 2, 3.2.

Second, the steps for the case illustrated in Fig. 9b will be described.
1. The user connects his terminal 15 to a broadband access network 29, e.g. by simply turning on his terminal device that is assumed to be connected to an RG port 11.
2. A frame or frames from the terminal 15 is/are through the residential gateway 1 or switch received in the AN 13, is/are retagged therein and forwarded into the local default VLAN 43.
3. A retagged frame or retagged frames from the terminal 15 is/are received in the local VRF 49 of the BRAS 17 responding by forwarding them to the EAP Authenticator symbolically indicated at 56. The EAP Authenticator 56 may be associated with, connected to or integrated with the local VRF 49.
4. The EAP Authenticator 56 sends an EAP-Identity-Request to the terminal 15.
5. The terminal 15 responds with an EAP-Identity-Response, including the user's identity in the form of a regular NAI such as described above.
6. The EAP Authenticator 56 passes the EAP-Identity-Response to AAA client function 23 in the BRAS 17.
7. The AAA client 23 sends the EAP-Identity-Response in an AAA message to the AAA proxy server 27.
8. The AAA proxy server 27 examines the NAI and recognizes a realm part for which it has no available AAA route.
9a. In this optional step, the AAA proxy server 27 may send an EAP-Notification-Request packet to the terminal 15, including a displayable text string instructing/recommending the user to start her/his browser and select an operator shop.
9b. In this optional step, performed only if step 9a is performed, the AAA proxy server 27 receives an EAP-Notification-Response in return from the terminal. Such a response is mandatory according to the EAP specification.
10. The AAA proxy server 27 sends an EAP-Success packet to the terminal 15.
11. The terminal 15 receives the EAP-Success packet and acquires an IP address from BRAS DHCP server 62.
12. The terminal 15 connects through its browser to the service portal 54 in the local service network 51, either directly or after being redirected during an attempt to connect to a server outside the local service network.
13. The terminal 15 receives a web page from the service portal 51 including information about available operator shops.
14. The user, using the browser of her/his terminal 15, selects one of the available operator shops which has a roaming agreement with the user's home operator shop 3h.
15. Information about the selection made is transferred to the BRAS 17, such as first to the service portal 54.
16. Information about the selection made is stored in the BRAS 17 such as first transferred from the service portal 54 to the logical function unit 57 and then stored by this unit in a suitable memory, the information stored e.g. in the form of the realm part of the NAI or some other BRAS internal indicator of the selected operator shop, coupled to e.g. the virtual MAC address used for the terminal 15 or some other suitable information identifying the user terminal.
17. The BRAS 17 transmits a message, e.g. a DHCP FORCERENEW message, such as commanded by its logical function unit 57 sending a message to the DHCP server 62, to the terminal 15, forcing it into the INIT state according to DHCP to make the IP address of the terminal no longer usable. If the terminal subsequently requests the DHCP server to renew or prolong the lease of the old IP address of the terminal, the DHCP server will reject such a request.
18. The BRAS 17, e.g. the EAP Authenticator 56, such as commanded by a message received from the logical function unit 57, sends an EAP-Identity-Request to the terminal 15.
19. The terminal 15 sends an EAP-Identity-Response, including the user's identity in the form of a regular NAI, to the EAP Authenticator 56.
20. The EAP Authenticator 56 passes the EAP-Identity-Response to the AAA client function 23 in the BRAS 17.
21. The EAP-Identity-Response is received by the BRAS AAA client 23, which includes it in an AAA message and sends it to the AAA proxy server 27.
22. The AAA message is received by the AAA proxy server 27 that examines the NAI and compares it to stored entries, finds in the example that operator shop No. 2, 3.2 is selected as the visited operator shop and forwards the AAA request to AAA server 31 in the selected visited operator shop, operator shop No. 2, 3.2 in the example.
23. The AAA server 31 in the wanted visited operator shop, in the example operator shop No. 2, 3.2, examines the NAI of the AAA request and finds the realm of the home operator shop 3h of the user.
24. The AAA server 31 in the wanted visited operator shop forwards a message to the AAA server 31h of the home operator shop 3h, see also Fig. 2j.
25. An EAP authentication procedure between the AAA server 31h of the home operator shop 3h and the user terminal 15 through the AAA server 31 of operator shop No. 2, 3.2 in the example, the AAA proxy server 27 and the AAA client 23 of the BRAS 17 is performed. This EAP authentication procedure is handled end-to-end between the terminal 15 and the authentication server which is the AAA server 31h of the home operator shop 3h. Between the AAA client 23 of the BRAS 17 and the home AAA server 31h the EAP packets are encapsulated in AAA messages.
26. The logical function unit 57 in BRAS 17 obtains information that the EAP/AAA procedure has been completed and about the operator shop that has been selected if it has not been informed thereof in step 16 above. Out of the four alternatives for this in step 13 for the case where a user is accessing an operator shop 3.1, 3.2 via a CPN 5 in his home broadband access network for the case where the AAA client 23 is located in the BRAS 17 only alternatives a) and d) are relevant in this case. In addition, it would also be possible for the AAA client 23 and the AAA proxy server 27 to supply one part each of the information to the LU 57. The AAA client would then supply the VMAC address of the terminal 15 together with the session identifier of the AAA session. The AAA client 23 could do this as it receives the EAP-Identity-Request or after it has received, from the AAA server 31h in the home operator shop, via the AAA server 31 in the selected visited operator shop, via the AAA proxy server 27, the AAA message including the indication of a successful user authentication. The AAA proxy server would supply an FQDN equal to the realm of the selected visited operator shop, or some other suitable BRAS internal identifier of the selected visited operator shop, together with the session identifier of the AAA session. The logical function unit 57 would associate the VMAC address and the FQDN, or another BRAS internal identifier respectively, by matching the session identifiers received from the AAA client 23 and the AAA proxy server 27, respectively. The logical function unit instructs the AN 13 to change the existing association between VLANs, using the VMAC address of the terminal 15 to find the correct AN 13.
27. The AN 13 receives an association instruction message and changes tagging for VLANs accordingly.
28. After the user has become authenticated, the terminal 15 can proceed to acquire an IP address supplied by the DHCP server 59 in the selected visited operator shop No. 2, 3.2 in the example, using the respective DHCP server 61.2 in the BRAS 17 as a DHCP relay agent. Alternatively the DHCP server 61.2 in the BRAS 17 can allocate, if assigned a predetermined address range, an IP address directly to the terminal 15 from the address range of the selected visited operator shop, operator shop No. 2, 3.2, in the example.
29. After the terminal 15 has been given an IP address, the user can start traffic using TCP/IP, through the VLAN 41.2, the VRF 47.2 and the BAS 19 of the selected visited operator shop, in the example operator shop No. 2, 3.2.

The AN 13 and the BRAS 17 may have the same components and functions as in the case of a user accessing through his home broadband access network.

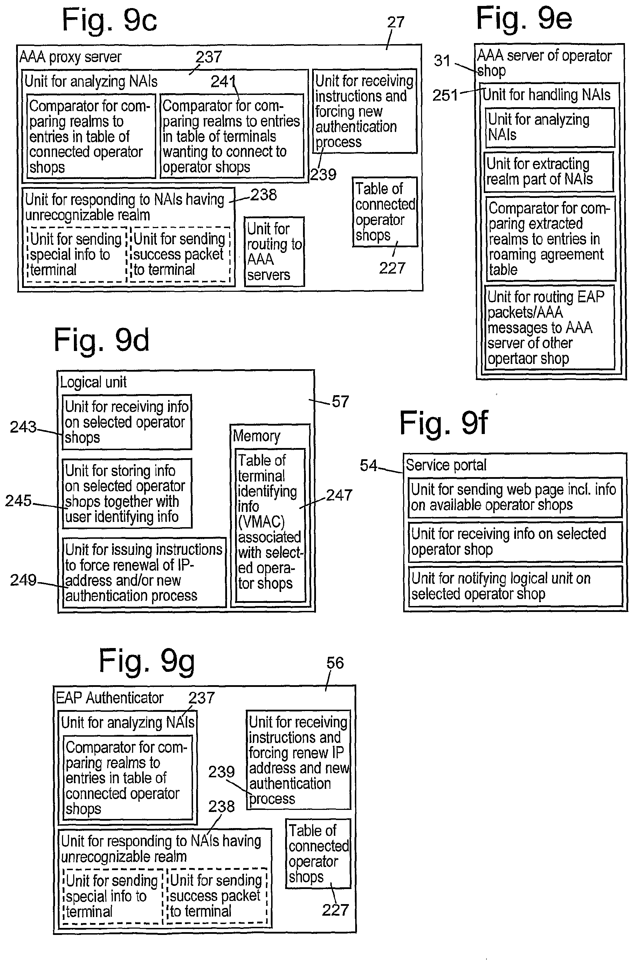

In addition the AAA proxy server 27 may have a unit 237, see Fig. 9c, for analyzing NAIs and comparing the realm parts thereof to available operator shops and a unit 238 for responding to NAIs having an unrecognizable realm part, including an optional subunit for transmitting a message urging the user to start a browser and a subunit for transmitting an EAP-Success message to a terminal. For the comparing it may reference a table or list stored in a memory place 227. Alternatively, the EAP Authenticator 56 may have such additional units, see Fig. 9g. The AAA proxy server 27, or the EAP Authenticator, respectively, may further include a unit 239 for receiving instructions to force a new authentication process and to send a message to the terminal 15 for starting such a new authentication process. The AAA proxy server may have a unit 241 for comparing NAIs or similar information to entries in a stored list and for routing, for NAIs for which the information agrees with an entry, to the AAA server 31 of an operator shop 3.1, 3.2, for which there is an identification stored associated with said entry.

The logical unit 57, see Fig. 9d, that can be collocated with or included in some other unit in the BRAS 17, may include a unit 243 for receiving, when a user clicks an appropriate symbol on web page, information from the service portal 54 on the selected operator shop, a unit 245 for storing this information together with necessary information to identify the user's terminal, such as the VMAC address thereof, in a memory place 247, and a unit 249 for sending instructions to the AAA proxy server 27 or the EAP Authenticator 56 to force a new authentication process and/or sending instructions to force renewal of the IP address of a terminal.

The AAA servers 31 of the operator shops 3.1, 3.2 may use, as described above, lists of operator shops with which they have roaming agreements, stored in memory places 64. Furthermore, they may include, see Fig. 9e, a unit 251 for handling NAIs, such a unit arranged to analyze NAIs, extract the realm part thereof, compare realms to entries in the table and route AAA messages, some of which may include EAP packets, to the AAA server 31h of the home operator shop in the case where an agreement with an entry is detected.

The service portal 54 may, as illustrated in Fig. 9f, include a unit for sending web pages, such as a web page including information about available operator shops, a unit for receiving information from web pages when they are displayed on a user device, or more specifically for receiving information in HTTP messages from terminals accessing such web pages or links on such web pages, such as information about a selected operator shop, and a unit for responding to such received information, forwarding the information to some suitable recipient such as the logical function unit 57 or possibly the EAP Authenticator 56.

### Access through a public WLAN AP supporting the virtual AP concept

For a public WLAN AP 7 that supports the virtual AP concept the access procedure is substantially similar to that described above for a user accessing through her/his home broadband access network, only the authentication procedure being executed from the AAA server of the home operator shop 31h instead of that of an operator shop connected to the broadband access network 29, and may in particular include at least the following steps.

As described above, when a user or terminal 15' accesses the broadband access network 29 through a public WLAN AP 7, she/he/it must use the SSID associated with the operator shop 3.1, 3.2 that she/he has selected. Guiding information, in addition to the contents of the SSIDs themselves, may be obtained beforehand from the service portal 54 that can be reached by the user/terminal first attaching to the WLAN AP 7 using the SSID associated with the local WLAN AP VLAN 45.

The WLAN AP will then ensure that the AAA request resulting from the EAP procedure is routed to the selected operator shop 3.1, 3.2, either
- by modifying the NAI into the extended format, such as
   "home-op-shop/name@op-shop-realm-associated-with-selected-SSID" or
   "home-op-shop!name@op-shop-realm-associated-with-selected-SSID",
or by conveying in some suitable way the corresponding information, such as the used SSID, to the AAA proxy server 27.

However, the authentication procedure must be made from the AAA server 31h of the home operator shop 3h of the user. Thus, when the AAA proxy server 27 receives the AAA message containing the EAP-Identity-Request, it forwards the AAA request to the AAA server 31 of the wanted visited operator shop, as indicated by the extended NAI or other equivalent information. Before forwarding the AAA message the AAA proxy server removes the "equivalent information", e.g. the used SSID, if any, from the AAA message. If an extended NAI is used, the AAA message is handled in the same way as described for the case where a roaming user accesses a foreign broadband access through a CPN using the extended NAI method to indicate the wanted visited operator shop. That is, either the AAA proxy server or the AAA sever of the selected operator shop turns the modified NAI into its regular format before forwarding the AAA message. The AAA server 31 in the wanted visited operator shop 3.1 or 3.2 examines the NAI, finds the realm of the home operator shop 3h of the user, checks that there is a roaming agreement, and forwards the AAA request to the appropriate authentication server, i.e. the AAA server 31h of the home operator shop of the user. Then, the EAP authentication procedure is executed end-to-end between the AAA server 31h of the home operator shop 3h and the user terminal 15' through the AAA server 31 of the selected visited operator shop 3.1, 3.2, the AAA proxy server 27 and the AAA client 25 of the WLAN AP 7. Between the AAA client 25 and the AAA server 31h the EAP packets are encapsulated in AAA messages.

The remaining steps may be the same as those described for a non-roaming user.

### Access through a public WLAN AP not supporting the virtual AP concept

If the public WLAN AP 7 does not support the virtual AP concept, the access procedure for a roaming user is similar to that described for access through a CPN 5 for a roaming user. In this case an AN 13' is used between the WLAN AP and the BRAS 17, see Fig. 2j. Furthermore, the VLANs 41.1, 41.2, 43 illustrated in Fig. 2a that extend all the way to the WLAN AP, i.e. VLAN No. 1, VLAN No. 2 and the local WLAN AP VLAN, do not encompass the link between the AN 13' and the WLAN AP 7, but instead ends in the AN 13'. No VLAN separation is be needed between the WLAN AP 7 and the AN 13'.

### Access through a WLAN AP not supporting the virtual AP concept with special software in terminal

If there is specific support for operator shop selection in the client software in the terminal 15', the access procedure is substantially the same as described for the case of access through a CPN 5 using extended NAls. Informing the terminal about the available operator shops 3.1, 3.2 may be done in the same way and the above-mentioned methods plurality of service providing networks described respectively in the cited published International patent applications WO 2006/038844 and WO 2006/038843 can also be used.

A difference is that the AAA client 25 is located in the WLAN AP 7 instead of in the BRAS 17. The AAA request resulting from the EAP-Identity-Response during the EAP authentication procedure is routed to the BRAS AAA proxy server 27 and the AAA client of the WLAN AP includes the MAC address of the terminal 15' in the AAA request, e.g. in the RADIUS Calling-Station-Id attribute, which is also reused in the Diameter protocol, or a vendor specific attribute. During, or immediately following, the authentication procedure the AAA server 31h of the home operator shop 3h provides one or more session keys, possibly produced as a byproduct in the authentication procedure, to the WLAN AP 7 to be used for the cryptographic protection mechanisms of IEEE 802.11i. As before, following a successful user authentication the BRAS 17 instructs the AN 13', e.g. using SNMP or some other protocol that the BRAS can use to control ANs, to associate the current MAC address of the terminal 15' with the service VLAN 41.1, 41.2 of the selected visited operator shop 3.1, 3.2, e.g. VLAN No. 2 if operator shop No. 2 was selected as the visited operator shop. Then the terminal may proceed to acquire an IP address via DHCP to enable subsequent IP communication.

### Access through a public WLAN AP not supporting the virtual AP concept without special software in terminal

If there is no support for the operator shop selection in the client software in the terminal 15', extended NAls cannot be used. Instead the BRAS AAA proxy server 27 may be arranged to immediately approve of the user authentication, when it is faced with a non-routable AAA request, i.e. an AAA request including a destination realm for which the AAA proxy server has no route. The BRAS 17 instructs the AN 13' to associate the MAC address of the user's terminal, which was received in the AAA request, with the local WLAN AP VLAN 45. The result is of course the same if the BRAS 17 sends no instructions at all to the AN. Optionally the AAA proxy server 27 may send an EAP-Notification-Request to the terminal 15' with a displayable string encouraging the user to start her/his browser to be used for operator shop selection.

The user now has access to the local service network 51 and the service portal 54. On the service portal, to which the browser running in the user's terminal 15' is redirected if trying to access an external web page, i.e. from a server located outside the local service network, the user can find information about available operator shops. The user selects an operator shop, or local services, by clicking on a symbol for one of them. The current MAC address of the terminal is then associated with the choice and both the MAC address and an indication of the choice are stored in the BRAS 17. Then, unless the user has selected access to local services, the terminal 15' is forced to abandon its IP address, as described for the case of access through a CPN 5 for a roaming user.

If the AAA protocol is Diameter, the next step is for the AAA proxy server 27 to request the WLAN AP 7 to re-authenticate the terminal 15' through a Re-Auth-Request AAA message. The AAA client 25 of the WLAN AP 7 initiates a new EAP authentication procedure towards the terminal by sending an EAP-Identity-Request packet and receives an EAP-Identity-Response in return. The AAA proxy server matches the subsequent AAA request with the stored visited operator shop selection through the terminal MAC address that the AAA client 25 in the WLAN AP 7 includes in the AAA request, e.g. in the RADIUS Calling-Station-Id attribute, which is also reused in the Diameter protocol, or a vendor specific attribute. This time the AAA messages carrying the EAP procedure are routed between the WLAN AP 7 and the AAA server 31h of the user's home operator shop 3h via the AAA server 31 of the selected visited operator shop 3.1, 3.2. The re-authentication triggers IEEE 802.11i mechanisms to be initiated and after that the AAA client 25 in the WLAN AP 7 initiates a new accounting subsession, which clearly distinguishes any accounting data preceding the re-authentication from accounting data subsequent to the re-authentication procedure. Possibly, the same method can be used, if the AAA protocol is RADIUS. In the worst case the terminal 15' would have to re-connect and initiate a new EAP procedure itself.

This procedure leaves the WLAN AP 7 unaffected and may thus be used with available off-the-shelf APs.

If no AN 13' is used between the WLAN AP 7 and the BRAS 17, the BRAS must send its instructions to the WLAN AP and the WLAN AP must include a unit for receiving such instructions and for associating the MAC address of the user's terminal 15' with one out of several VLANs 41.1, 41.2, 43, these VLANs in this case extending all the way to the WLAN AP, according to the received instructions.

### Access through an IPsec tunnel

The layer 3 solution, based on IPsec tunnels, can also be used by a roaming user accessing the broadband access network 29 from the terminal 15' through a WLAN AP 7, considering the fact that the authentication of the user must always be executed between the user and the AAA server 31h of the user's home operator shop 3h instead of between the user and the AAA server of the wanted operator shop 3.1, 3.2, the latter AAA server actually serving as a relay agent in the authentication procedure.

The variants of the IPsec tunnel based layer 3 solution are the same as for the case of a user accessing his home broadband access network.

### Access through an IPsec tunnel to a common tunnel endpoint in the BRAS

The procedure described above for a user accessing an operator shop through his home broadband access network using a single common tunnel endpoint for all connected operator shops 3.1, 3.2 has to be modified as follows.

The IPsec tunnel to the local VRF 49 in the BRAS 17, or a dedicated tunnel endpoint device 145, is established in the same way as described for a user accessing his home broadband access network. However, since neither the tunnel endpoint itself nor the regular NAI provided by the terminal 15' indicates to which of the connected operator shops 3.1, 3.2 the AAA requests, and subsequent user data, are to be routed, extensions to the procedure are needed. During the EAP procedure the user can instead indicate the selected visited operator shop through an extended NAI, of the format described above
"home-op-shop/name@visited-op-shop" or
"home-op-shop!name@visited-op-shop"

If the user does not supply an extended NAI, the EAP based advertising of operator shop information may be used to let the user or terminal 15' select one of the available operator shops 3.1, 3.2 and include the realm thereof in a subsequently transferred extended NAI, as described in the cited standard text Farid Adrangi (Ed.), "Mediating Network Discovery and Selection", Internet draft, <draft-adrangi-eap-network-Discovery-and-Selection-01.txt>.

Before forwarding an AAA request the AAA proxy server 27 may turn the extended NAI into a regular NAI, having the format
"name@home-op-shop"
by deleting the "visited-op-shop" realm, moving the "home-op-shop" realm to the right of the "@" character and deleting the "/" or "!" character before the "name" part. Otherwise the AAA server 31 in the selected visited operator shop 3.1, 3.2 turns the extended NAI into a regular NAI.

The above mentioned method that is described in the cited International patent application WO 2006/038844 and relies on support from a central Diameter relay agent is also applicable to this case.

### Access through an IPsec tunnel to an operator shop specific endpoint in the BRAS

The procedures using a dedicated tunnel endpoint for each connected operator shop 3.1, 3.2 can be almost entirely reused from the home broadband access network case. It is the task of the AAA server 31 of the selected one of the visited operator shops 3.1, 3.2 to route the AAA requests to the home AAA server 31h of the user, based on the realm part of the NAI that the terminal 15 supplies, the NAI indicating the realm of the home operator shop of the user of the terminal.

### Access through an IPsec tunnel to a broadband access server

The procedures using an IPsec tunnel to the BAS 31 of the selected visited operator shop 3.1, 3.2 can be almost entirely reused from the home broadband access network case. It is the task of the AAA server 31 of the selected visited operator shop 3.1, 3.2 to route the AAA requests to the home AAA server 31h of the user, based on the realm part of the NAI that the terminal supplies and indicates the realm of the user's home operator shop.

Hence, methods and procedures as described herein allow a user/terminal 15, 15' that accesses a broadband access network 29 to select an operator shop out of multiple operator shops 3.1, 3.2 connected to the broadband access network. This is possible for users accessing their home broadband access networks as well as for users roaming in foreign broadband access networks.

Both layer 2 and layer 3 methods are provided in order to cope with a variety of access scenarios, including accessing the broadband access network 29 through a dedicated RG port, a non-dedicated RG port, a home WLAN AP, a home NAT, and a public WLAN AP, provided by the broadband access network.

Hence, the methods and procedures as described herein and the accordingly modified components in a broadband access network as described herein are parts of a multi-operator (shop) mobile broadband access network environment.

Methods and associated devices/nodes have been described for supporting users, both in home and foreign broadband access networks, in a broadband access network context with multiple operator shops. Two main areas are identified:
- Layer 2 methods that are used to associate a user/terminal with the service VLAN of a selected operator shop. Mechanisms used for users roaming in foreign broadband access networks may be particularly important.
- Layer 3 methods using IPsec tunnels that are handled internally in the BRAS. DHCP may be used to inform terminals about available potential tunnel endpoints.

The specific division and assigning of method steps to different components as described have been used for illustration purposes, in order to provide a clear and understandable description and claiming of the invention.

Therefore, the invention in its broader aspects is not limited to the specific details, representative devices and illustrated examples shown and described herein.

## Claims

1. An access node (13) adapted to be connected in an Ethernet type network between an access point (1) of user devices (15, 15') and a broadband remote access server (17) for providing broadband access to a plurality of service providing networks (3.1, 3.2), the access node including
- a handling unit for handling virtual local area networks, the handling unit including a memory,
the access node being **characterized in that**
- the access node has a first virtual local area network function for implementing a first virtual local area network (43) including the access node and a local virtual router function unit (49) of the broadband remote access server,
- for each one of said plurality of service providing networks, the access node has a second virtual local area network function, each second virtual local area network function being for implementing a respective second virtual local area network (41.1, 41.2) including the access node and a respective one of dedicated virtual router function units (47.1, 47.2) of the broadband remote access server, the respective one of the dedicate virtual router function units being for communication with the respective one of said plurality of service providing networks, the respective dedicated virtual router function unit being adapted to directly transfer Ethernet frames from and to a broadband access server (19) of the respective one of the service providing networks,
- the memory stores identifications of Ethernet frames transmitted in
-- the first virtual local area network and
-- the second virtual local area networks, and
- the access node comprises a control unit connected to the handling unit, the control unit being
- - for commanding the handling unit to transmit frames from a new user device that has connected itself to the access point into the first virtual local area network,
- - for receiving information from the broadband remote access server in respect of routing of frames, and
- - for commanding the handling unit to transmit frames from a user device which is connected to the access point into one of the second virtual local area networks as given by information received from the broadband remote access server, instead of into the first virtual local area network, the frames thereby being transmitted to the broadband access server of the respective service providing network.

2. An access node according to claim 1, wherein the control unit is adapted to receive information including a Medium Access Control, MAC, address of the user device connected to the access point and to command the handling unit to transmit frames from this address into said one of the second virtual local area networks.

3. An access node according to claim 2, wherein the MAC address is a Virtual MAC address and that the access node includes a translating unit for translating the virtual MAC address into a MAC address of the user device.

4. A method for a user device (15, 15') to connect to one of a plurality of service providing networks (3.1, 3.2) through a broadband access network (29), the method including the following steps :
- the user device connects to the broadband access network,
- an access node (13) receives a frame or frames sent from the user device and forwards the frame or frames into a first virtual local area network (43),
- a local virtual router function unit (49) receives the frame or frames received in the first virtual local area network,
the method being **characterized in that** the method further comprises the following steps:
- the local virtual router function unit starts an identification and authentication procedure for the user device,
- the user device sends in the identification and authentication procedure selection information indicating one of the plurality of service providing networks,
- after a successful identification and authentication procedure the access node receives an instruction from a broadband remote access server (17) to associate an address of the user device with one of second virtual local area networks (41.1, 41.2), each of said virtual local area networks including the access node and one of dedicated virtual router function units (47.1, 47.2) of the broadband remote access server, said one of dedicated virtual router function units corresponding to the selection information, and based on said instruction, forwards frames received from the user device into said one of second virtual local area networks instead of into the first virtual local area network, each of said virtual router function units being adapted to directly transfer Ethernet frames from and to a broadband access server (19) of a respective one of the service providing networks (3.1, 3.2), and
- the broadband remote access server forwards frames from the user device received in said one of second virtual local area networks into said respective one of the plurality of service providing networks.

5. A method according to claim 4, wherein in the step of the user device connecting to the broadband access network it connects to the access point of the broadband access network.

6. A method according to claim 4, wherein in the step of receiving the frame or frames in the first virtual local area network, the frame or frames are received by the local virtual router function unit starting the identification and authentication procedure.

7. A method according to claim 4, wherein in the identification and authentication procedure the user device starts by sending identification information including said selection information of one of the plurality of service providing networks.

8. A broadband remote access server (17) for providing, for user devices (15, 15') connected to the broadband remote access server through an access node (13) or access point (7), broadband access to a plurality of service providing networks (3.1, 3.2) different from home service providing networks of users of the user devices, the broadband remote access server including:
- a service unit for storing and providing information about said plurality of service providing networks, the broadband remote access server being **characterized in that** the broadband remote access server is adapted to:
- connect a user device to the service unit, the service unit being adapted to send to the user device information about said plurality of service providing networks,
- receive from a user device information about a selected one of said plurality of service providing networks,
- thereafter forward information about a selected one of said plurality of service providing networks, as received from the user device, to said selected one of the service providing networks,
- thereafter pass authentication information between said selected one of said plurality of service providing networks and the user device,
- thereafter receive information, about the success or lack of success of the authentication procedure, and
- finally, using the received information, when indicating success, to route data, from the user device towards said selected one of the plurality of service providing networks and to route data from said selected one of the plurality of service providing networks to the user device,
wherein the broadband remote access server includes
- a local virtual router function unit (49),
wherein the broadband remote access server is adapted to include the local virtual router function unit in a first virtual local area network (43) also including the access node or access point, and
- dedicated virtual router function units (47.1, 47.2), wherein each dedicated virtual router function unit is adapted to communicate with a corresponding one of a plurality of second virtual local area networks (41.1, 41.2), each of said second virtual local area networks including said access node or access point,
each of said dedicated virtual router function units being adapted to directly transfer data, from the respective one of the service providing networks to said access node or access point, and from said access node or access point to the respective one of the service providing networks, the broadband remote access server being adapted, to provide a command to said access node or access point,
said command instructing the access node or access point to send data from the user device into that one of second virtual local area networks in which there is a virtual router function unit associated with the selected one of the service providing networks, and to send to the user device data from the one of second virtual local area networks in which there is a virtual router function unit associated with the selected one of the service providing networks,
thereby routing data from the user device towards said selected one of the plurality of service providing networks and routing data from said selected one of the plurality of service providing networks to the user device.

9. A broadband remote access server according to claim 8, wherein the broadband remote access server further includes:
- an authentication arrangement including an authentication client (23) and an authentication server (27), wherein the local virtual router function unit is arranged, when receiving data from a previously unconnected user device, to initiate an identifying procedure with the user device and to forward a response received from the user device to the authentication arrangement, wherein the authentication arrangement is arranged to compare, when receiving a forwarded response from the user device, information in the response to stored information about said service providing networks, and
wherein the service unit is arranged, in a case where the result of the comparison is that the user device or the user of the user device has no agreement with any of the service providing networks to connect to them, to transfer said information about said service providing networks to the user device.

10. A broadband remote access server according to claim 9, adapted to pass to a dynamic host configuration protocol, DHCP server, messages from the user device,
to pass a message from the DHCP server assigning an address to the user device,
using the assigned address, to connect the user device to the service unit, and
using the assigned address, to transfer from the service unit to the user device said information about said service providing networks.

11. A broadband remote access server according to claim 10, arranged, after receiving from the user device information about a selected one of the service providing networks, to cancel said address and to initiate an authentication procedure with the user device.

## Patentansprüche

1. Zugangsknoten (13), der angepasst ist, um in einem Ethernettyp-Netzwerk zwischen einem Zugangspunkt (1) von Benutzervorrichtungen (15, 15') und einem Breitband-Fernzugangsserver (17) verbunden zu sein zum Bereitstellen von Breitbandzugang für eine Mehrzahl von Dienst bereitstellenden Netzwerken (3.1, 3.2), wobei der Zugangsknoten aufweist
- eine Handhabungseinheit zum Handhaben von virtuellen lokalen Netzwerken, wobei die Handhabungseinheit einen Speicher aufweist,
wobei der Zugangsknoten **dadurch gekennzeichnet ist, dass**
- der Zugangsknoten eine erste virtuelle lokale Netzwerkfunktion zum Implementieren eines ersten virtuellen lokalen Netzwerks (43) aufweist, das den Zugangsknoten und eine lokale virtuelle Router-Funktionseinheit (49) des Breitband-Fernzugangsservers aufweist,
- für jedes einzelne der Mehrzahl von Dienst bereitstellenden Netzwerken, der Zugangsknoten eine zweite virtuelle lokale Netzwerkfunktion aufweist, wobei jede zweite virtuelle lokale Netzwerkfunktion dem Implementieren eines entsprechenden zweiten virtuellen lokalen Netzwerks (41.1, 41.2) dient, das den Zugangsknoten und eine entsprechende von zugeordneten virtuellen Router-Funktionseinheiten (47.1, 47.2) des Breitband-Fernzugangsservers aufweist, wobei die entsprechende der zugeordneten virtuellen Router-Funktionseinheiten der Kommunikation mit dem entsprechenden von der Mehrzahl von Dienst bereitstellenden Netzwerken dient, wobei die entsprechende zugeordnete virtuelle Router-Funktionseinheit angepasst ist, um Ethernet-Rahmen direkt von und zu einem Breitband-Zugangsserver (19) des entsprechenden der Dienst bereitstellenden Netzwerke zu übertragen,
- der Speicher Identifizierungen von Ethernet-Rahmen speichert, die in
-- dem ersten virtuellen lokalen Netzwerk und
-- den zweiten virtuellen lokalen Netzwerken übertragen werden,
und
- der Zugangsknoten eine mit der Handhabungseinheit verbundene Steuereinheit umfasst,
wobei die Steuereinheit vorgesehen ist, zum
-- Befehlen der Handhabungseinheit, Rahmen von einer neuen Benutzervorrichtung, die sich selbst mit dem Zugangspunkt verbunden hat, in das erste virtuelle lokale Netzwerk zu übertragen,
-- Empfangen von Information von dem Breitband-Fernzugangsserver in Bezug auf ein Routen von Rahmen, und
-- Befehlen der Handhabungseinheit, Rahmen von einer Benutzervorrichtung, die mit dem Zugangspunkt verbunden ist, anstelle von in das erste virtuelle lokale Netzwerk in eines der zweiten virtuellen lokalen Netzwerke zu übertragen, wie durch von dem Breitband-Fernzugangsserver erhaltene Information angegeben wird, wobei die Rahmen dadurch zu dem Breitband-Zugangsserver des entsprechenden Dienst bereitstellenden Netzwerks übertragen werden.

2. Zugangsknoten nach Anspruch 1, wobei die Steuereinheit angepasst ist, um Information zu empfangen, die eine Medium Access Control, MAC, Adresse eines mit dem Zugangspunkt verbundenen Benutzervorrichtung aufweist, und um der Handhabungseinheit zu befehlen, Rahmen von dieser Adresse in das eine der zweiten virtuellen lokalen Netzwerke zu übertragen.

3. Zugangsknoten nach Anspruch 2, wobei die MAC-Adresse eine virtuelle MAC-Adresse ist und der Zugangsknoten eine Übersetzungseinheit zum Übersetzen der virtuellen MAC-Adresse in eine MAC-Adresse der Benutzervorrichtung aufweist.

4. Verfahren für eine Benutzervorrichtung (15, 15'), zum Verbinden mit einem von einer Mehrzahl von Dienst bereitstellenden Netzwerken (3.1, 3.2) durch ein Breitband-Zugangsnetzwerk (29), wobei das Verfahren die folgenden Schritte aufweist:
- die Benutzervorrichtung verbindet mit dem Breitband-Zugangsnetzwerk,
- ein Zugangsknoten (13) empfängt einen Rahmen oder mehrere Rahmen von der Benutzervorrichtung und leitet den Rahmen oder die Rahmen in ein erstes virtuelles lokales Netzwerk (43) weiter,
- eine lokale virtuelle Router-Funktionseinheit (49) empfängt den Rahmen oder die Rahmen, die in dem ersten virtuellen lokalen Netzwerk empfangen wurden,
- wobei das Verfahren **dadurch gekennzeichnet ist, dass** das Verfahren weiter die folgenden Schritte umfasst:
- die lokale virtuelle Router-Funktionseinheit beginnt einen Identifizierungs- und Authentifizierungsvorgang für die Benutzervorrichtung,
- die Benutzervorrichtung sendet in dem Identifizierungs- und Authentifizierungsvorgang Auswahlinformation, die eines von einer Mehrzahl von Dienst bereitstellenden Netzwerken anzeigt,
- nach einem erfolgreichen Identifizierungs- und Authentifizierungsvorgang empfängt der Zugangsknoten eine Anweisung von einem Breitband-Fernzugangsserver (17), um eine Adresse der Benutzervorrichtung einem der zweiten virtuellen lokalen Netzwerke (41.1, 41.2) zuzuordnen, wobei jedes der virtuellen lokalen Netzwerke den Zugangsknoten und eine von zugeordneten virtuellen Router-Funktionseinheiten (47.1, 47.2) des Breitband-Fernzugangsservers aufweist, wobei die eine der zugeordneten virtuellen Router-Funktionseinheiten der Auswahlinformation entspricht, und basierend auf der Anweisung die von der Benutzervorrichtung empfangenen Rahmen in das eine der zweiten virtuellen lokalen Netzwerke weiterleitet anstelle von in das erste virtuelle lokale Netzwerk, wobei jede der virtuellen Router-Funktionseinheiten angepasst ist, um Ethernet-Rahmen direkt von und zu einem Breitband-Zugangsserver (19) eines entsprechenden von den Dienst bereitstellenden Netzwerken (3.1, 3.2) zu übertragen, und
- der Breitband-Fernzugangsserver leitet Rahmen von der Benutzervorrichtung, die in dem einen der zweiten virtuellen lokalen Netzwerke empfangen wurden, in das entsprechende eine von der Mehrzahl von Dienst bereitstellenden Netzwerken weiter.

5. Verfahren nach Anspruch 4, wobei in dem Schritt, in dem die Benutzervorrichtung mit dem Breitband-Zugangsnetzwerk verbindet, diese mit dem Zugangspunkt des Breitband-Zugangsnetzwerks verbindet.

6. Verfahren nach Anspruch 4, wobei in dem Schritt, in dem der Rahmen oder die Rahmen in dem ersten virtuellen lokalen Netzwerk empfangen werden, der Rahmen oder die Rahmen von der lokalen virtuellen Router-Funktionseinheit, die den Identifizierungs- und Authentifizierungsvorgang beginnt, empfangen werden.

7. Verfahren nach Anspruch 4, wobei bei dem Identifizierungs- und Authentifizierungsvorgang die Benutzervorrichtung durch Senden von Identifizierungsinformation, die die Auswahlinformation von einem von der Mehrzahl von Dienst bereitstellenden Netzwerken aufweist, beginnt.

8. Breitband-Fernzugangsserver (17) zum Bereitstellen, für Benutzervorrichtungen (15, 15'), die mit dem Breitband-Fernzugangsserver durch einen Zugangsknoten (13) oder einen Zugangspunkt (7) verbunden sind, von Breitbandzugang zu einer Mehrzahl von Dienst bereitstellenden Netzwerken (3.1, 3.2), die von Dienst bereitstellenden Heimnetzwerken von Benutzern der Benutzervorrichtungen verschieden sind, wobei der Breitband-Fernzugangsserver aufweist:
- eine Diensteinheit zum Speichern und Bereitstellen von Information über die Mehrzahl von Dienst bereitstellenden Netzwerken, wobei der Breitband-Fernzugangsserver **dadurch gekennzeichnet ist, dass** der Breitband-Fernzugangsserver angepasst ist, um:
- eine Benutzervorrichtung mit der Diensteinheit zu verbinden, wobei die Diensteinheit angepasst ist, um Information über die Mehrzahl von Dienst bereitstellenden Netzwerken an die Benutzervorrichtung zu senden,
- von einer Benutzervorrichtung Information über ein ausgewähltes von der Mehrzahl von Dienst bereitstellenden Netzwerken zu empfangen,
- anschließend Information über ein ausgewähltes von der Mehrzahl von Dienst bereitstellenden Netzwerken, wie von der Benutzervorrichtung empfangen, an das ausgewählte eine von den Dienst bereitstellenden Netzwerken weiterzuleiten,
- anschließend Authentifizierungsinformation zwischen dem ausgewählten einen von der Mehrzahl von Dienst bereitstellenden Netzwerken und der Benutzervorrichtung auszutauschen,
- anschließend Information über den Erfolg oder mangelnden Erfolg des Authentifizierungsvorgangs zu empfangen, und
- schließlich die empfangene Information zu verwenden, wenn Erfolg angezeigt wird, um Daten von der Benutzervorrichtung zu dem ausgewählten einen von der Mehrzahl von Dienst bereitstellenden Netzwerken zu routen und um Daten von dem ausgewählten einen von der Mehrzahl von Dienst bereitstellenden Netzwerken zu der Benutzervorrichtung zu routen,
wobei der Breitband-Fernzugangsserver aufweist
- eine lokale virtuelle Router-Funktionseinheit (49),
wobei der Breitband-Fernzugangsserver angepasst ist, um die lokale virtuelle Router-Funktionseinheit in einem ersten virtuellen lokalen Netzwerk (43) aufzuweisen, das auch den Zugangsknoten oder den Zugangspunkt aufweist, und
- zugeordnete virtuelle Router-Funktionseinheiten (47.1, 47.2), wobei jede zugeordnete virtuelle Router-Funktionseinheit angepasst ist, um mit einem entsprechenden einen von einer Mehrzahl von zweiten virtuellen lokalen Netzwerken (41.1, 41.2) zu kommunizieren, wobei jedes der zweiten virtuellen lokalen Netzwerke den Zugangsknoten oder den Zugangspunkt aufweist,
wobei jede der zugeordneten virtuellen Router-Funktionseinheiten angepasst ist, um Daten direkt von dem entsprechenden einen der Dienst bereitstellenden Netzwerke zu dem Zugangsknoten oder dem Zugangspunkt und von dem Zugangsknoten oder dem Zugangspunkt zu dem entsprechenden einen der Dienst bereitstellenden Netzwerke zu übertragen,
wobei der Breitband-Fernzugangsserver angepasst ist, um einen Befehl zu dem Zugangsknoten oder dem Zugangspunkt bereitzustellen,
wobei der Befehl den Zugangsknoten oder den Zugangspunkt anweist, Daten von der Benutzervorrichtung in das eine von zweiten virtuellen lokalen Netzwerken zu senden, in dem sich eine virtuelle Router-Funktionseinheit, die dem ausgewählten einen von den Dienst bereitstellenden Netzwerken zugeordnet ist, befindet, und Daten von dem einen von zweiten virtuellen lokalen Netzwerken, in dem sich eine virtuelle Router-Funktionseinheit, die dem ausgewählten einen von den Dienst bereitstellenden Netzwerken zugeordnet ist, befindet, zu der Benutzervorrichtung zu senden,
wodurch Daten von der Benutzervorrichtung zu dem ausgewählten einen von der Mehrzahl von Dienst bereitstellenden Netzwerken geroutet werden und Daten von dem ausgewählten einen von der Mehrzahl von Dienst bereitstellenden Netzwerken zu der Benutzervorrichtung geroutet werden.

9. Breitband-Fernzugangsserver nach Anspruch 8, wobei der Breitband-Fernzugangsserver weiter umfasst:
- eine Authentifizierungsanordnung, die einen Authentifizierungsklienten (23) und einen Authentifizierungsserver (27) aufweist,
wobei die lokale virtuelle Router-Funktionseinheit angeordnet ist, um, wenn Daten von einer zuvor nicht verbundenen Benutzervorrichtung empfangen werden, einen Identifizierungsvorgang mit der Benutzervorrichtung einzuleiten und eine von der Benutzervorrichtung empfangene Antwort zu der Authentifizierungsanordnung weiterzuleiten,
wobei die Authentifizierungsanordnung angeordnet ist, um, wenn eine von der Benutzervorrichtung weitergeleitete Antwort empfangen wird, Information in der Antwort mit gespeicherter Information über die Dienst bereitstellenden Netzwerke zu vergleichen, und
wobei die Diensteinheit angeordnet ist, um, in dem Fall, in dem das Ergebnis des Vergleichs das ist, das die Benutzervorrichtung oder der Benutzer der Benutzervorrichtung keine Vereinbarung mit einem von den mit ihnen verbundenen Dienst bereitstellenden Netzwerken hat, die Information über die Dienst bereitstellenden Netzwerke an die Benutzervorrichtung zu übertragen.

10. Breitband-Fernzugangsserver nach Anspruch 9, der angepasst ist, um Nachrichten von der Benutzervorrichtung an einen Dynamic Host Configuration Protocol, DHCP, Server zu übergeben, um eine Nachricht von dem DHCP-Server zu übergeben, die der Benutzervorrichtung eine Adresse zuordnet, um die zugeordnete Adresse zu verwenden, um die Benutzervorrichtung mit der Diensteinheit zu verbinden, und um die zugeordnete Adresse zu verwenden, um die Information über die Dienst bereitstellenden Netzwerke von der Diensteinheit zu der Benutzervorrichtung zu übertragen.

11. Breitband-Fernzugangsserver nach Anspruch 10, der angeordnet ist, um nach dem Empfangen, von der Benutzervorrichtung, von Informationen über ein ausgewähltes der Dienst bereitstellenden Netzwerke, die Adresse zu löschen und einen Authentifizierungsvorgang mit der Benutzervorrichtung zu starten.

## Revendications

1. Noeud d'accès (13) conçu pour être connecté à un réseau de type Ethernet entre un point d'accès (1) de dispositifs utilisateur (15, 15') et un serveur d'accès distant à large bande (17) pour fournir un accès à large bande à une pluralité de réseaux fournissant des services (3.1, 3.2), le noeud d'accès incluant
- une unité de traitement pour traiter des réseaux locaux virtuels, l'unité de traitement incluant une mémoire,
le noeud d'accès étant **caractérisé en ce que**
- le noeud d'accès a une première fonction de réseau local virtuel pour mettre en oeuvre un premier réseau local virtuel (43) incluant le noeud d'accès et une unité faisant fonction de routeur virtuel local (49) du serveur d'accès distant à large bande,
- pour chacun de ladite pluralité de réseaux fournissant des services, le noeud d'accès a une seconde fonction de réseau local virtuel, chaque seconde fonction de réseau local virtuel servant à mettre en oeuvre un second réseau local virtuel respectif (41.1, 41.2) incluant le noeud d'accès et une unité respective d'unités faisant fonction de routeurs virtuels dédiés (47.1, 47.2) du serveur d'accès distant à large bande, l'unité respective des unités faisant fonction de routeurs virtuels dédiés servant à la communication avec le réseau respectif de ladite pluralité de réseaux fournissant des services, l'unité faisant fonction de routeur virtuel dédié respective étant conçue pour transférer directement des trames Ethernet en provenance et vers un serveur d'accès à large bande (19) du réseau respectif des réseaux fournissant des services,
- la mémoire stocke des identifications de trames Ethernet transmises dans
-- le premier réseau local virtuel, et
-- les seconds réseaux locaux virtuels,
et
- le noeud d'accès comprend une unité de commande connectée à l'unité de traitement,
l'unité de commande servant à
-- commander l'unité de traitement pour transmettre des trames depuis un nouveau dispositif utilisateur qui s'est connecté au point d'accès dans le premier réseau local virtuel,
-- recevoir des informations à partir du serveur d'accès distant à large bande en ce qui concerne l'acheminement de trames,
et
-- commander l'unité de traitement pour transmettre des trames depuis un dispositif utilisateur qui est connecté au point d'accès dans un des seconds réseaux locaux virtuels comme donné par des informations reçues en provenance du serveur d'accès distant à large bande, au lieu du premier réseau local virtuel, les trames étant de ce fait transmises au serveur d'accès à large bande du réseau respectif fournissant des services.

2. Noeud d'accès selon la revendication 1, dans lequel l'unité de commande est conçue pour recevoir des informations incluant une adresse de Commande d'Accès au Support, MAC, du dispositif utilisateur connecté au point d'accès et pour commander l'unité de traitement afin de transmettre des trames en provenance de cette adresse jusque dans ledit réseau des seconds réseaux locaux virtuels.

3. Noeud d'accès selon la revendication 2, dans lequel l'adresse MAC est une adresse MAC Virtuelle et le noeud d'accès inclut une unité de translation pour faire subir une translation à l'adresse MAC virtuelle en une adresse MAC du dispositif utilisateur.

4. Procédé pour connecter un dispositif utilisateur (15, 15') à un réseau d'une pluralité de réseaux fournissant des services (3.1, 3.2) par l'intermédiaire d'un réseau d'accès à large bande (29), le procédé incluant les étapes suivantes :
- le dispositif utilisateur est connecté au réseau d'accès à large bande,
- un noeud d'accès (13) reçoit une trame ou des trames envoyées depuis le dispositif utilisateur et fait suivre la trame ou les trames jusque dans un premier réseau local virtuel (43),
- une unité faisant fonction de routeur virtuel local (49) reçoit la trame ou les trames reçues dans le premier réseau local virtuel,
le procédé étant **caractérisé en ce que** le procédé comprend en outre les étapes suivantes :
- l'unité faisant fonction de routeur virtuel local démarre une procédure d'identification et d'authentification pour le dispositif utilisateur,
- le dispositif utilisateur envoie dans la procédure d'identification et d'authentification des informations de sélection indiquant un réseau de la pluralité de réseaux fournissant des services,
- après une procédure d'identification et d'authentification couronnée de succès, le noeud d'accès reçoit une instruction en provenance d'un serveur d'accès distant à large bande (17) pour associer une adresse du dispositif utilisateur à l'un de seconds réseaux locaux virtuels (41.1, 41.2), chacun desdits réseaux locaux virtuels incluant le noeud d'accès et l'une desdites unités faisant fonction de routeurs virtuels dédiés (47.1, 47.2) du serveur d'accès distant à large bande, ladite unité des unités faisant fonction de routeurs virtuels dédiés correspondant aux informations de sélection, et sur la base desdites instructions, fait suivre les trames reçues en provenance du dispositif utilisateur jusque dans ledit réseau de seconds réseaux locaux virtuels au lieu du premier réseau local virtuel, chacune desdites unités faisant fonction de routeurs virtuels étant conçue pour directement transférer des trames Ethernet en provenance et vers un serveur d'accès à large bande (19) d'un réseau respectif des réseaux fournissant des services (3.1, 3.2), et
- le serveur d'accès distant à large bande fait suivre des trames provenant du dispositif utilisateur reçues dans ledit réseau de seconds réseaux locaux virtuels dans ledit réseau respectif de la pluralité de réseaux fournissant des services.

5. Procédé selon la revendication 4, dans lequel dans l'étape du dispositif utilisateur se connectant au réseau d'accès à large bande, il se connecte au point d'accès du réseau d'accès à large bande.

6. Procédé selon la revendication 4, dans lequel, dans l'étape de réception de la trame ou des trames dans le premier réseau local virtuel, la trame ou les trames sont reçues par l'unité faisant fonction de routeur virtuel local démarrant la procédure d'identification et d'authentification.

7. Procédé selon la revendication 4, dans lequel, dans la procédure d'identification et d'authentification, le dispositif utilisateur démarre en envoyant des informations d'identification incluant lesdites informations de sélection d'un réseau de la pluralité de réseaux fournissant des services.

8. Serveur d'accès distant à large bande (17) pour fournir, pour des dispositifs utilisateur (15, 15') connectés au serveur d'accès distant à large bande par l'intermédiaire d'un noeud d'accès (13) ou point d'accès (7), un accès à large bande à une pluralité de réseaux fournissant des services (3.1, 3.2) différents de réseaux fournissant des services domestiques d'utilisateurs des dispositifs utilisateur, le serveur d'accès distant à large bande incluant :
- une unité de service pour stocker et fournir des informations concernant ladite pluralité de réseaux fournissant des services,
le serveur d'accès distant à large bande étant
**caractérisé en ce que** le serveur d'accès distant à large bande est conçu pour :
- connecter un dispositif utilisateur à l'unité de service, l'unité de service étant conçue pour envoyer au dispositif utilisateur des informations concernant ladite pluralité de réseaux fournissant des services,
- recevoir en provenance d'un dispositif utilisateur des informations concernant un réseau sélectionné de ladite pluralité de réseaux fournissant des services,
- après cela faire suivre des informations concernant un réseau sélectionné de ladite pluralité de réseaux fournissant des services, lorsque reçues en provenance du dispositif utilisateur, audit réseau sélectionné des réseaux fournissant des services,
- après cela faire passer des informations d'authentification entre ledit réseau sélectionné de ladite pluralité de réseaux fournissant des services et le dispositif utilisateur,
- après cela recevoir des informations, concernant le succès ou l'absence de succès de la procédure d'authentification, et
- finalement, en utilisant les informations reçues, lorsqu'elles indiquent un succès, acheminer des données, en provenance du dispositif d'utilisateur vers ledit réseau sélectionné de la pluralité de réseaux fournissant des services et acheminer des données en provenance dudit réseau sélectionné de la pluralité de réseaux fournissant des services au dispositif utilisateur,
dans lequel le serveur d'accès distant à large bande inclut
- une unité faisant fonction de routeur virtuel local (49),
dans lequel le serveur d'accès distant à large bande est conçu pour inclure l'unité faisant fonction de routeur virtuel local dans un premier réseau local virtuel (43) incluant également le noeud d'accès ou le point d'accès, et
- des unités faisant fonction de routeurs virtuels dédiés (47.1, 47.2), dans lesquelles chaque unité faisant fonction de routeur virtuel dédié est conçue pour communiquer avec un réseau correspondant d'une pluralité de seconds réseaux locaux virtuels (41.1, 41.2), chacun desdits seconds réseaux locaux virtuels incluant ledit noeud d'accès ou point d'accès,
chacune desdites unités faisant fonction de routeurs virtuels dédiés étant conçue pour transférer directement des données, en provenance du réseau respectif des réseaux fournissant des services audit noeud d'accès ou point d'accès, et en provenance dudit noeud d'accès ou point d'accès au réseau respectif des réseaux fournissant des services,
le serveur d'accès distant à large bande étant conçu pour fournir une commande audit noeud d'accès ou point d'accès,
ladite commande ordonnant au noeud d'accès ou point d'accès d'envoyer des données en provenance du dispositif utilisateur dans ce réseau de seconds réseaux locaux virtuels dans lequel il y a une unité faisant fonction de routeur virtuel associée au réseau sélectionné des réseaux fournissant des services, et d'envoyer au dispositif utilisateur des données en provenance du réseau de seconds réseaux locaux virtuels dans lequel il y a une unité faisant fonction de routeur virtuel associée au réseau sélectionné des réseaux fournissant des services, acheminant de ce fait des données en provenance du dispositif utilisateur vers ledit réseau sélectionné de la pluralité de réseaux fournissant des services et en acheminant des données en provenance dudit réseau sélectionné de la pluralité de réseaux fournissant des services au dispositif utilisateur.

9. Serveur d'accès distant à large bande selon la revendication 8, dans lequel le serveur d'accès distant à large bande inclut en outre :
- un agencement d'authentification incluant un client d'authentification (23) et un serveur d'authentification (27),
dans lequel l'unité faisant fonction de routeur virtuel local est agencée, lors de la réception des données en provenance d'un dispositif utilisateur précédemment non connecté, pour amorcer une procédure d'identification avec le dispositif d'utilisateur et pour faire suivre une réponse reçue en provenance du dispositif utilisateur vers l'agencement d'authentification,
dans lequel l'agencement d'authentification est agencé pour comparer, lors de la réception d'une réponse réexpédiée en provenance du dispositif utilisateur, des informations dans la réponse à des informations stockées concernant lesdits réseaux fournissant des services, et
dans lequel l'unité de service est agencée, dans un cas où le résultat de la comparaison est que le dispositif utilisateur ou l'utilisateur du dispositif utilisateur n'a aucun accord avec l'un quelconque des réseaux fournissant des services pour se connecter à eux, pour transférer lesdites informations concernant lesdits réseaux fournissant des services au dispositif utilisateur.

10. Serveur d'accès distant à large bande selon la revendication 9, conçu pour passer à un serveur de protocole de configuration d'hôte dynamique, DHCP, des messages en provenance du dispositif utilisateur, pour passer un message en provenance du serveur DHCP attribuant une adresse au dispositif utilisateur, en utilisant l'adresse attribuée, pour connecter le dispositif utilisateur à l'unité de service, et en utilisant l'adresse attribuée, pour transférer depuis l'unité de service au dispositif utilisateur lesdites informations concernant lesdits réseaux fournissant des services.

11. Serveur d'accès distant à large bande selon la revendication 10, agencé, après réception en provenance du dispositif d'utilisateur d'informations concernant un réseau sélectionné des réseaux fournissant des services, pour annuler ladite adresse et amorcer une procédure d'authentification avec le dispositif utilisateur.
